# EUROPÄISCHE PATENTSCHRIFT

(11) **EP 2 181 173 B1**
(45) Veröffentlichungstag und Bekanntmachung des Hinweises auf die Patenterteilung: **29.02.2012**
(21) Anmeldenummer: 08785331.3
(22) Anmeldetag: 04.08.2008
(51) Int. Cl.: C09K 19/04, C09K 19/12, C09K 19/30, C09K 19/32, C09K 19/34, C09K 19/42

(54) **FLÜSSIGKRISTALLANZEIGE**
LIQUID CRYSTAL DISPLAY
AFFICHAGE À BASE DE CRISTAUX LIQUIDES

(30) Priorität: 30.08.2007 DE 102007041112
(43) Veröffentlichungstag der Anmeldung: 05.05.2010
(73) Patentinhaber: Merck Patent GmbH, 64293 Darmstadt (DE)
(72) Erfinder: BERNATZ, Georg, 64289 Darmstadt (DE); TAUGERBECK, Andreas, 64285 Darmstadt (DE)
(86) Internationale Anmeldenummer: PCT/EP2008/006402
(87) Internationale Veröffentlichungsnummer: WO 2009/030329

(56) Entgegenhaltungen:
- EP-A- 1 306 418
- EP-A- 1 378 557
- EP-A- 1 498 468
- EP-A- 1 813 594
- EP-A- 1 889 894
- EP-B1- 0 364 538
- WO-A-2007/052403
- DE-A1- 2 636 684
- DE-A1- 3 321 373
- JP-A- 10 036 847
- US-A- 5 723 066
- US-A1- 2006 083 868
- US-B2- 6 778 237

## Beschreibung

Die vorliegende Erfindung betrifft Flüssigkristall (FK)-Anzeigen des PSA (polymer sustained alignment)-Typs, sowie polymerisierbare Verbindungen und FK-Medien zur Verwendung in PSA-Anzeigen.

Die vorliegende Erfindung betrifft Flüssigkristall (FK)-Anzeigen des PS-(polymer stabilized) oder PSA- (polymer sustained alignment) Typs, sowie neue polymerisierbare Verbindungen und neue FK-Medien zur Verwendung in PS(A)-Anzeigen.

Die derzeit verwendeten Flüssigkristallanzeigen (FK-Anzeigen) sind meist solche des TN-Typs (twisted nematic). Diese weisen allerdings den Nachteil einer starken Blickwinkelabhängigkeit des Kontrastes auf.

Daneben sind sogenannte VA-Anzeigen (vertical alignment) bekannt, die einen breiteren Blickwinkel aufweisen. Die FK-Zelle einer VA-Anzeige enthält eine Schicht eines FK-Mediums zwischen zwei transparenten Elektroden, wobei das FK-Medium üblicherweise einen negativen Wert der dielektrischen (DK-) Anisotropie aufweist. Die Moleküle der FK-Schicht sind im ausgeschalteten Zustand senkrecht zu den Elektrodenflächen (homöotrop) oder gekippt homöotrop (engl. "tilted") orientiert. Bei Anlegen einer elektrischen Spannung an die Elektroden findet eine Umorientierung der FK-Moleküle parallel zu den Elektrodenflächen statt.

Weiterhin sind OCB-Anzeigen (optically compensated bend) bekannt, die auf einem Doppelbrechungseffekt beruhen und eine FK-Schicht mit einer sogenannten "bend"-Orientierung und üblicherweise positiver (DK-) Anisotropie aufweisen. Bei Anlegen einer elektrischen Spannung findet eine Umorientierung der FK-Moleküle senkrecht zu den Elektrodenflächen statt. Darüber hinaus enthalten OCB-Anzeigen normalerweise einen oder mehrere doppelbrechende optische Retardationsfilme, um unerwünschte Lichtdurchlässigkeit der "bend"-Zelle im dunklen Zustand zu vermeiden. OCB-Anzeigen besitzen gegenüber TN-Anzeigen einen weiteren Blickwinkel und kürzere Schaltzeiten.

Weiterhin sind IPS-Anzeigen (In-Plane-Switching) bekannt, die eine FK-Schicht zwischen zwei Substraten enthalten, wovon nur eines eine Elektrodenschicht mit üblicherweise kammförmiger Struktur aufweist. Dadurch wird bei Anlegen einer Spannung ein elektrisches Feld erzeugt, welches eine signifikante Komponente parallel zur FK-Schicht aufweist. Dies bewirkt eine Umorientierung der FK-Moleküle in der Schichtebene. Des weiteren wurden sogenannte FFS-Anzeigen (Fringe-Field-Switching) vorgeschlagen (siehe u.a. S.H. Jung et al., Jpn. J. Appl. Phys., Band 43, No. 3, 2004, 1028), die ebenfalls zwei Elektroden auf dem gleichen Substrat beinhalten, wovon jedoch im Gegensatz zu IPS-Anzeigen nur eine als strukturierte (kammförmige) Elektrode ausgebildet ist, und die andere Elektrode unstrukturiert ist. Dadurch wird ein starkes sogenanntes "fringe field" erzeugt, also ein starkes elektrisches Feld nahe am Rand der Elektroden und in der gesamten Zelle ein elektrisches Feld, welches sowohl eine starke vertikale als auch eine starke horizontale Komponente aufweist. Sowohl IPS-Anzeigen als auch FFS-Anzeigen weisen eine geringe Blickwinkelabhängigkeit des Kontrastes auf.

In VA-Anzeigen des neueren Typs ist die einheitliche Ausrichtung der FK-Moleküle auf mehrere kleinere Domänen innerhalb der FK-Zelle beschränkt. Zwischen diesen Domänen, auch als Tilt-Domänen (engl. "tilt domains") bezeichnet, können Disklinationen existieren. VA-Anzeigen mit Tilt-Domänen weisen, verglichen mit herkömmlichen VA-Anzeigen, eine größere Blickwinkelunabhängigkeit des Kontrastes und der Graustufen auf. Außerdem sind solche Anzeigen einfacher herzustellen, da eine zusätzliche Behandlung der Elektrodenobertläche zur einheitlichen Orientierung der Moleküle im eingeschalteten Zustand, wie z.B. durch Reiben, nicht mehr notwendig ist. Stattdessen wird die Vorzugsrichtung des Kipp- oder Tiltwinkels (engl. "pretilt") durch eine spezielle Ausgestaltung der Elektroden kontrolliert. In den sogenannten MVA-Anzeigen (multidomain vertical alignment) wird dies üblicherweise dadurch erreicht, dass die Elektroden Erhebungen oder Vorsprünge (engl. "protrusions") aufweisen, die einen lokalen pretilt verursachen. Als Folge werden die FK-Moleküle beim Anlegen einer Spannung in verschiedenen, definierten Regionen der Zelle in unterschiedliche Richtungen parallel zu den Elektrodenflächen orientiert. Dadurch wird ein "kontrolliertes" Schalten erreicht und das Entstehen störender Disklinationslinien vermieden. Diese Anordnung verbessert zwar den Blickwinkel der Anzeige, führt aber zu einer Verringerung ihrer Lichtdurchlässigkeit. Eine Weiterentwicklung von MVA verwendet Protrusions nur auf einer Elektroden-Seite, die gegenüberliegende Elektrode weist hingegen Schlitze (engl. "slits") auf, was die Lichtdurchlässigkeit verbessert. Die geschlitzten Elektroden erzeugen beim Anlegen einer Spannung ein inhomogenes elektrisches Feld in der FK-Zelle, so dass weiterhin ein kontrolliertes Schalten erreicht wird. Zur weiteren Verbesserung der Lichtdurchlässigkeit können die Abstände zwischen den slits und protrusions vergrößert werden, was jedoch wiederum zu einer Verlängerung der Schaltzeiten führt. Beim sogenannten PVA (Pattemed VA) kommt man ganz ohne Protrusions aus, indem man beide Elektroden auf den gegenüberliegenden Seiten durch Schlitze strukturiert, was zu einem erhöhten Kontrast und verbesserter Lichtdurchlässigkeit führt, aber technologisch schwierig ist und das Display empfindlicher gegen mechanische Einflüsse macht (Klopfen, engl. "tapping", etc.). Für viele Anwendungen, wie beispielsweise Monitore und vor allem TV-Bildschirme, ist jedoch eine Verkürzung der Schaltzeiten sowie eine Verbesserung des Kontrastes und der Luminanz (Transmission) der Anzeige erwünscht.

Eine Weiterentwicklung stellen die sogenannten PS-Anzeigen (polymer stabilized) dar, die auch unter dem Begriff "PSA" (polymer sustained alignment) bekannt sind. Darin wird dem FK-Medium eine geringe Menge (zum Beispiel 0.3 Gew.%, typischerweise <1 Gew.%) einer polymerisierbaren Verbindung zugesetzt, welche nach Einfüllen in die FK-Zelle bei angelegter elektrischer Spannung zwischen den Elektroden in situ polymerisiert bzw. vernetzt wird, üblicherweise durch UV-Photopolymerisation. Als besonders geeignet hat sich der Zusatz von polymerisierbaren mesogenen oder flüssigkristallinen Verbindungen, auch als "reaktive Mesogene" (RM) bezeichnet, zur FK-Mischung erwiesen.

Mittlerweile wird das PS- bzw. PSA-Prizip in diversen klassischen FK-Anzeigen angenwendet. So sind beispielsweise PSA-VA-, PSA-OCB-, PS-IPS- und PS-TN-Anzeigen bekannt. Wie man in Testzellen nachweisen kann, führt das PSA-Verfahren zu einem pretilt in der Zelle. Bei PSA-OCB-Anzeigen kann man daher erreichen, dass die Bend-Struktur stabilisiert wird, so dass man ohne Offset-Spannung auskommt oder diese reduzieren kann. Im Falle von PSA-VA-Anzeigen wirkt sich dieser Pretilt positiv auf die Schaltzeiten aus. Für PSA-VA-Anzeigen kann ein Standard-MVA- bzw -PVA Pixel- und Elektroden-Layout verwendet werden. Darüber hinaus kann man aber beispielsweise mit nur einer strukturierten Elektrodenseite und ohne Protrusions auskommen, was die Herstellung wesentlich vereinfacht und gleichzeitig zu einem sehr guten Kontrast bei sehr guter Lichtdurchlässigkeit führt.

PSA-VA-Anzeigen sind beispielsweise in JP 10-036847 A, EP 1 170 626 A2, EP 1 378 557 A1, EP 1 498 468 A1, US 2004/0191428 A1, US 2006/0066793 A1 und US 2006/0103804 A1 beschrieben. PSA-OCB-Anzeigen sind beispielsweise in T.-J- Chen et al., Jpn. J. Appl. Phys. 45, 2006, 2702-2704 und S. H. Kim, L.-C- Chien, Jpn. J. Appl. Phys. 43, 2004, 7643-7647 beschrieben. PS-IPS-Anzeigen sind zum Beispiel in US 6,177,972 und Appl. Phys. Lett. 1999, 75(21), 3264 beschrieben. PS-TN-Anzeigen sind zum Beispiel in Optics Express 2004, 12(7), 1221 beschrieben.

Es hat sich jedoch gezeigt, dass bei Verwendung in PS(A)-Anzeigen die aus dem Stand der Technik bekannten FK-Mischungen und RMs noch einige Nachteile aufweisen. So eignet sich bei weitem nicht jedes beliebige lösliche Monomer für PS(A)-Anzeigen, und es erscheint schwierig, geeignetere Auswahlkriterien als eben das direkte PSA-Experiment mit pretilt-Messung zu finden. Noch kleiner wird die Auswahl, wenn eine Polymerisation mittels UV-Licht ohne den Zusatz von Photoinitiatoren gewünscht ist, was für bestimmte Anwendungen von Vorteil sein kann. Darüber hinaus sollte das gewählte "Materialsystem" FK-Mischung (nachfolgend auch als "FK-Hostmischung" bezeichnet) + polymerisierbare Komponente möglichst gute elektrische Eigenschaften aufweisen, insbesondere eine hohe sog. "Voltage Holding Ratio" (HR oder VHR).

Die im Stand der Technik offenbarten PS(A)-Anzeigen enthalten meist RMs, worin sämtliche polymerisierbaren Gruppen direkt, d.h. ohne Abstandsgruppe (engl. "spacer") mit dem Ringsystem der mesogenen Gruppe verknüpft sind ("spacerlose RMs"). In EP 1 498 468 A1 werden beispielsweise PSA-VA-Anzeigen vorgeschlagen, worin die FK-Mischungen RMs ausgewählt aus folgenden Formeln enthalten 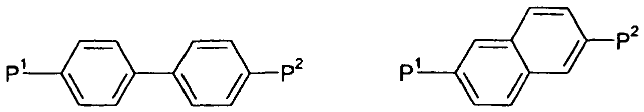 worin P¹ und P² eine polymerisierbare Gruppe, beispielsweise eine Acrylat-, Methacrylat- Vinyl-, Vinyloxy- oder Epoxygruppe, bedeuten. In EP 1 498 468 A1 wird berichtet, dass durch Verwendung solcher "spacerlosen" RMs verbesserte Eigenschaften der Anzeigen, wie beispielsweise geringerer "image burn" erzielt werden können.

Weiterhin wird in EP 1 498 468 A1 berichtet, dass im Gegensatz dazu RMs, worin beide polymerisierbaren Gruppen über eine Abstandsgruppe, beispielsweise einen flexiblen Alkylenspacer, mit der mesogenen Gruppe verknüpft sind, wie beispielsweise ein RM der folgenden Formel 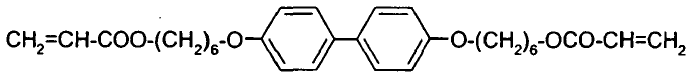 weniger gut für PSA-VA-Anzeigen geeignet sind.

RMs ohne Spacer wie die der oben genannten Formeln besitzen jedoch im Allgemeinen hohe Schmelzpunkte und nur begrenzte Löslichkeit in vielen derzeit gängigen FK-Mischungen, und neigen häufig zur spontanen Auskristallisation aus der Mischung. Die Gefahr der spontanen Polymerisation verbietet es außerdem, die FK-Hostmischung zum Lösen der polymerisierbaren Komponente zu erwärmen, weshalb eine möglichst gute Löslichkeit bereits bei Raumtemperatur erforderlich ist. Darüber hinaus besteht die Gefahr des Entmischens, beispielsweise beim Einfüllen des FK-Mediums in die FK-Anzeige (Chromatographie-Effekt), was die Homogenität der Anzeige stark beeinträchtigen kann. Dies wird noch dadurch verstärkt, dass die FK-Medien üblicherweise bei niedrigen Temperaturen eingefüllt werden, um die Gefahr der spontanen Polymerisation zu verringern (s.o.), was sich wiederum negativ auf die Löslichkeit auswirkt.

US 2006/0083868 A1, EP 1 813 594 A1, WO 2007/052403 A1 und US 5,723,066 offenbaren direaktive mesogene Verbindungen mit nur einer Abstandsgruppe zur Verwendung in Orientierungsschichten für ferroelektrische FK-Anzeigen, optisch anisotropen Materialien für Retardationsfilme und Polarisatoren, oder PDLC-Anzeigen. US 6,778,237 offenbart eine FK-Anzeige enthaltend FK-Moleküle, die in der chiralen smektisch C Phase polymerisiert werden. JP 10-036847 A offenbart eine FK-Anzeige enthaltend polymerisierte reaktive Mesogene. EP 1 889 894 A1 offenbart PSA-Anzeigen enthaltend FK-Verbindungen mit nicht-endständigen Alkenylgruppen sowie reaktive Mesogene. Die Verwendung von erfindungsgemäßen reaktiven Mesogenen in PSA-Anzeigen wird durch diese Dokumente jedoch nicht offenbart oder nahegelegt.

Es besteht somit immer noch ein großer Bedarf an PS(A)-Anzeigen, insbesondere vom VA- und OCB-Typ, sowie an FK-Medien und RMs zur Verwendung in solchen Anzeigen, welche die oben beschriebenen Nachteile nicht oder nur in geringem Maße zeigen und verbesserte Eigenschaften besitzen. Insbesondere besteht ein großer Bedarf an PS(A)-Anzeigen, sowie FK-Medien und RMs zur Verwendung in solchen Anzeigen, mit einer hohen Stabilität gegenüber Entmischung bei tiefen Temperaturen, einem hohen spezifischen Widerstand bei gleichzeitig großem Arbeitstemperaturbereich, kurzen Schaltzeiten auch bei tiefen Temperaturen und niedriger Schwellenspannung, die eine Vielzahl von Graustufen, einen hohen Kontrast und einen weiten Blickwinkel ermöglichen, sowie hohe Werte der "voltage holding ratio" (HR) nach UV-Belastung aufweisen.

Der Erfindung lag die Aufgabe zugrunde, PS(A)-Anzeigen bereitzustellen, welche die oben angegebenen Nachteile nicht oder nur in geringerem Maße aufweisen, die Einstellung eines Pretilt-Winkels ermöglichen und vorzugsweise gleichzeitig sehr hohe spezifische Widerstände, niedrige Schwellenspannungen und niedrige Schaltzeiten besitzen.

Überraschend wurde nun gefunden, dass diese Aufgabe gelöst werden kann, indem man erfindungsgemäße PS(A)-Anzeigen verwendet, die eine polymerisierte Verbindung (RM) mit einer mesogenen Gruppe und zwei oder mehr polymerisierten Gruppen enthält, von denen mindestens eine über eine Abstandsgruppe und mindestens eine direkt (d.h. ohne Abstandsgruppe) mit der mesogenen Gruppe verknüpft ist. Vorteile der, erfindungsgemäßen RMs gegenüber dem Stand der Technik sind ein durch Einführung einer Spacergruppe erzielter geringerer Schmelzpunkt, eine sehr geringe Neigung zur Kristallisation, und die verbesserte Löslichkeit in vielen handelsüblichen FK-Hostmischungen. Darüber hinaus zeigen die erfindungsgemäßen FK-Medien trotzdem ausreichende Tiltwinkel, was in Verbindung mit einem FK-Medium mittels Pretilt-Messungen in VA-Tilt-Messzellen nachgewiesen werden konnte. Insbesondere konnte ein Pretilt ohne den Zusatz von Photoinitiator erreicht werden.

Gegenstand der Erfindung ist somit eine Flüssigkristall (FK)-Anzeige des PS- (polymer stabilized) oder PSA (polymer sustained alignment)-Typs, enthaltend eine FK-Zelle bestehend aus zwei Substraten, wobei mindestens ein Substrat lichtdurchlässig ist und mindestens ein Substrat eine Elektrodenschicht aufweist, sowie einer zwischen den Substraten befindlichen Schicht eines FK-Mediums enthaltend eine polymerisierte Komponente und eine niedermolekulare Komponente, wobei die polymerisierte Komponente erhältlich ist durch Polymerisation einer oder mehrerer polymerisierbarer Verbindungen zwischen den Substraten der FK-Zelle im FK-Medium unter Anlegen einer elektrischen Spannung, ("erfindungsgemäβe PS- oder PSA - Anzeige"), dadurch gekennzeichnet, dass mindestens eine der polymerisierbaren Verbindungen eine mesogene Gruppe sowie zwei oder mehr polymerisierbare Gruppen enthält, wovon mindestens eine polymerisierbare Gruppe über eine Abstandsgruppe, und mindestens eine polymerisierbare Gruppe ohne Abstandsgruppe (d.h. direkt), mit der mesogenen Gruppe verknüpft ist (erfindungsgemäβe Polymerisierbare Verbindung).

Besonders bevorzugt sind erfindungsgemäße PS- oder PSA-Anzeigen, worin die polymerisierte Komponente ausschließlich aus einer oder mehreren polymerisierbaren Verbindungen besteht, die eine mesogene Gruppe sowie zwei polymerisierbare Gruppen enthalten, wovon eine polymerisierbare Gruppe über eine Abstandsgruppe und eine polymerisierbare Gruppe ohne Abstandsgruppe mit der mesogenen Gruppe verknüpft ist.

Weiterer Gegenstand der Erfindung sind neue polymerisierbare Verbindungen (reaktive Mesogene oder "RMs") der Formel Ic und If wie vor- und nachstehend beschrieben.

Ein weiterer Gegenstand der Erfindung ist ein FK-Medium ("erfindungsgemäβes FK-Medium"), enthaltend
- eine polymerisierbare Komponente A), enthaltend eine oder mehrere polymerisierbare Verbindungen wie
- eine flüssigkristalline Komponente B), im Folgenden auch als "FK-Hostmischung" bezeichnet, enthaltend eine oder mehrere, vorzugsweise zwei oder mehr niedermolekulare (d.h. monomere bzw. unpolymerisierte) Verbindungen, worin Komponente A) eine oder mehrere erfindungsgemäβe Polymerisierbare Verbindungen enthält, und Komponente B) eine oder mehrere Verbindungen ausgewählt aus Formel CY, PY, ZK, DK oder T oder deren unterformeln enthält.

Weiterer Gegenstand der Erfindung ist die Verwendung von FK-Medien und erfindungsgemäβen polymerisierbaren Verbindungen wie vor- und nachstehend beschrieben in erfindungsgemäβen PS- und PSA-Anzeigen.

Weiterer Gegenstand der Erfindung ist eine erfindungsgemäβe PS- oder PSA-Anzeige enthaltend eine oder mehrere erfindungsgemäβe polymerisierbare Verbindungen wie vor- und nachstehend beschrieben oder ein erfindungsgemäßes FK-Medium, , besonders bevorzugt eine PSA-VA-, PSA-OCB-, PS-IPS-, PS-FFS- oder PS-TN-Anzeige.

Besonders bevorzugt sind FK-Medien enthaltend eine, zwei oder drei erfindungsgemäβe polymerisierbare Verbindungen wie vor- und nachstehend beschrieben.

Ferner bevorzugt sind FK-Medien, worin die polymerisierbare Komponente A) ausschließlich erfindungsgemäβe polymerisierbare Verbindungen wie vor- und nachstehend beschrieben enthält.

Ferner bevorzugt sind FK-Medien, worin Komponente B) eine FK-Verbindung oder eine FK-Mischung ist, die eine nematische Flüssigkristallphase aufweist.

Besonders bevorzugt sind polymerisierbare Verbindungen enthaltend eine mesogene Gruppe mit zwei, drei oder vier Kohlenwasserstoffringen, welche ausgewählt sind aus fünf- oder sechsgliedrigen Ringen, welche auch anelliert sein können und auch ein oder mehrere Heteratome enthalten können.

Ferner bevorzugt sind polymerisierbare Verbindungen, worin die mesogene Gruppe an genau einer Position über eine Abstandsgruppe, und an genau einer Position ohne Abstandsgruppe mit einer polymerisierbaren Gruppe verknüpft ist.

Ferner bevorzugt sind achirale polymerisierbare Verbindungen, sowie FK-Medien enthaltend, vorzugsweise ausschließlich bestehend aus, achiralen Verbindungen.

Die polymerisierbaren Verbindungen können einzeln den FK-Medien zugesetzt werden, es können aber auch Mischungen enthaltend zwei oder mehr erfindungsgemäße polymerisierbare Verbindungen verwendet werden. Bei Polymerisation solcher Mischungen entstehen Copolymere. Die vor- und nachstehend genannten polymerisierbaren Mischungen sind ein weiterer Gegenstand der Erfindung. Die polymerisierbaren Verbindungen können mesogen oder nicht-mesogen sein.

In einer bevorzugten Ausführungsform der Erfindung sind die polymerisierbaren Verbindungen ausgewählt aus Formel I

P^{a}-Sp-A¹-(Z¹-A²)ₘ₁-P^{b}

worin die einzelnen Reste folgende Bedeutung haben
- P^{a} und P^{b}: jeweils unabhängig voneinander eine polymerisierbare Gruppe,
- Sp: eine Abstandsgruppe,
- A¹ und A²: jeweils unabhängig voneinander eine aromatische, heteroaromatische, alicyclische oder heterocyclische Gruppe, vorzugsweise mit 4 bis 25 C-Atomen, welche auch anellierte Ringe enthalten kann, und welche auch durch L ein- oder mehrfach substituiert sein kann,
- L: H, OH, Halogen, SF₅, NO₂, eine Kohlenstoffgruppe oder Kohlenwasserstoffgruppe,
- Z¹: bei jedem Auftreten gleich oder verschieden -O-, -S-, -CO-,-CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-,-CH₂CF₂-, -(CF₂)ₙ₁-, -CH=CH-, -CF=CF-, -C≡C-, -CH=CH- COO-, -OCO-CH=CH-, CR⁰R⁰⁰ oder eine Einfachbindung,
- R⁰ und R⁰⁰: jeweils unabhängig voneinander H oder Alkyl mit 1 bis 12 C-Atomen,
- m1: 0, 1, 2, 3 oder 4,
- n1: 1, 2, 3 oder 4.

Besonders bevorzugte Verbindungen der Formel I sind solche, worin A¹, A², Z¹, Sp und m1 die oben angegebene Bedeutung haben, und
- A¹ und A²: jeweils unabhängig voneinander 1,4-Phenylen, Naphthalin-1,4-diyl oder Naphthalin-2,6-diyl, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyciohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
- L: P-, P-Sp-, OH, CH₂OH, F, Cl, Br, I, -CN, -NO₂ -NCO, -NCS, -OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, P Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P- oder P-Sp- ersetzt sein können, eine polymerisierbare Gruppe,
- Y¹: Halogen,
- R^{x}: P-, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-,-CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P- oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
bedeuten.

Besonders bevorzugte Verbindungen der Formel I sind aus folgenden Unterformeln ausgewählt 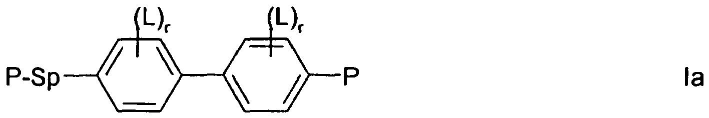 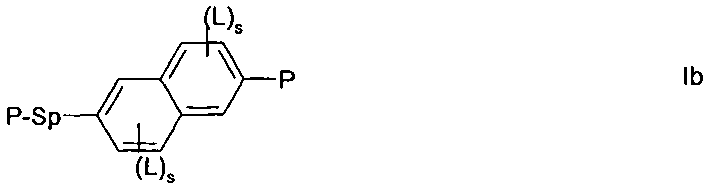 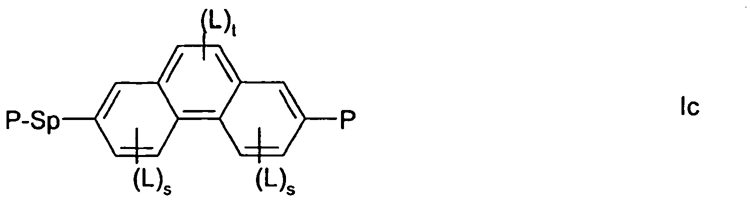 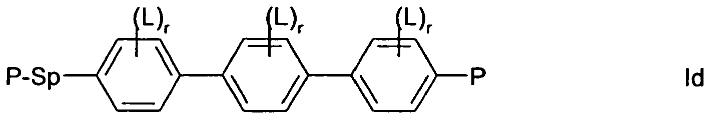 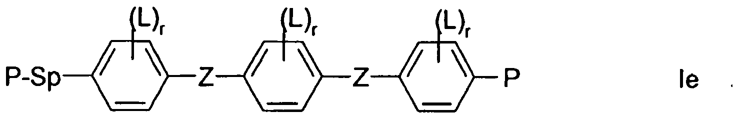 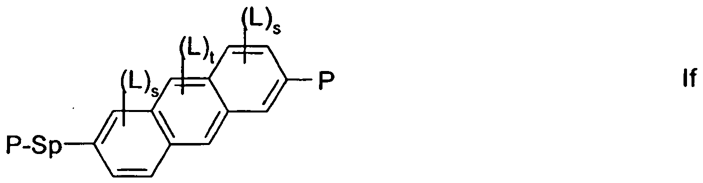 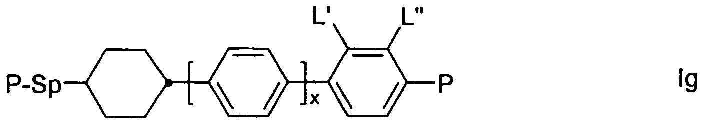 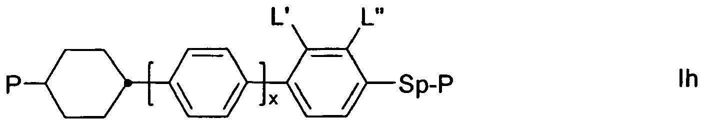 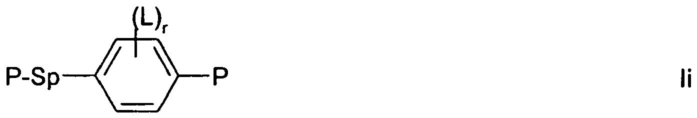 worin P und Sp bei jedem Auftreten gleich oder verschieden die oben angegebene Bedeutung besitzen, L eine der vor- und nachstehend angegebenen Bedeutungen hat, L' und L" jeweils unabhängig voneinander H, F oder Cl bedeuten, Z bei jedem Auftreten gleich oder verschieden eine der vor- und nachstehend für Z¹ angegebenen Bedeutungen hat, und vorzugsweise -COO-, -OCO- oder eine Einfachbindung bedeutet, x 0 oder 1, r 0, 1, 2, 3 oder 4, s 0, 1, 2 oder 3 und t 0, 1 oder 2 ist.

Weitere bevorzugte Verbindungen der Formel 1 sind solche enthaltend heterocyclische Ringe A¹ und/oder A², insbesondere solche worin einer oder mehrere der vorhandenen Ringe A¹ und A² 1,4-Phenylen, Naphthalin-1,4-diyl oder Naphthalin-2,6-diyl, bedeuten, worin eine oder mehrere CH-Gruppen durch N ersetzt sind. Besonders bevorzugte Verbundungen dieses Typs sind ausgewählt aus folgenden Unterformeln: 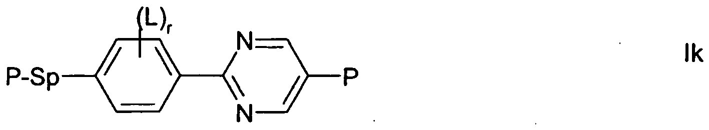 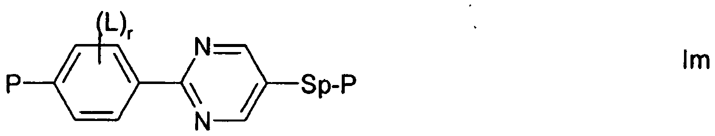 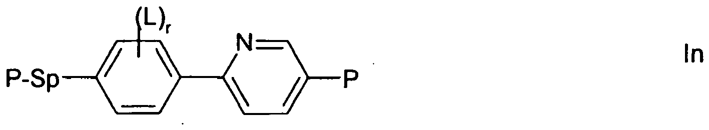 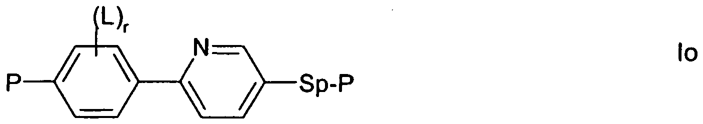 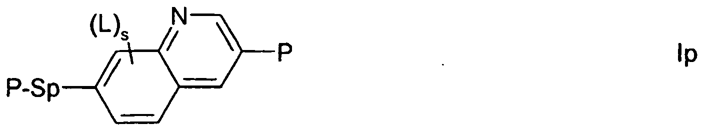 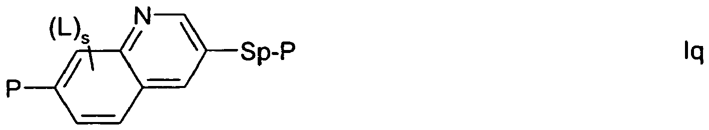 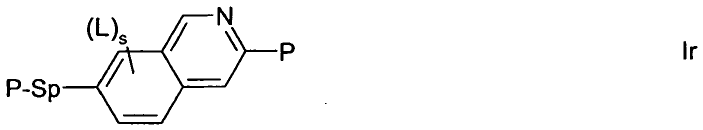 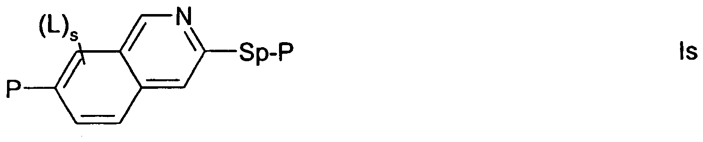 worin P, Sp, L, r und s die oben angegebene Bedeutung haben.

In den vor- und nachstehend beschriebenen polymerisierbaren Verbindungen bedeuten L und R^{x} vorzugsweise eine von P und P-Sp verschiedene Gruppe.

In einer weiteren bevorzugten Ausführungsform der Erfindung enthalten die Verbindungen der Formel I und deren Unterformeln einen oder mehrere verzweigte Reste P^{a}-Sp- mit zwei oder mehreren polymerisierbaren Gruppen P (multifunktionelle polymerisierbare Reste). Geeignete Reste dieses Typs, sowie diese enthaltende polymerisierbare Verbindungen sind beispielsweise in US 7,060,200 B1 oder US 2006/0172090 A1 beschrieben. Besonders bevorzugt sind multifunktionelle polymerisierbare Reste ausgewählt aus folgenden Formeln

-X-alkyl-CHP¹-CH₂-CH₂P² I*a

-X-alkyl-C(CH₂P¹)(CH₂P²)-CH₂P³ I*b

-X-alkyl-CHP¹CHP²-CH₂P³ I*c

-X-alkyl-C(CH₂P¹)(CH₂P²)-CₐₐH₂ₐₐ₊₁ I*d

-X-alkyl-CHP¹-CH₂P² I*e

-X-alkyl-CHP¹P² I*f

-X-alkyl-CP¹P²-CₐₐH₂ₐₐ₊₁ I*g

-X-alkyl-C(CH₂P¹)(CH₂P²)-CH₂OCH₂-C(CH₂P³)(CH₂P⁴)CH₂P⁵ I*h

-X-alkyl-CH((CH₂)ₐₐP¹)((CH₂)_{bb}P²) I*i

-X-alkyl-CHP¹CHP²-CₐₐH₂ₐₐ₊₁ I*k

worin
- alkyl: eine Einfachbindung oder geradkettiges oder verzweigtes Alkylen mit 1 bis 12 C-Atomen bedeutet, worin auch eine oder mehrere nicht benachbarte CH₂-Gruppen jeweils unabhängig voneinander durch -C(R^{x})=C(R^{x})-, -C≡C-, -N(R^{x})-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl oder CN ersetzt sein können, wobei R^{x} die oben angegebene Bedeutung hat und vorzugsweise R⁰ wie oben definiert bedeutet,
aa und bb jeweils unabhängig voneinander 0, 1, 2, 3, 4, 5 oder 6 bedeuten,
- X: eine der für X' angegebenen Bedeutungen besitzt, und
- P¹⁻⁵: jeweils unabhängig voneinander eine der oben für P angegebenen Bedeutungen besitzen.

Vor- und nachstehend gelten folgende Bedeutungen:

Der Begriff "PSA" wird, falls nicht anders angegeben, stellvertretend für PS-Anzeigen und PSA-Anzeigen verwendet.

Der Begriff "mesogene Gruppe" ist dem Fachmann bekannt und in der Literatur beschrieben, und bedeutet eine Gruppe, die durch die Anisotropie ihrer anziehenden und abstoßenden Wechselwirkungen wesentlich dazu beiträgt, in niedermolekularen oder polymeren Substanzen eine Flüssigkristall(FK-)Phase hervorzurufen. Verbindungen enthaltend mesogene Gruppen (mesogene Verbindungen) müssen nicht unbedingt selbst eine FK-Phase aufweisen. Es ist auch möglich, dass mesogene Verbindungen FK-Phasenverhalten nur nach Vermischung mit anderen Verbindungen und/oder nach Polymerisation zeigen. Typische mesogene Gruppen sind beispielsweise starre stäbchen- oder scheibchenförmige Einheiten. Ein Überblick über die im Zusammenhang mit mesogenen bzw. FK-Verbindungen verwendeten Begriffe und Definitionen findet sich in Pure Appl. Chem. 73(5), 888 (2001) und C. Tschierske, G. Pelzl, S. Diele, Angew. Chem. 2004, 116, 6340-6368.

Der Begriff "Abstandsgruppe" (engl. "spacer" oder "spacer group"), vorund nachstehend auch als "Sp" bezeichnet, ist dem Fachmann bekannt und in der Literatur beschrieben, siehe beispielsweise Pure Appl. Chem. 73(5), 888 (2001) und C. Tschierske, G. Pelzl, S. Diele, Angew. Chem. 2004, 116, 6340-6368. Falls nicht anders angegeben, bezeichnet der Begriff "Abstandsgruppe" bzw. "Spacer" vor- und nachstehend eine flexible Gruppe, die in einer polymerisierbaren mesogenen Verbindung ("RM") die mesogene Gruppe und die polymerisierbare(n) Gruppe(n) miteinander verbindet.

Der Begriff "reaktives Mesogen" oder "RM" bezeichnet eine Verbindung enthaltend eine mesogene Gruppe und eine oder mehrere funktionelle Gruppen, die zur Polymerisation geeignet sind (auch als polymerisierbare Gruppe oder Gruppe P bezeichnet).

Die Begriffe "niedermolekulare Verbindung" und "unpolymerisierbare Verbindung" bezeichnen, üblicherweise monomere, Verbindungen, die keine funktionelle Gruppe aufweisen, welche zur Polymerisation unter den üblichen dem Fachmann bekannten Bedingungen, insbesondere unter den zur Polymerisation der RMs verwendeten Bedingungen, geeignet ist. Der Begriff "organische Gruppe" bedeutet eine Kohlenstoff- oder Kohlenwasserstoffgruppe.

Der Begriff "Kohlenstoffgruppe" bedeutet eine ein- oder mehrbindige organische Gruppe enthaltend mindestens ein Kohlenstoffatom, wobei diese entweder keine weiteren Atome enthält (wie z.B. -C≡C-), oder gegebenenfalls ein oder mehrere weitere Atome wie beispielsweise N, O, S, P, Si, Se, As, Te oder Ge enthält (z.B. Carbonyl etc.). Der Begriff "Kohlenwasserstoffgruppe" bedeutet eine Kohlenstoffgruppe, die zusätzlich ein oder mehrere H-Atome und gegebenenfalls ein oder mehrere Heteroatome wie beispielsweise N, O, S, P, Si, Se, As, Te oder Ge enthält.

### "Halogen" bedeutet F, Cl, Br oder I.

Eine Kohlenstoff- oder Kohlenwasserstoffgruppe kann eine gesättigte oder ungesättigte Gruppe sein. Ungesättigte Gruppen sind beispielsweise Aryl-, Alkenyl- oder Alkinylgruppen. Ein Kohlenstoff- oder Kohlenwasserstoffrest mit mehr als 3 C-Atomen kann geradkettig, verzweigt und/oder cyclisch sein, und kann auch Spiroverküpfungen oder kondensierte Ringe aufweisen.

Die Begriffe "Alkyl", "Aryl", "Heteroaryl" etc. umfassen auch mehrbindige Gruppen, beispielsweise Alkylen, Arylen, Heteroarylen etc.

Der Begriff "Aryl" bedeutet eine aromatische Kohlenstoffgruppe oder eine davon abgeleitete Gruppe. Der Begriff "Heteroaryl" bedeutet "Aryl" gemäß vorstehender Definition, enthaltend ein oder mehrere Heteroatome.

Bevorzugte Kohlenstoff- und Kohlenwasserstoffgruppen sind gegebenenfalls substituiertes Alkyl, Alkenyl, Alkinyl, Alkoxy, Alkylcarbonyl, Alkoxycarbonyl, Alkylcarbonyloxy und Alkoxycarbonyloxy mit 1 bis 40, vorzugsweise 1 bis 25, besonders bevorzugt 1 bis 18 C-Atomen, gegebenenfalls substituiertes Aryl oder Aryloxy mit 6 bis 40, vorzugsweise 6 bis 25 C-Atomen, oder gegebenenfalls substituiertes Alkylaryl, Arylalkyl, Alkylaryloxy, Arylalkyloxy, Arylcarbonyl, Aryloxycarbonyl, Arylcarbonyloxy und Aryloxycarbonyloxy mit 6 bis 40, vorzugsweise 6 bis 25 C-Atomen.

Weitere bevorzugte Kohlenstoff- und Kohlenwasserstoffgruppen sind C₁-C₄₀ Alkyl, C₂-C₄₀ Alkenyl, C₂-C₄₀ Alkinyl, C₃-C₄₀ Allyl, C₄-C₄₀ Alkyldienyl, C₄-C₄₀ Polyenyl, C₆-C₄₀ Aryl, C₆-C₄₀ Alkylaryl, C₆-C₄₀ Arylalkyl, C₆-C₄₀ Alkylaryloxy, C₆-C₄₀ Arylalkyloxy, C₂-C₄₀ Heteroaryl, C₄-C₄₀ Cycloalkyl, C₄-C₄₀ Cycloalkenyl, etc. Besonders bevorzugt sind C₁-C₂₂ Alkyl, C₂-C₂₂ Alkenyl, C₂ -C₂₂ Alkinyl, C₃-C₂₂ Allyl, C₄-C₂₂ Alkyldienyl, C₆-C₁₂ Aryl, C₆-C₂₀ Arylalkyl und C₂-C₂₀ Heteroaryl.

Weitere bevorzugte Kohlenstoff- und Kohlenwasserstoffgruppen sind geradkettige, verzweigte oder cyclische Alkylreste mit 1 bis 40, vorzugsweise 1 bis 25 C-Atomen, welche unsubstituiert oder durch F, Cl, Br, I oder CN ein- oder mehrfach substituiert sind, und worin ein mehrere nicht benachbarte CH₂-Gruppen jeweils unabhängig voneinander durch - C(R^{x})=C(R^{x})-, -C≡C-, -N(R^{x})-, -O-, -S-, -CO-, -CO-O-, -O-CO-, -O-CO-O-so ersetzt sein können, dass O- und/oder S-Atome nicht direkt miteinander verknüpft sind.

R^{x} bedeutet vorzugsweise H, Halogen, eine geradkettige, verzweigte oder cyclische Alkylkette mit 1 bis 25 C-Atomen, in der auch ein oder mehrere nicht benachbarte C-Atome durch -O-, -S-, -CO-, -CO-O-, -O-CO-, -O-CO-O- ersetzt sein können, wobei auch ein oder mehrere H-Atome durch Fluor ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen.

Bevorzugte Alkylgruppen sind beispielsweise Methyl, Ethyl, n-Propyl, Isopropyl, n-Butyl, Isobutyl, s-Butyl, t-Butyl, 2-Methylbutyl, n-Pentyl, s-Pentyl, Cyclopentyl, n-Hexyl, Cyclohexyl, 2-Ethylhexyl, n-Heptyl, Cycloheptyl, n-Octyl, Cyclooctyl, n-Nonyl, n-Decyl, n-Undecyl, n-Dodecyl, Dodecanyl, Trifluoromethyl, Perfluoro-n-butyl, 2,2,2-Trifluoroethyl, Perfluorooctyl, Perfluorohexyl etc.

Bevorzugte Alkenylgruppen sind beispielsweise Ethenyl, Propenyl, Butenyl, Pentenyl, Cyclopentenyl, Hexenyl, Cyclohexenyl, Heptenyl, Cycloheptenyl, Octenyl, Cyclooctenyl etc.

Bevorzugte Alkinylgruppen sind beispielsweise Ethinyl, Propinyl, Butinyl, Pentinyl, Hexinyl, Octinyl etc.

Bevorzugte Alkoxygruppen sind beispielsweise Methoxy, Ethoxy, 2-Methoxyethoxy, n-Propoxy, i-Propoxy, n-Butoxy, i-Butoxy, s-Butoxy, t-Butoxy, 2-Methylbutoxy, n-Pentoxy, n-Hexoxy, n-Heptoxy, n-Octoxy, n-Nonoxy, n-Decoxy, n-Undecoxy, n-Dodecoxy, etc.

Bevorzugte Aminogruppen sind beispielsweise Dimethylamino, Methylamino, Methylphenylamino, Phenylamino, etc.

Aryl- und Heteroarylgruppen können einkernig oder mehrkernig sein, d.h. sie können einen Ring (wie z.B. Phenyl) oder zwei oder mehr Ringe aufweisen, welche auch anelliert (wie z.B. Naphthyl) oder kovalent verknüpft sein können (wie z.B. Biphenyl), oder eine Kombination von anellierten und verknüpften Ringen beinhalten. Heteroarylgruppen enthalten ein oder mehrere Heteroatome, vorzugsweise ausgewählt aus O, N, S und Se.

Besonders bevorzugt sind ein-, zwei- oder dreikernige Arylgruppen mit 6 bis 25 C-Atomen sowie ein-, zwei- oder dreikernige Heteroarylgruppen mit 2 bis 25 C-Atomen, welche optional anellierte Ringe enthalten und optional substituiert sind. Ferner bevorzugt sind 5-, 6- oder 7-gliedrige Aryl- und Heteroarylgruppen, worin auch eine oder mehrere CH-Gruppen durch N, S oder O so ersetzt sein können, dass O-Atome und/oder S-Atome nicht direkt miteinander verknüpft sind.

Bevorzugte Arylgruppen sind beispielsweise Phenyl, Biphenyl, Terphenyl, [1,1':3',1"]Terphenyl-2'-yl, Naphthyl, Anthracen, Binaphthyl, Phenanthren, Pyren, Dihydropyren, Chrysen, Perylen, Tetracen, Pentacen, Benzpyren, Fluoren, Inden, Indenofluoren, Spirobifluoren, etc.

Bevorzugte Heteroarylgruppen sind beispielsweise 5-gliedrige Ringe wie Pyrrol, Pyrazol, Imidazol, 1,2,3-Triazol, 1,2,4-Triazol, Tetrazol, Furan, Thiophen, Selenophen, Oxazol, Isoxazol, 1,2-Thiazol, 1,3-Thiazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4-Thiadiazol, 6-gliedrige Ringe wie Pyridin, Pyridazin, Pyrimidin, Pyrazin, 1,3,5-Triazin, 1,2,4-Triazin, 1,2,3-Triazin, 1,2,4,5-Tetrazin, 1,2,3,4-Tetrazin, 1,2,3,5-Tetrazin, oder kondensierte Gruppen wie Indol, Isoindol, Indolizin, Indazol, Benzimidazol, Benzotriazol, Purin, Naphthimidazol, Phenanthrimidazol, Pyridimidazol, Pyrazinimidazol, Chinoxalinimidazol, Benzoxazol, Naphthoxazol, Anthroxazol, Phenanthroxazol, Isoxazol, Benzothiazol, Benzofuran, Isobenzofuran, Dibenzofuran, Chinolin, Isochinolin, Pteridin, Benzo-5,6-chinolin, Benzo-6,7-chinolin, Benzo-7,8-chinolin, Benzoisochinolin, Acridin, Phenothiazin, Phenoxazin, Benzopyridazin, Benzopyrimidin, Chinoxalin, Phenazin, Naphthyridin, Azacarbazol, Benzocarbolin, Phenanthridin, Phenanthrolin, Thieno[2,3b]thiophen, Thieno[3,2b]thiophen, Dithienothiophen, Isobenzothiophen, Dibenzothiophen, Benzothiadiazothiophen, oder Kombinationen dieser Gruppen. Die Heteroarylgruppen können auch mit Alkyl, Alkoxy, Thioalkyl, Fluor, Fluoralkyl oder weiteren Aryl- oder Heteroarylgruppen substituiert sein.

Die (nicht-aromatischen) alicyclischen und heterocyclischen Gruppen umfassen sowohl gesättigte Ringe, d.h. solche die ausschließlich Einfachbindungen enthalten, als auch teilsweise ungesättigte Ringe, d.h. solche die auch Mehrfachbindungen enthalten können. Heterocyclische Ringe enthalten ein oder mehrere Heteroatome, vorzugsweise ausgewählt aus Si, O, N, S und Se.

Die (nicht-aromatischen) alicyclischen und heterocyclischen Gruppen können einkernig sein, d.h. nur einen Ring enthalten (wie z.B. Cyclohexan), oder mehrkernig sein, d.h. mehrere Ringe enthalten (wie z.B. Decahydronaphthalin oder Bicyclooctan). Besonders bevorzugt sind gesättigte Gruppen. Ferner bevorzugt sind ein-, zwei- oder dreikernige Gruppen mit 3 bis 25 C-Atomen, welche optional anellierte Ringe enthalten und optional substituiert sind. Ferner bevorzugt sind 5-,6-,7- oder 8-gliedrige carbocyclische Gruppen worin auch ein oder mehrere C-Atome durch Si ersetzt sein können und/oder eine oder mehrere CH-Gruppen durch N ersetzt sein können und/oder eine oder mehrere nicht-benachbarte CH₂-Gruppen durch -O- und/oder -S- ersetzt sein können.

Bevorzugte alicyclische und heterocyclische Gruppen sind beispielsweise 5-gliedrige Gruppen wie Cyclopentan, Tetrahydrofuran, Tetrahydrothiofuran, Pyrrolidin, 6-gliedrige Gruppen wie Cyclohexan, Silinan, Cyclohexen, Tetrahydropyran, Tetrahydrothiopyran, 1,3-Dioxan, 1,3-Dithian, Piperidin, 7- gliedrige Gruppen wie Cycloheptan, und anellierte Gruppen wie Tetrahydronaphthalin, Decahydronaphthalin, Indan, Bicyclo[1.1.1]pentan-1,3-diyl, Bicyclo[2.2.2]octan-1,4-diyl, Spiro[3.3]heptan-2,6-diyl, Octahydro-4,7-methano-indan-2,5-diyl.

Die Aryl-, Heteroaryl-, Kohlenstoff und Kohlenwasserstoffreste weisen gegebenenfalls einen oder mehrere Substituenten auf, welche vorzugsweise ausgewählt sind aus der Gruppe enthaltend Silyl, Sulfo, Sulfonyl, Formyl, Amin, Imin, Nitril, Mercapto, Nitro, Halogen, C₁₋₁₂ Alkyl, C₆₋₁₂ Aryl, C₁₋₁₂ Alkoxy, Hydroxy, oder Kombinationen dieser Gruppen.

Bevorzugte Substituenten sind beispielsweise löslichkeitsfördernde Gruppen wie Alkyl oder Alkoxy, elektronenziehende Gruppen wie Fluor, Nitro oder Nitril, oder Substituenten zur Erhöhung der Glastemperatur (Tg) im Polymer, insbesondere voluminöse Gruppen wie z.B. t-Butyl oder gegebenenfalls substituierte Arylgruppen.

Bevorzugte Substituenten, im Folgenden auch als "L" bezeichnet, sind beispielsweise OH, CH₂OH, F, Cl, Br, I, -CN, -NO₂, -NCO, -NCS, -OCN, - SCN, -C(=O)N(R^{x})₂, -C(=O)Y¹, -C(=O)R^{x}, -N(R^{x})₂, worin R^{x} die oben angegebene Bedeutung hat und Y¹ Halogen bedeutet, optional substituiertes Silyl oder Aryl mit 6 bis 40, vorzugsweise 6 bis 20 C Atomen, und geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin ein oder mehrere H-Atome gegebenenfalls durch F oder Cl ersetzt sein können.

"Substituiertes Silyl oder Aryl" bedeutet vorzugsweise durch Halogen, - CN, R⁰, -OR⁰, -CO-R⁰, -CO-O-R⁰, -O-CO-R⁰ oder -O-CO-O-R⁰ substituiert, worin R⁰ die oben angegebene Bedeutung hat.

Besonders bevorzugte Substituenten L sind beispielsweise F, Cl, CN, NO₂, CH₃, C₂H₅, OCH₃, OC₂H₅, COCH₃, COC₂H₅, COOCH₃, COOC₂H₅, CF₃, OCF₃, OCHF₂, OC₂F₅, ferner Phenyl. 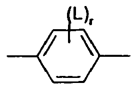 ist vorzugsweise 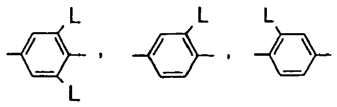 oder 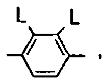 worin L eine der oben angegebenen Bedeutungen hat.

Die polymerisierbare Gruppe P, P^{a} bzw. P^{b} ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen

Bevorzugte polymerisierbare Gruppen sind ausgewählt aus CH₂=CW¹-COO-, CH₂=CW¹-CO-, 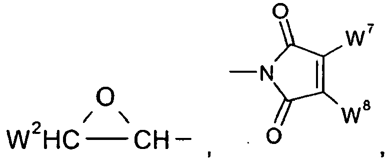 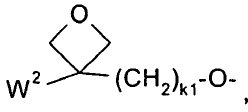 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN-, und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, welches optional mit ein oder mehreren Resten L wie oben definiert substiuiert ist, k₁, k₂ und k₃ jeweils unabhängig voneinander 0 oder 1 bedeuten, k₃ vorzugsweise 1 bedeutet.

Besonders bevorzugte polymerisierbare Gruppen sind CH₂=CH-COO-, CH₂=C(CH₃)-COO-, CH₂=CH-, CH₂=CH-O-, (CH₂=CH)₂CH-OCO-, (CH₂=CH)₂CH-O-, 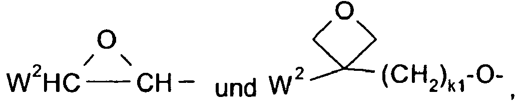 insbesondere Vinyloxy, Acrylat, Methacrylat, Fluoracrylat, Chloracrylat, Oxetan und Epoxy.

Bevorzugte Abstandsgruppen Sp sind ausgewählt aus der Formel Sp'-X', so dass der Rest "P^{(a,b)}-Sp-" der Formel "P^{(a,b)}-Sp'-X'-" entspricht, wobei
- Sp': Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-,-NH-, -NR⁰-, -SiR⁰R⁰⁰-, -CO-, -COO-, -OCO-, -OCO-O-, -S-CO-, -CO- S-, -NR⁰-CO-O-, -O-CO-NR⁰-, -NR⁰-CO-NR⁰-, -CH=CH- oder -C≡C- ersetzt sein können, dass O- und/oder S-Atome nicht direkt miteinander verknüpft sind,
- X': -O-, -S-, -CO-, -COO-, -OCO-, -O-COO-, -CO-NR⁰-, -NR⁰-CO-, -NR⁰- CO-NR⁰-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-,-CH=CR⁰-, -CY²=CY³-, -C≡C-, -CH=CH-COO-, -OCO-CH=CH- oder eine Einfachbindung bedeutet,
- R⁰ und R⁰⁰: jeweils unabhängig voneinander H oder Alkyl mit 1 bis 12 C-Atomen bedeuten, und
- Y² und Y³: jeweils unabhängig voneinander H, F, Cl oder CN bedeuten.

X' ist vorzugsweise -O-, -S -CO-, -COO-. -OCO-, -O-COO-, -CO-NR⁰-, - NR⁰-CO-, -NR⁰-CO-NR⁰- oder eine Einfachbindung.

Typische Abstandsgruppen Sp' sind beispielsweise -(CH₂)p₁-, -(CH₂CH₂O)_{q1}-CH₂CH₂-, -CH₂CH₂-S-CH₂CH₂-, -CH₂CH₂-NH-CH₂CH₂- oder -(SiR⁰R⁰⁰-O)ₚ₁-, worin p1 eine ganze Zahl von 1 bis 12 ist, q1 eine ganze Zahl von 1 bis 3 ist, und R⁰ und R⁰⁰ die oben angegebenen Bedeutungen besitzen.

Besonders bevorzugte Gruppen -X'-Sp'- sind -(CH₂)ₚ₁-, -O-(CH₂)ₚ₁-, -OCO-(CH₂)ₚ₁-, -OCOO-(CH₂)ₚ₁-.

Besonders bevorzugte Gruppen Sp' sind beispielsweise jeweils geradkettiges Ethylen, Propylen, Butylen, Pentylen, Hexylen, Heptylen, Octylen, Nonylen, Decylen, Undecylen, Dodecylen, Octadecylen, Ethylenoxyethylen, Methylenoxybutylen, Ethylenthioethylen, Ethylen-N-methyl-iminoethylen, 1-Methylalkylen, Ethenylen, Propenylen und Butenylen.

Die Herstellung der polymerisierbaren Verbindungen erfolgt in Analogie zu dem Fachmann bekannten und in Standardwerken der organischen Chemie beschriebenen Verfahren, wie beispielsweise in Houben-Weyl, Methoden der organischen Chemie, Thieme-Verlag, Stuttgart. Die Synthese von polymerisierbaren Acrylaten und Methacrylaten der Formel I kann in Analogie zu den in US 5,723,066 beschriebenen Methoden durchgeführt werden. Weitere, besonders bevorzugte Methoden finden sich in den Beispielen.

Im einfachsten Fall erfolgt die Synthese durch Veresterung oder Veretherung von kommerziell erhältlichen Diolen der allgemeinen Formel HO-A¹-(Z-A²)ₘ-OH, worin A¹, A², Z¹ und m die oben angegebenen Bedeutungen besitzen, wie z.B. 2,6-Dihydroxynaphthalin (Naphthalin-2,6-diol), oder 1-(4-Hydroxyphenyl)-phenyl-4-ol, mit entsprechenden Säuren, Säurederivaten, oder halogenierten Verbindungen enthaltend eine Gruppe P, wie z.B. (Meth)acrylsäurechlorid oder (Meth)acrylsäure in Gegenwart von einem wasserentziehenden Reagenz wie z.B. DCC (Dicyclohexylcarbodiimid).

Die polymerisierbaren Verbindungen werden im FK-Medium zwischen den Substraten der FK-Anzeige unter Anlegen einer Spannung durch in-situ-Polymerisation polymerisiert bzw. vernetzt (falls eine Verbindung zwei oder mehr polymerisierbare Gruppen enthält). Geeignete und bevorzugte Polymerisationsmethoden sind beispielsweise die thermische oder Photopolymerisation, vorzugsweise Photopolymerisation, insbesondere UV- Photopolymerisation. Dabei können ggf. auch ein oder mehrere Initiatoren zugesetzt werden. Geeignete Bedingungen für die Polymerisation, sowie geeignete Arten und Mengen der Initiatoren, sind dem Fachmann bekannt und in der Literatur beschrieben. Für die radikalische Polymerisation eignen sich z.B. die kommerziell erhältlichen Photoinitiatoren Irgacure651®, Irgacure184®, Irgacure907®, Irgacure369®, oder Darocure1173® (Ciba AG). Falls ein Initiator eingesetzt wird, beträgt dessen Anteil im Gesamtgemisch vorzugsweise 0,001 bis 5 Gew.-%, besonders bevorzugt 0,001 bis 1 Gew.-%. Die Polymerisation kann aber auch ohne Zusatz eines Initiators erfolgen. In einer weiteren bevorzugten Ausführungsform enthält das FK-Medium keinen Polymerisationsinitiator.

Die polymerisierbare Komponente A) oder das FK-Medium können auch einen oder mehrere Stabilisatoren enthalten, um eine unerwünschte spontane Polymerisation der RMs, beispielsweise während der Lagerung oder des Transports, zu verhindern. Geeignete Arten und Mengen der Stabilisatoren sind dem Fachmann bekannt und in der Literatur beschrieben. Besonders geeignet sind z.B. die kommerziell erhältlichen Stabilisatoren der Serie Irganox ® (Ciba AG). Falls Stabilisatoren eingesetzt werden, beträgt deren Anteil, bezogen auf die Gesamtmenge an RMs bzw. polymerisierbarer Komponente A), vorzugsweise 10 - 5000 ppm, besonders bevorzugt 50 - 500 ppm.

Die erfindungsgemäßen polymerisierbaren Verbindungen eignen sich besonders für die Polymerisation ohne Initiator, was erhebliche Vorteile mit sich bringt, wie beispielsweise geringere Materialkosten und insbesondere eine geringere Verunreinigung des FK-Mediums durch mögliche Restmengen des Initiators oder dessen Abbauprodukte.

Die erfindungsgemäßen FK-Medien enthalten vorzugsweise < 5%, besonders bevorzugt < 1 %, ganz besonders bevorzugt < 0.5 % an polymerisierbaren Verbindungen, insbesondere polymerisierbaren Verbindungen der oben genannten Formeln.

Die erfindungsgemäßen polymerisierbaren Verbindungen können einzeln den FK-Medien zugesetzt werden, es können aber auch Mischungen enthaltend zwei oder mehr erfindungsgemäße polymerisierbare Verbindungen, oder Mischungen enthaltend eine oder mehrere erfindungsgemäße polymerisierbare Verbindungen und eine oder mehrere zusätzliche polymerisierbare Verbindungen (Comonomere) verwendet werden. Die Comonomere können mesogen oder nicht-mesogen sein. Bei Polymerisation solcher Mischungen entstehen Copolymere. Die vor- und nachstehend genannten polymerisierbaren Mischungen sind ein weiterer Gegenstand der Erfindung.

Geeignete und bevorzugte mesogene Comonomere sind beispielsweise solche ausgewählt aus den folgenden Formeln: 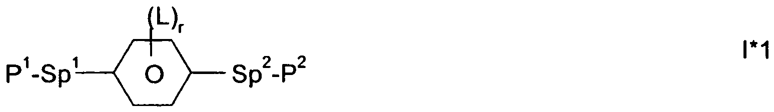 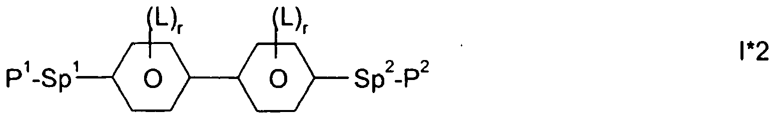 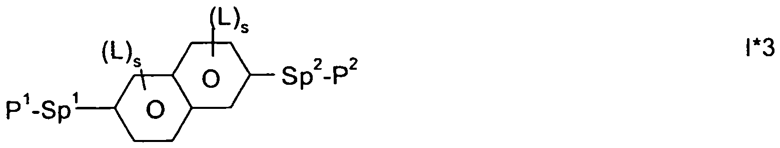 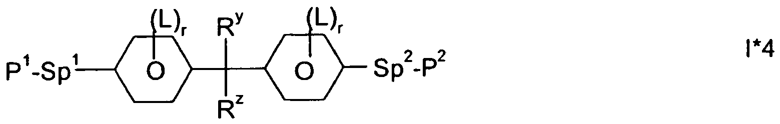 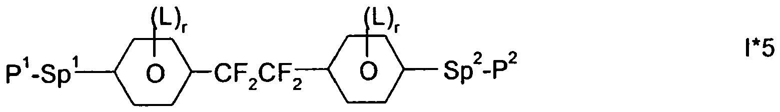 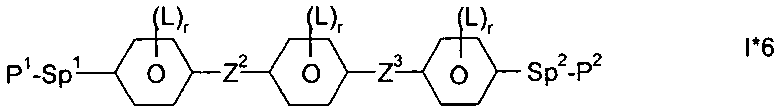 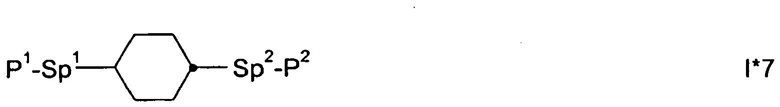 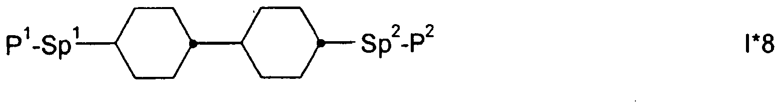 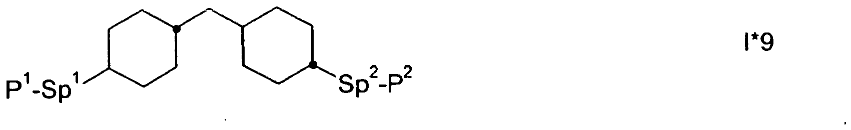 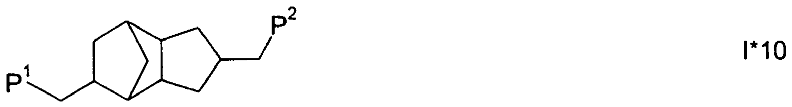 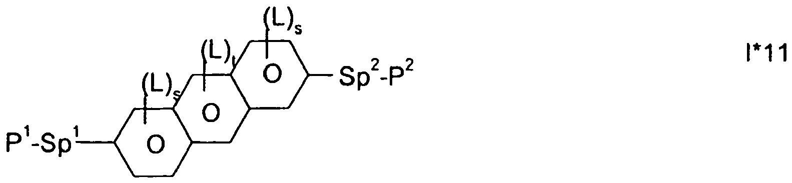 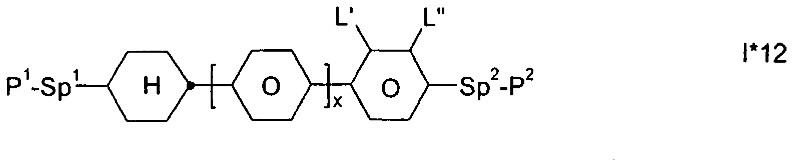 worin
- P¹ und P²: eine der für P angegebenen Bedeutungen besitzen und vorzugsweise Acrylat oder Methacrylat bedeuten,
- Sp¹ und Sp²: eine der für Sp angegebenen Bedeutungen besitzen oder eine Einfachbindung bedeuten,
- Z² und Z³: jeweils unabhängig voneinander -COO- oder -OCO bedeuten,
- L: P-Sp-, F, Cl, Br, I, -CN, -NO₂, -NCO, -NCS, -OCN, -SCN,-C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl oder P-Sp- ersetzt sein können, bedeutet,
- L' und L": jeweils unabhängig voneinander H, F oder Cl bedeuten,
- r: 0, 1, 2, 3 oder 4 bedeutet,
- s: 0, 1, 2 oder 3 bedeutet,
- t: 0, 1 oder 2 bedeutet,
- x: 0 oder 1, und
- R^{y} und R^{z}: jeweils unabhängig voneinander H oder CH₃ bedeuten.

Die FK-Medien zur Verwendung in den erfindungsgemäßen FK-Anzeigen enthalten, neben den oben beschriebenen polymerisierbaren Verbindungen, eine FK-Mischung ("Host-Mischung") enthaltend eine oder mehr, vorzugsweise zwei oder mehr niedermolekulare (d.h. monomere bzw. unpolymerisierte) Verbindungen. Letztere sind stabil bzw. unreaktiv gegenüber einer Polymerisationsreaktion unter den zur Polymerisation der polymerisierbaren Verbindungen verwendeten Bedingungen. Prinzipiell eignet sich als Host-Mischung jede zur Verwendung in herkömmlichen VA- und OCB-Anzeigen geeignete FK-Mischung. Geeignete FK-Mischungen sind dem Fachmann bekannt und in der Literatur beschrieben, beispielsweise Mischungen in VA-Anzeigen in EP 1 378 557 A1 und Mischungen für OCB-Anzeigen in EP 1 306 418 A1 und DE 102 24 046 A1.

Besonders bevorzugte Host-Mischungen und FK-Medien werden im Folgenden genannt:
a) FK-Medium, welches eine oder mehrere Verbindungen ausgewählt aus den folgenden Formeln enthält: 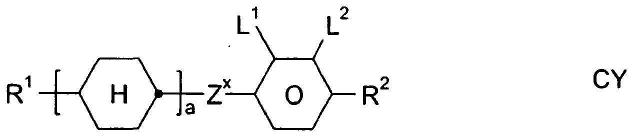 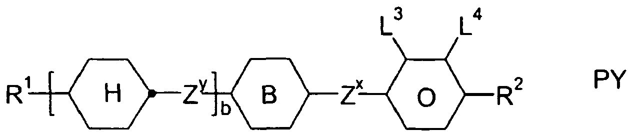 worin die einzelnen Reste folgende Bedeutung besitzen

- a: 1 oder 2,
- b: 0 oder 1,

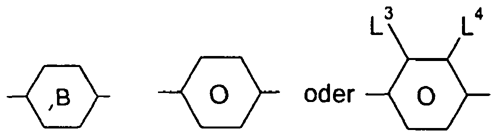

- R¹ und R²: jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder-COO- so ersetzt sein können, dass O-Atome nicht direkt miteinander verknüpft sind, vorzugsweise Alkyl oder Alkoxy mit 1 bis 6 C-Atomen,
- Z^{x} und Z^{y}: jeweils unabhängig voneinander -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung, vorzugsweise eine Einfachbindung,
- L¹⁻⁴: jeweils unabhängig voneinander F, Cl, OCF₃, CF₃, CH₃, CH₂F, CHF₂.

Vorzugsweise bedeuten beide Reste L¹ und L² F, oder einer der Reste L¹ und L² F und der andere Cl, bzw. beide Reste L³ und L⁴ F, oder einer der Reste L³ und L⁴ F und der andere Cl.

Die Verbindungen der Formel CY sind vorzugsweise ausgewählt aus den folgenden Unterformeln 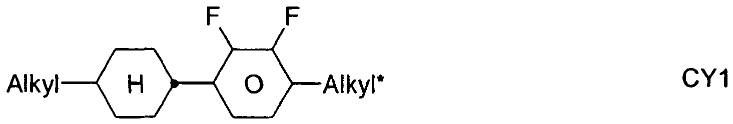 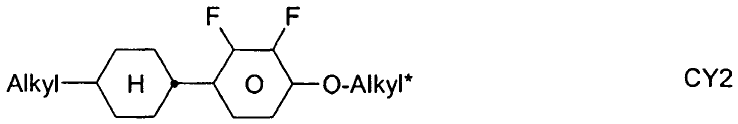 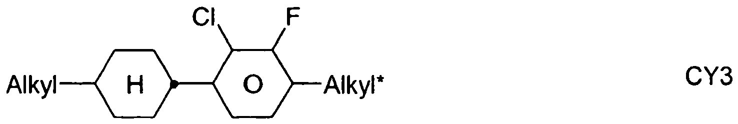 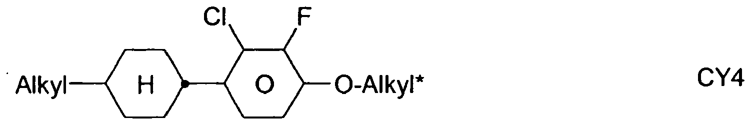 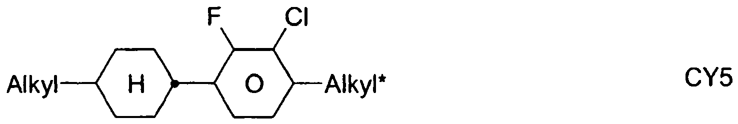 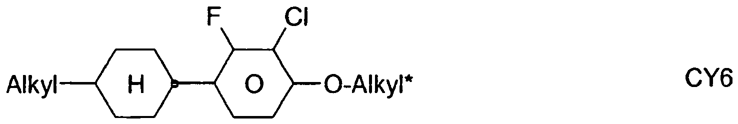 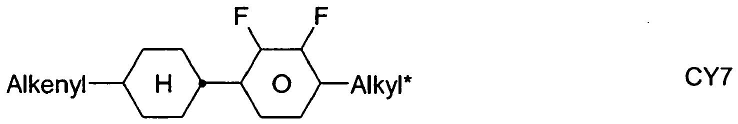 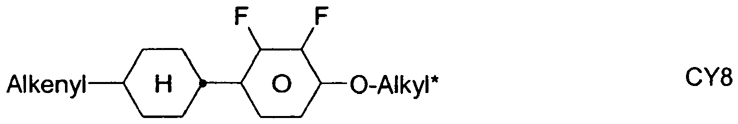 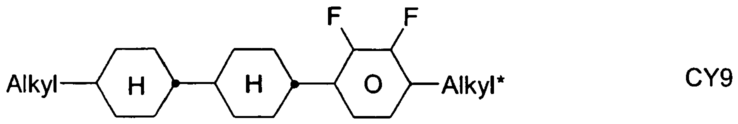 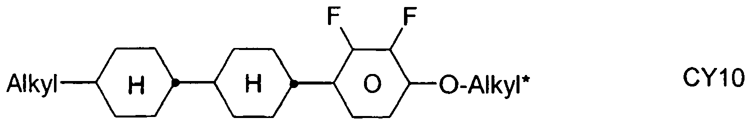 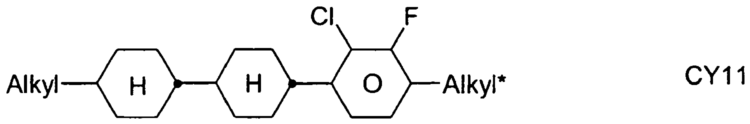 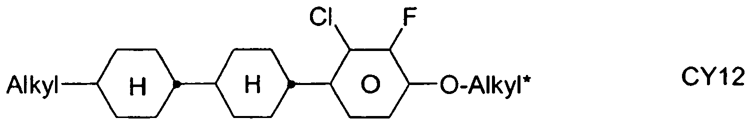 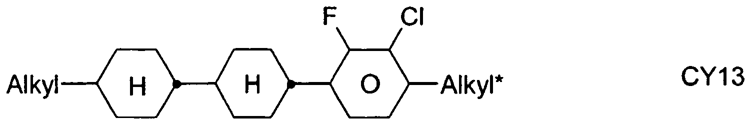 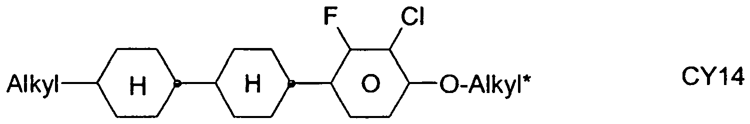 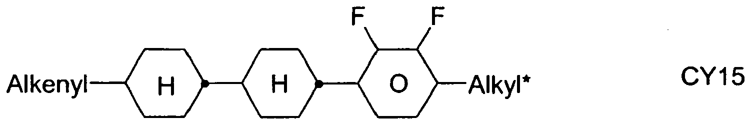 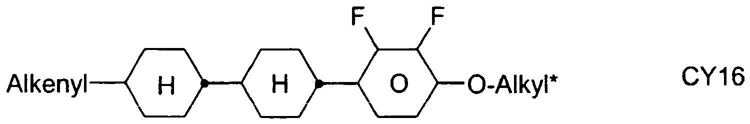 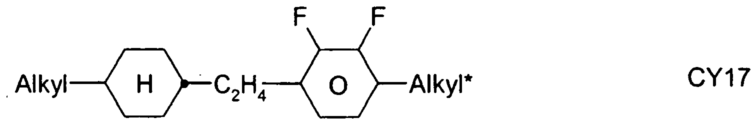 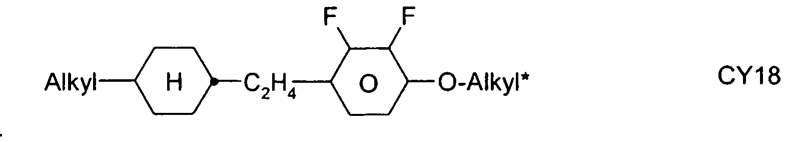 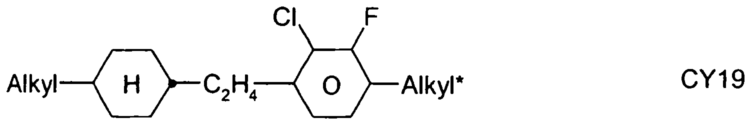 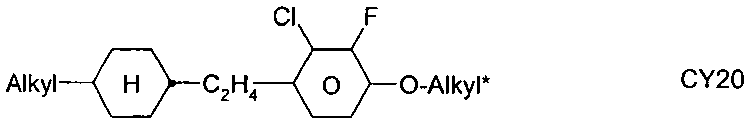 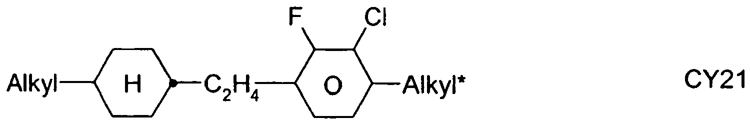 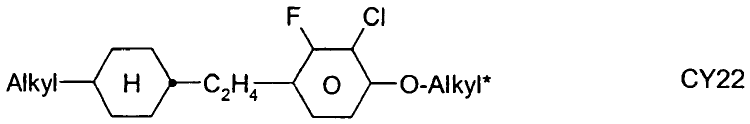 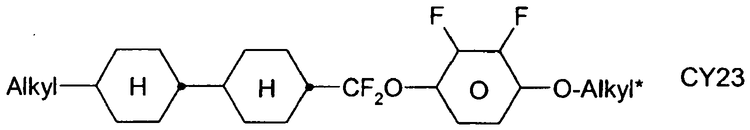 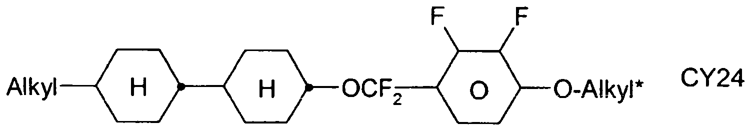 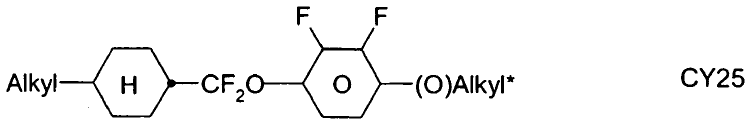 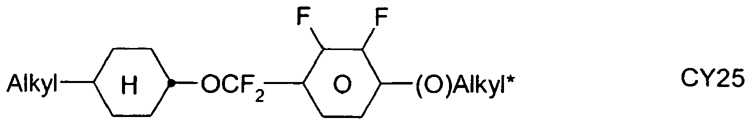 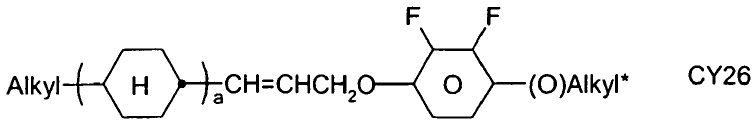 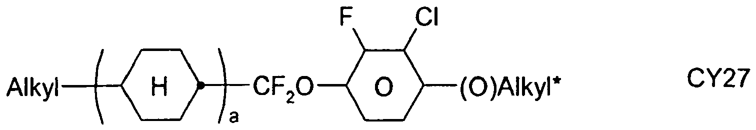 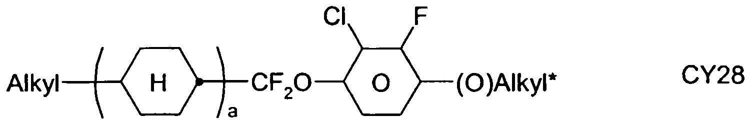 worin a 1 oder 2, Alkyl und Alkyl* jeweils unabhängig voneinander einen geradkettigen Alkylrest mit 1-6 C-Atomen, und Alkenyl einen geradkettigen Alkenylrest mit 2-6 C-Atomen bedeuten. Alkenyl bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH₌CH-(CH₂)₂-.

Die Verbindungen der Formel PY sind vorzugsweise ausgewählt aus den folgenden Unterformeln: 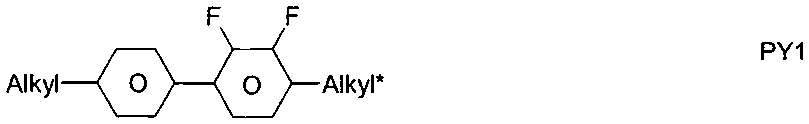 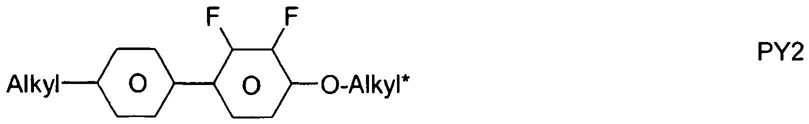 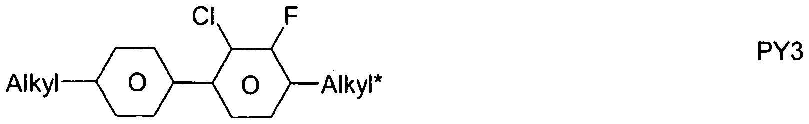 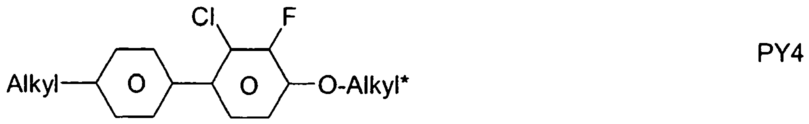 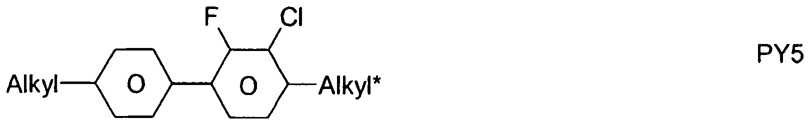 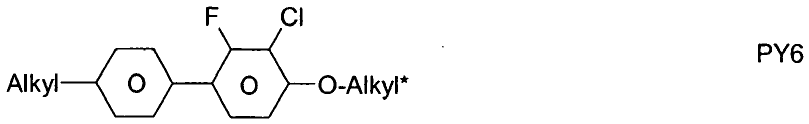 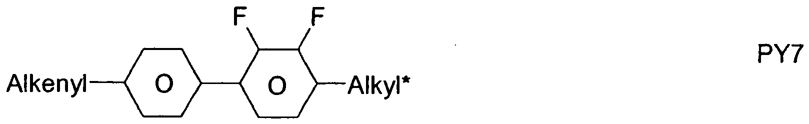 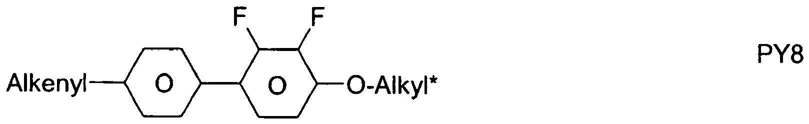 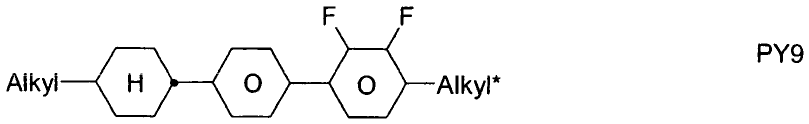 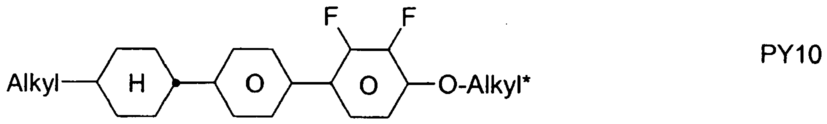 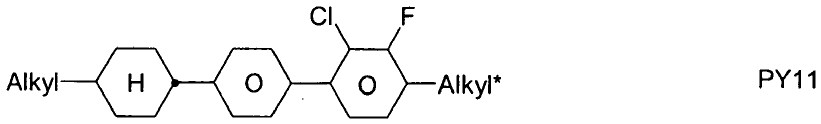 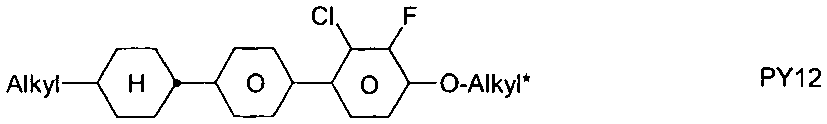 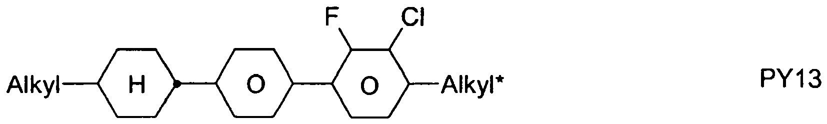 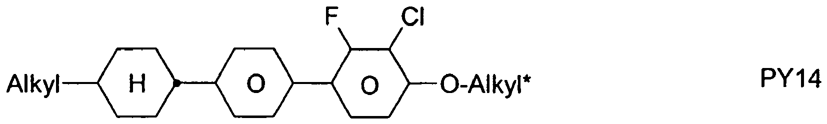 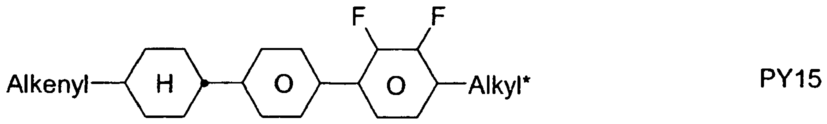 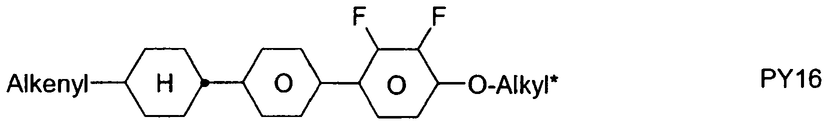 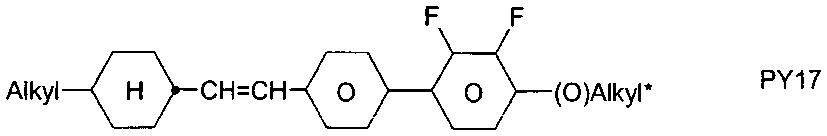 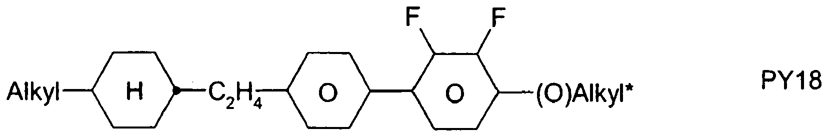 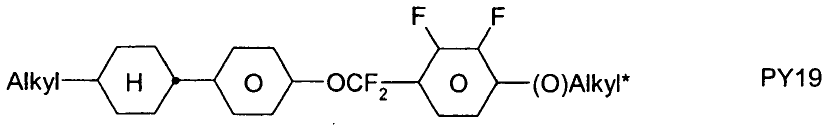 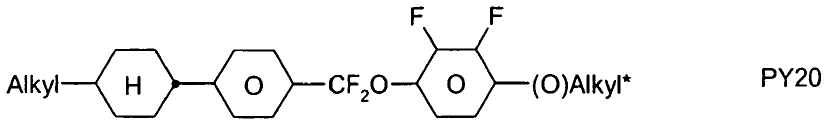 worin Alkyl und Alkyl* jeweils unabhängig voneinander einen geradkettigen Alkylrest mit 1-6 C-Atomen und Alkenyl einen geradkettigen Alkenylrest mit 2-6 C-Atomen bedeuten. Alkenyl bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
b) FK-Medium, welches zusätzlich eine oder mehrere Verbindungen der folgenden Formel enthält: 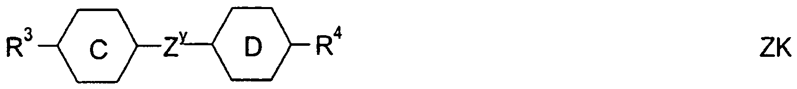 worin die einzelnen Reste folgende Bedeutung besitzen 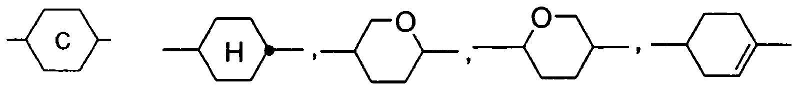 oder 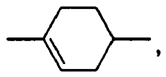 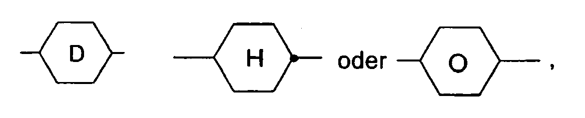
   - R³ und R⁴: jeweils unabhängig voneinander Alkyl mit 1 bis 12 C-Atomen, worin auch eine oder zwei nicht benachbarte CH₂-Gruppen durch -O-, -CH=CH-, -CO-, -OCO- oder-COO- so ersetzt sein können, dass O-Atome nicht direkt miteinander verknüpft sind,

   - Z^{y}: -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung, vorzugsweise eine Einfachbindung.

Die Verbindungen der Formel ZK sind vorzugsweise ausgewählt aus den folgenden Unterformeln: 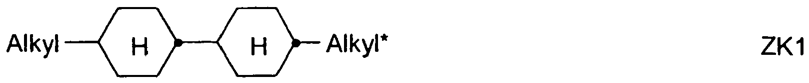 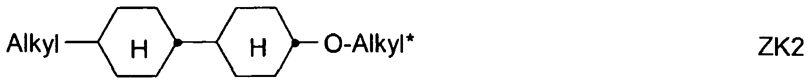 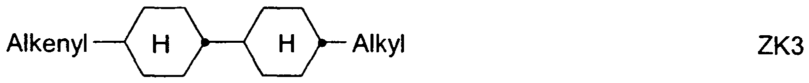 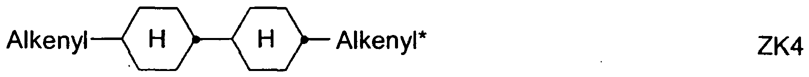 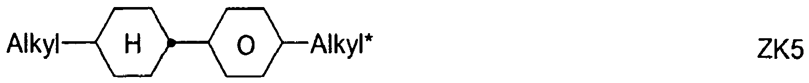 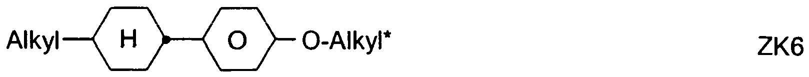 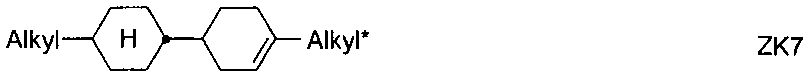 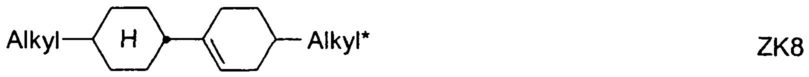 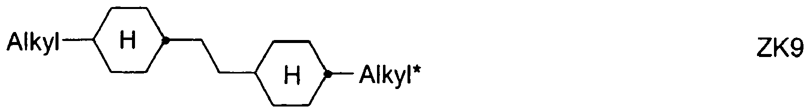 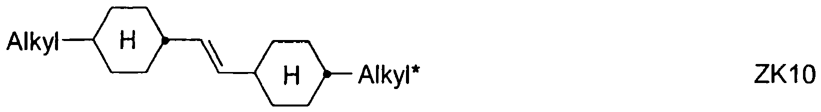 worin Alkyl und Alkyl* jeweils unabhängig voneinander einen geradkettigen Alkylrest mit 1-6 C-Atomen bedeuten, und Alkenyl einen geradkettigen Alkenylrest mit 2-6 C-Atomen bedeuten. Alkenyl bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
c) FK-Medium, welches zusätzlich eine oder mehrere Verbindungen der folgenden Formel enthält: 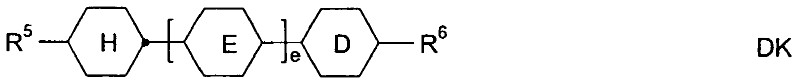 worin die einzelnen Reste bei jedem Auftreten gleich oder verschieden folgende Bedeutung haben:
   - R⁵ und R⁶: jeweils unabhängig voneinander eine der oben für R¹ angegebenen Bedeutungen, 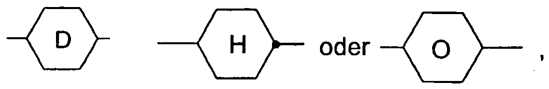 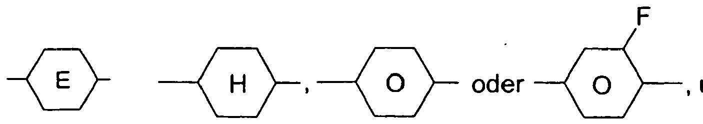
   und
   - e: 1 oder 2.

Die Verbindungen der Formel DK sind vorzugsweise ausgewählt aus den folgenden Unterformeln: 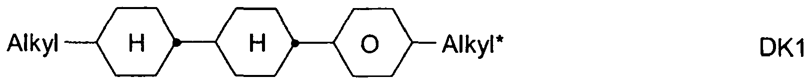 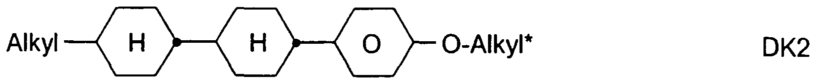 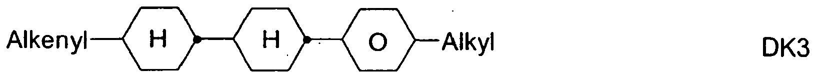 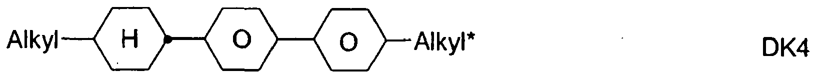 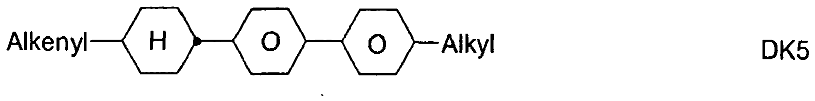 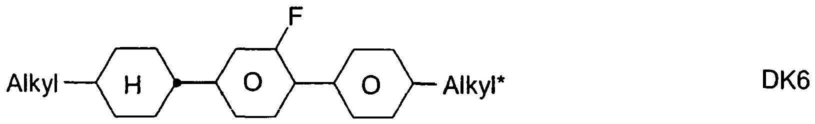 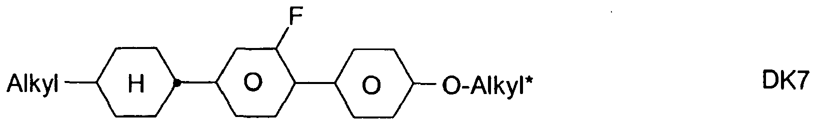 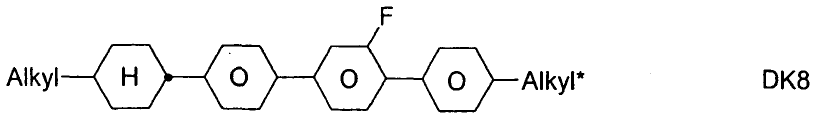 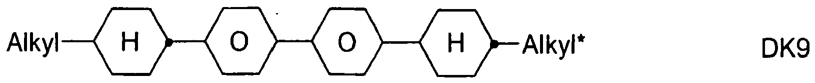 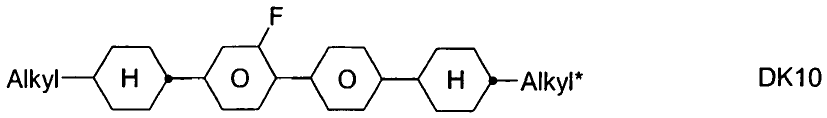 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
d) FK-Medium, welches zusätzlich eine oder mehrere Verbindungen der folgenden Formel enthält: 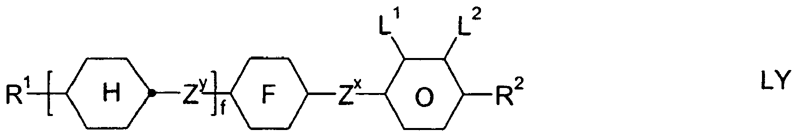 worin die einzelnen Reste folgende Bedeutung besitzen 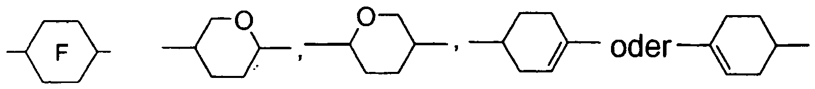
   - f: 0 oder 1,
   - R¹ und: R² jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder-COO- so ersetzt sein können, dass O-Atome nicht direkt miteinander verknüpft sind,
   - Z^{x} und Z^{y}: jeweils unabhängig voneinander -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung, vorzugsweise eine Einfachbindung,
   - L¹ und L²: jeweils unabhängig voneinander F, Cl, OCF₃, CF₃, CH₃, CH₂F, CHF₂.

Vorzugsweise bedeuten beide Reste L¹ und L² F oder einer der Reste L¹ und L² F und der andere Cl.

Die Verbindungen der Formel LY sind vorzugsweise ausgewählt aus den folgenden Unterformeln 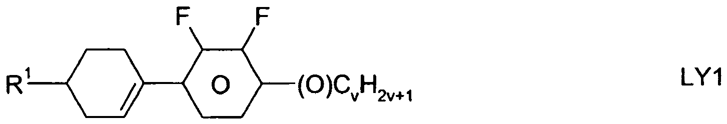 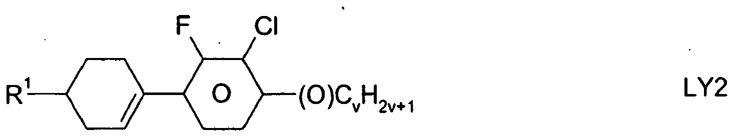 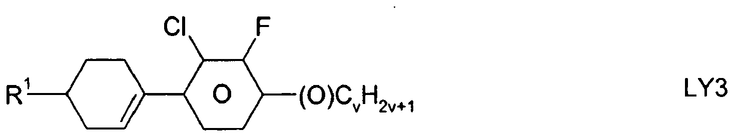 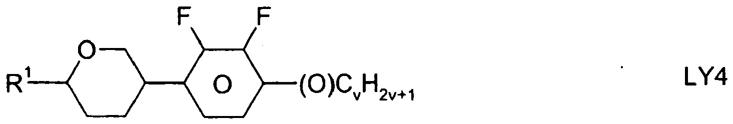 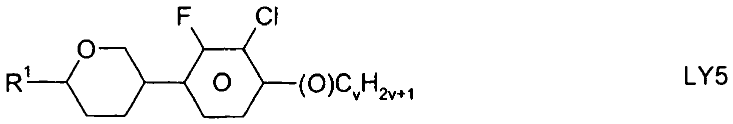 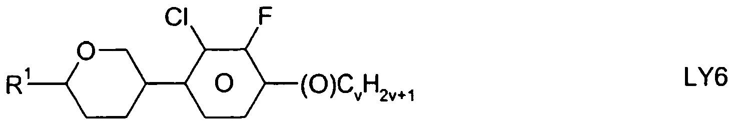 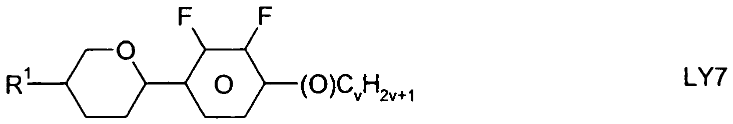 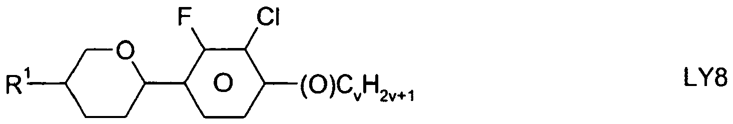 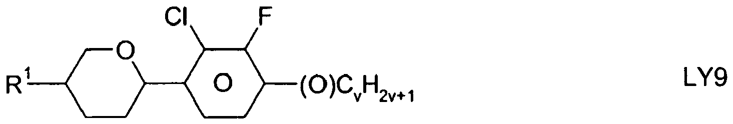 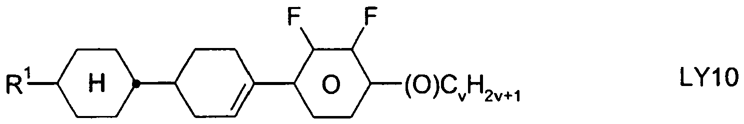 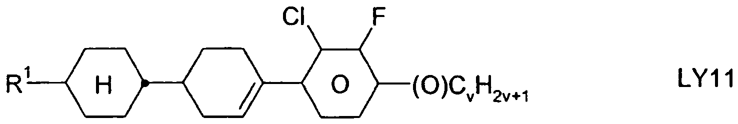 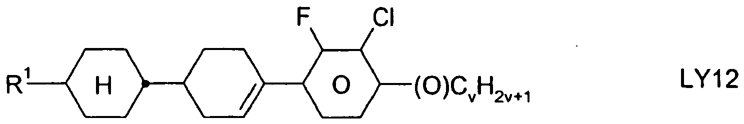 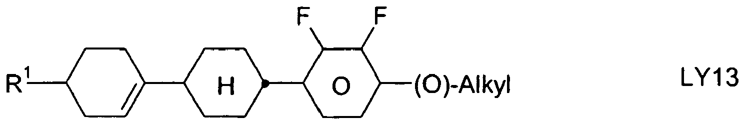 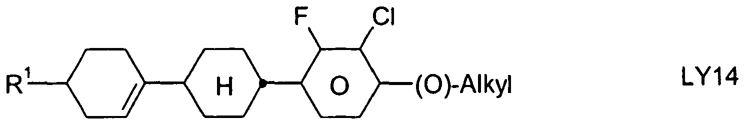 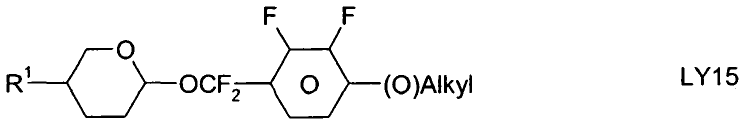 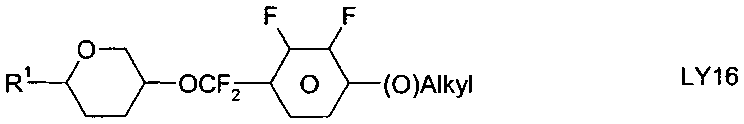 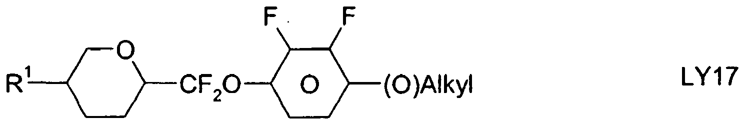 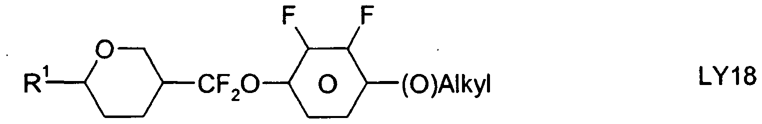 worin R¹ die oben angegebene Bedeutung hat und v eine ganze Zahl von 1 bis 6 bedeutet. R¹ bedeutet vorzugsweise geradkettiges Alkyl oder Alkenyl, insbesondere CH₃, C₂H₅, n-C₃H₇, n-C₄H₉, n-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
e) FK-Medium, welches zusätzlich eine oder mehrere Verbindungen ausgewählt aus den folgenden Formeln enthält: 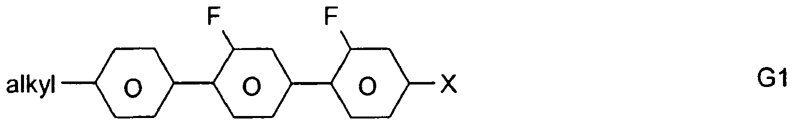 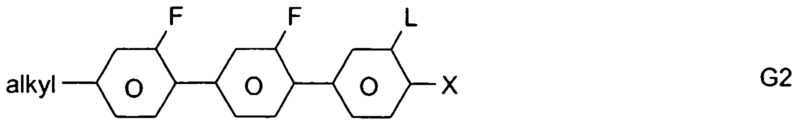 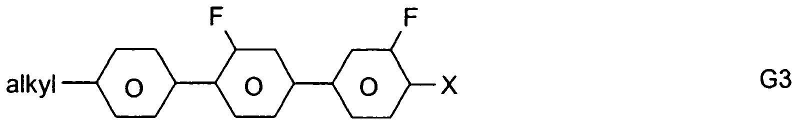 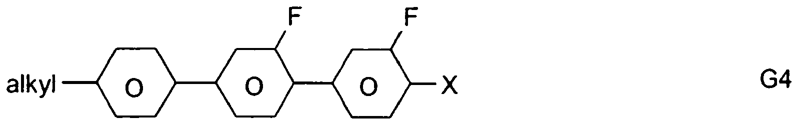 worin alkyl C₁₋₆-alkyl, L H oder F und X F, Cl, OCF₃, OCHF₂ oder OCH=CF₂ bedeutet. Besonders bevorzugt sind Verbindungen der Formel G1, worin X F bedeutet.
f) FK-Medium, welches zusätzlich eine oder mehrere Verbindungen ausgewählt aus den folgenden Formeln enthält: 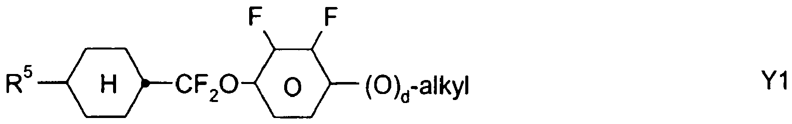 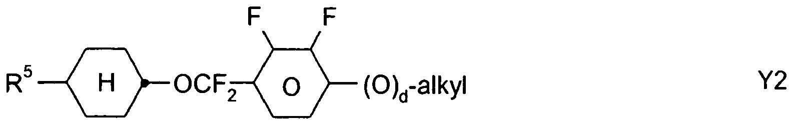 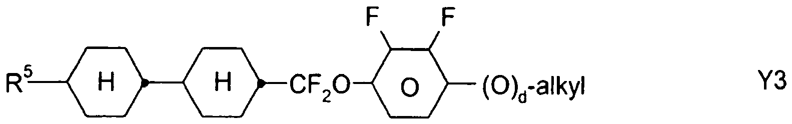 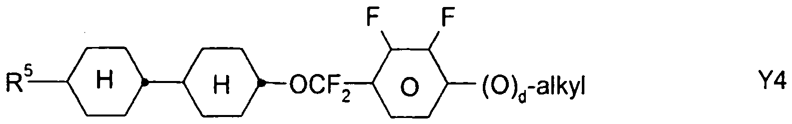 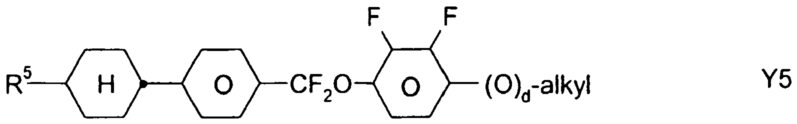 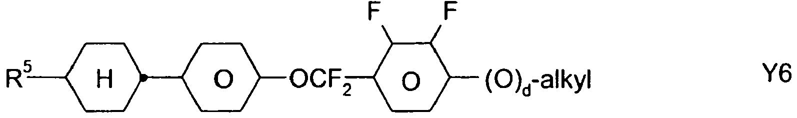 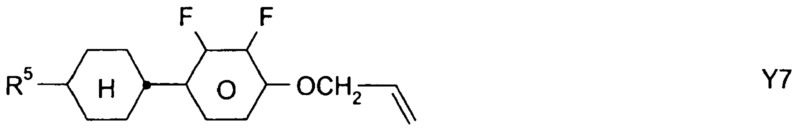 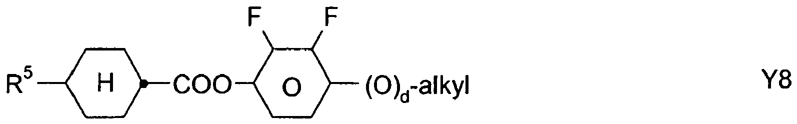 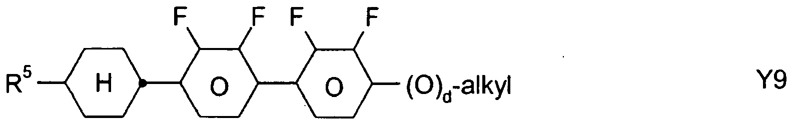 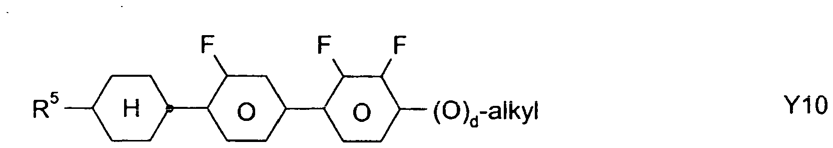 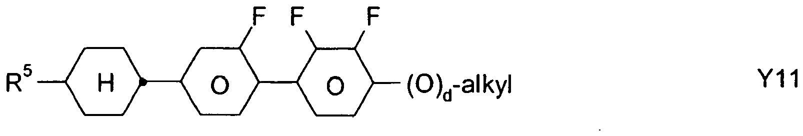 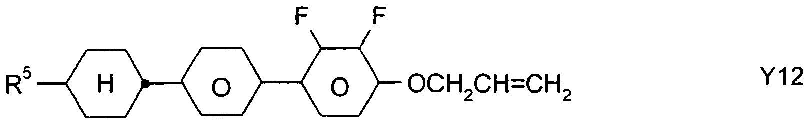 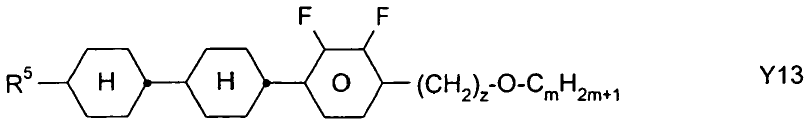 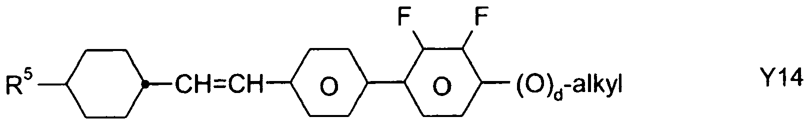 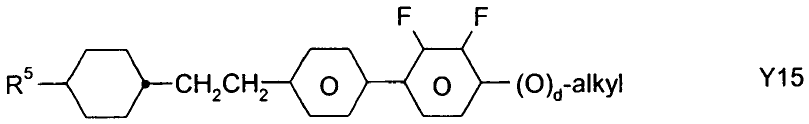 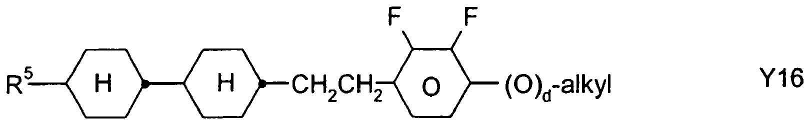 worin R⁵ eine der oben für R¹ angegebenen Bedeutungen besitzt, alkyl C₁₋₆-alkyl, d 0 oder 1, und z und m jeweils unabhängig voneinander eine ganze Zahl von 1 bis 6 bedeuten. R⁵ ist in diesen Verbindungen besonders bevorzugt C₁₋₆-alkyl oder -alkoxy oder C₂₋₆-alkenyl, d ist vorzugsweise 1. Vorzugsweise enthält das erfindungsgemäße FK-Medium eine oder mehrere Verbindungen der oben genannten Formeln in Mengen von ≥ 5 Gew.%.
g) FK-Medium, welches zusätzlich eine oder mehrere Biphenylverbindungen der folgenden Formeln enthält: 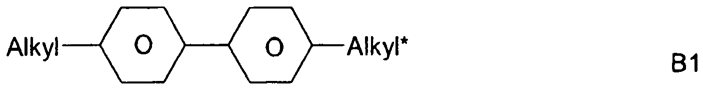 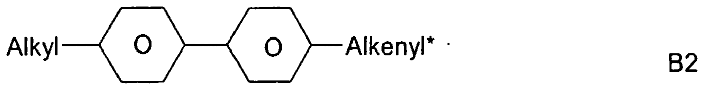 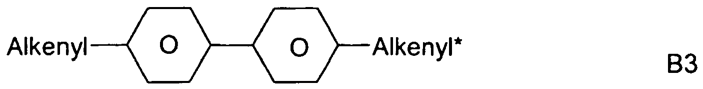
worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.

Der Anteil der Biphenyle der Formeln B1 bis B3 in der FK-Mischung beträgt vorzugsweise mindestens 3 Gew.%, insbesondere ≥ 5 Gew.%.

Die Verbindungen der Formel B2 sind besonders bevorzugt.

Die Verbindungen der Formel B1 bis B3 sind vorzugsweise ausgewählt aus den folgenden Unterformeln 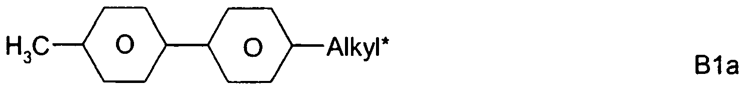 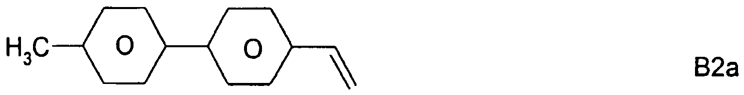 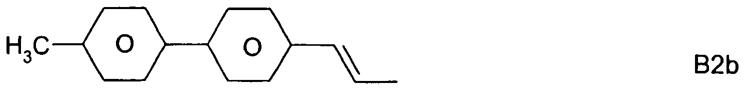 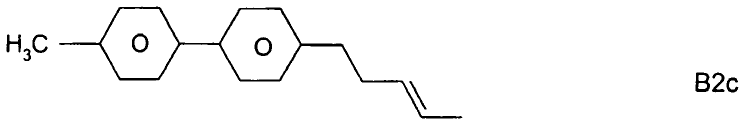 worin Alkyl* einen Alkylrest mit 1-6 C-Atomen bedeutet. Insbesondere bevorzugt enthält das erfindungsgemäße Medium eine oder mehrere Verbindungen der Formeln B1a und/oder B2c.
h) FK-Medium, welches zusätzlich eine oder mehrere Terphenylverbindungen der folgenden Formel enthält: 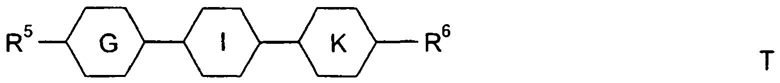 worin R⁵ und R⁶ jeweils unabhängig voneinander eine der oben für R¹ angegebenen Bedeutungen besitzen und 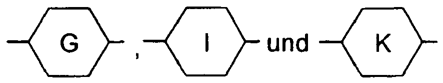 jeweils unabhängig voneinander 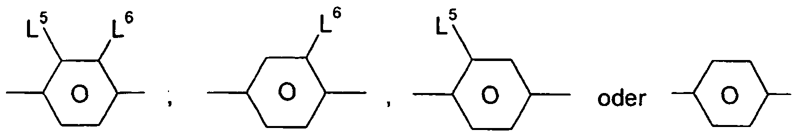 bedeuten, worin L⁵ F oder Cl, vorzugsweise F, und L⁶ F, Cl, OCF₃, CF₃, CH₃, CH₂F oder CHF₂, vorzugsweise F, bedeuten.

Die Verbindungen der Formel T sind vorzugsweise ausgewählt aus den folgenden Unterformeln 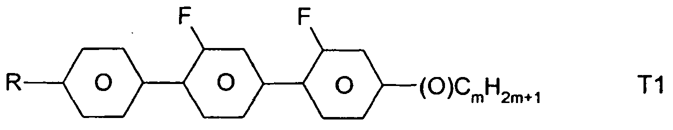 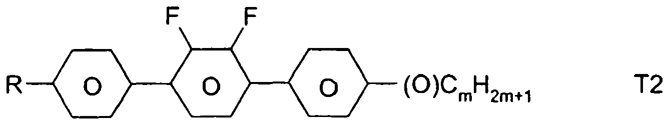 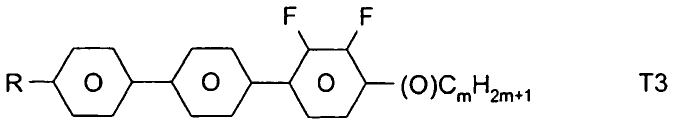 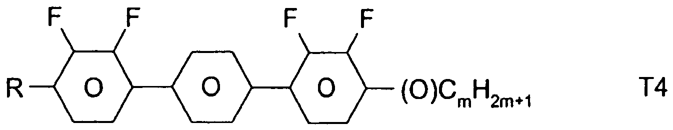 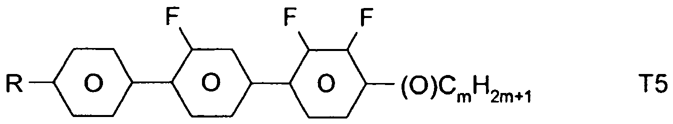 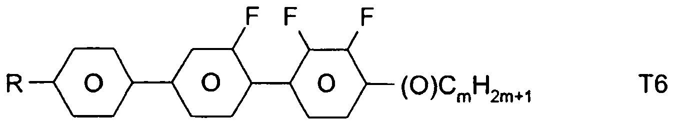 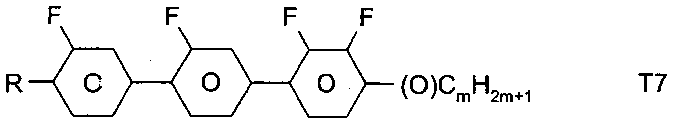 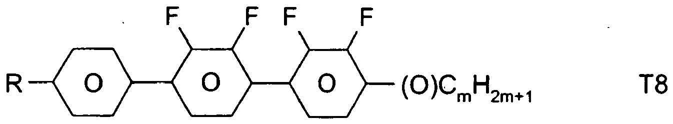 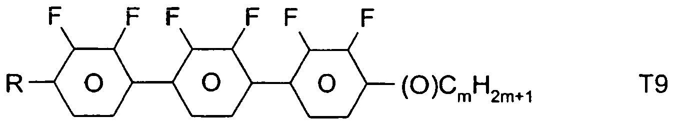 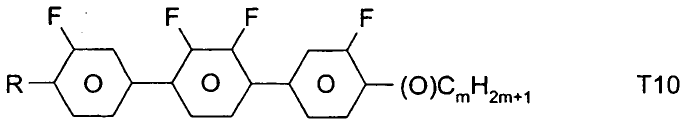 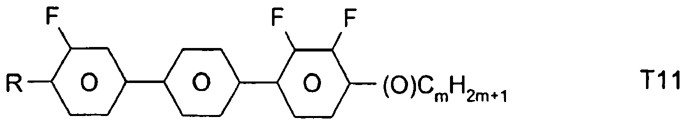 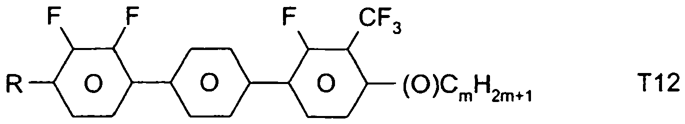 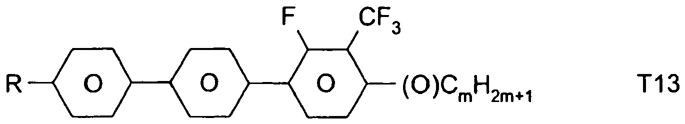 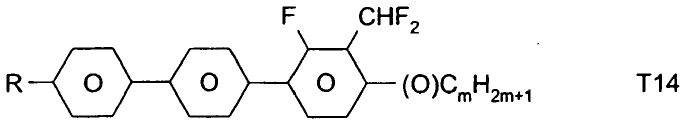 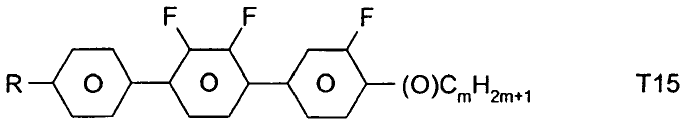 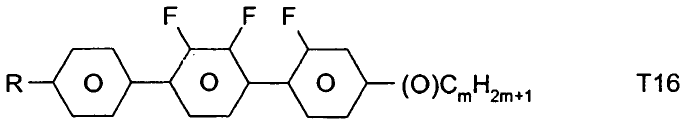 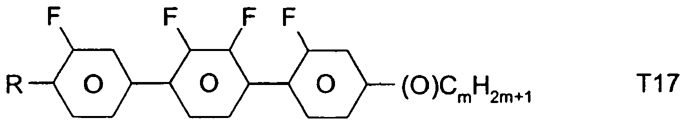 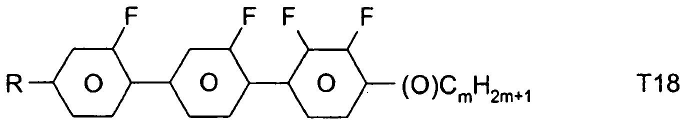 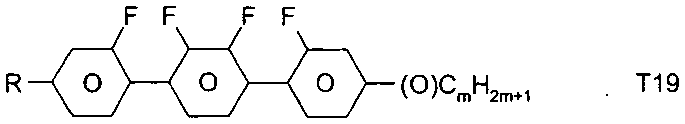 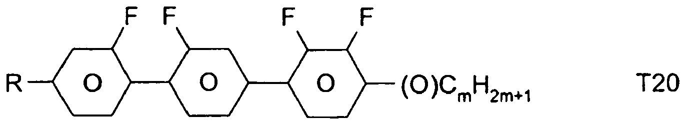 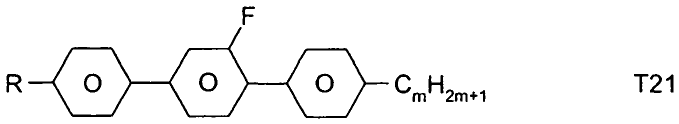 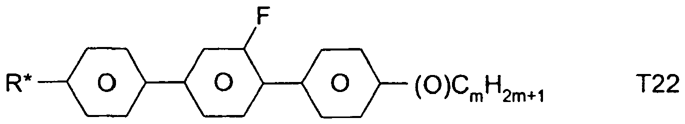 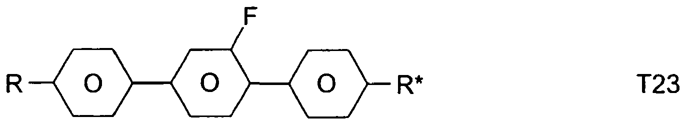 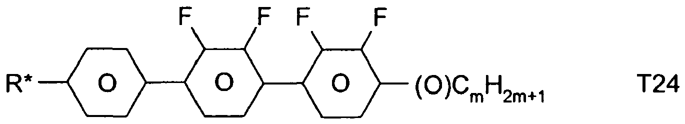 worin R einen geradkettigen Alkyl- oder Alkoxyrest mit 1-7 C-Atomen, R* einen geradkettigen Alkenylrest mit 2-7 C-Atomen, und m eine ganze Zahl von 1 bis 6 bedeutet. R* bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.

Vorzugsweise bedeutet R Methyl, Ethyl, Propyl, Butyl, Pentyl, Hexyl Methoxy, Ethoxy, Propoxy, Butoxy oder Pentoxy.

Das erfindungsgemäße FK-Medium enthält die Terphenyle der Formeln T und deren bevorzugte Unterformeln vorzugsweise in einer Menge von 2-30 Gew.%, insbesondere von 5-20 Gew.%.

Besonders bevorzugt sind Verbindungen der Formeln T1, T2, T3 und T21. In diesen Verbindungen bedeutet R vorzugsweise Alkyl, ferner Alkoxy jeweils mit 1-5 C-Atomen.

Vorzugsweise werden die Terphenyle in erfindungsgemäßen Mischungen eingesetzt, wenn der Δn-Wert der Mischung ≥ 0,1 sein soll. Bevorzugte Mischungen enthalten 2-20 Gew.% einer oder mehrerer Terphenyl-Verbindungen der Formel T, vorzugsweise ausgewählt aus der Gruppe der Verbindungen T1 bis T22.
i) FK-Medium, welches zusätzlich eine oder mehrere Verbindungen der folgenden Formeln enthält: 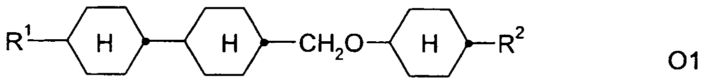 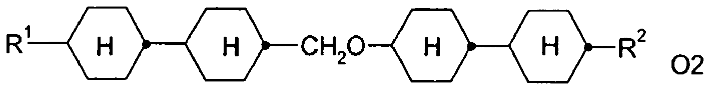 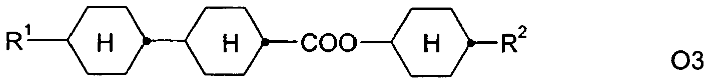 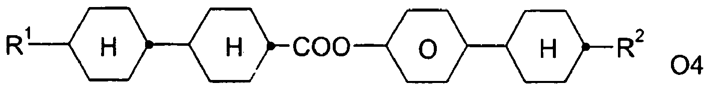 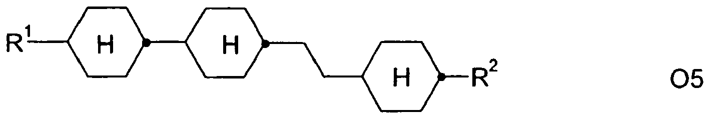 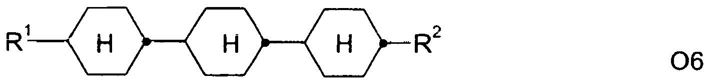 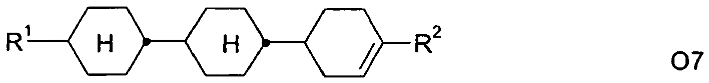 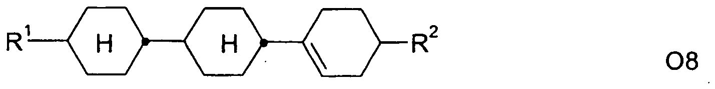 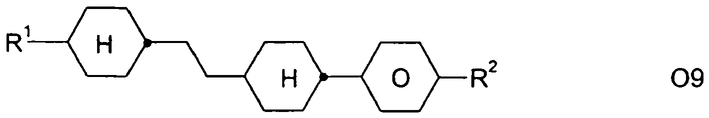 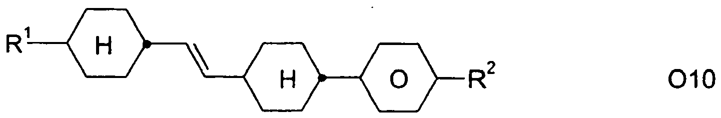 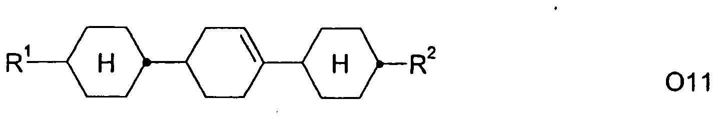 worin R¹ und R² die oben angegebenen Bedeutungen haben, und vorzugsweise jeweils unabhängig voneinander geradkettiges Alkyl oder Alkenyl bedeuten.

Bevorzugte Medien enthalten eine oder mehrere Verbindungen ausgewählt aus den Formeln 01, 03 und 04.
k) FK-Medium, welches zusätzlich eine oder mehrere Verbindungen der folgenden Formel enthält: 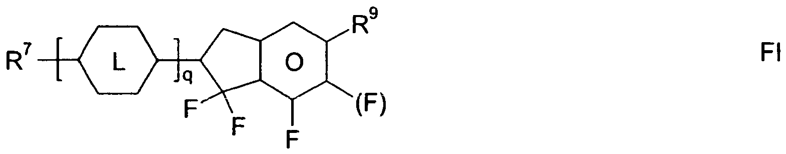 worin 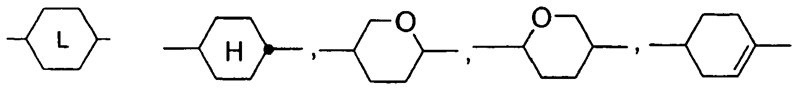 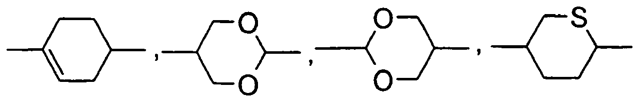 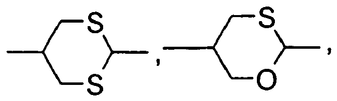 R⁹ H, CH₃, C₂H₅ oder n-C₃H₇ und q 1, 2 oder 3 bedeutet, und R⁷ eine der für R¹ angegebenen Bedeutungen hat, vorzugsweise in Mengen von > 3 Gew.%, insbesondere ≥ 5 Gew.%, und ganz besonders bevorzugt von 5-30 Gew.%.

Besonders bevorzugte Verbindungen der Formel IF sind ausgewählt aus den folgenden Unterformeln: 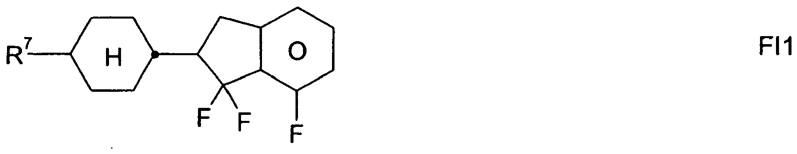 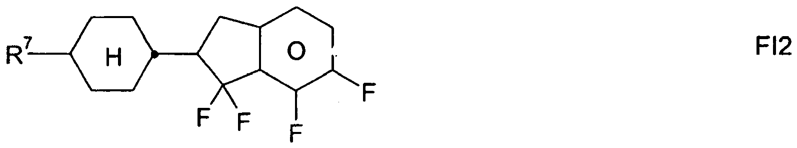 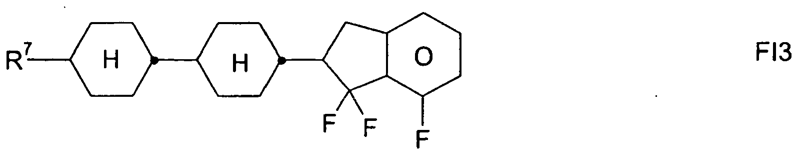 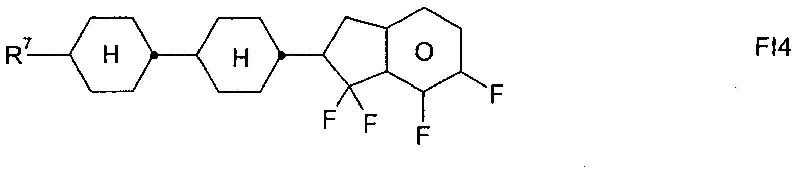 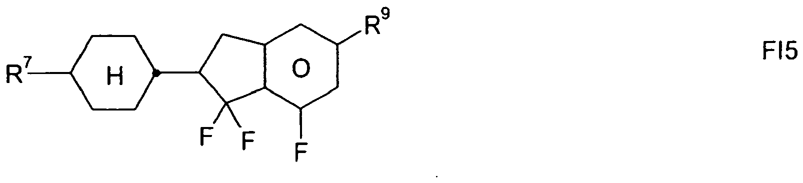 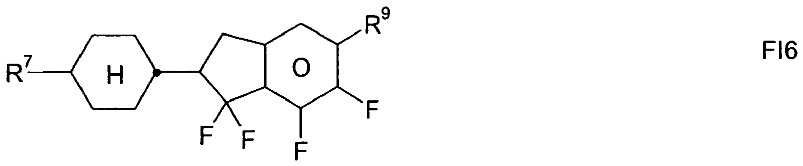 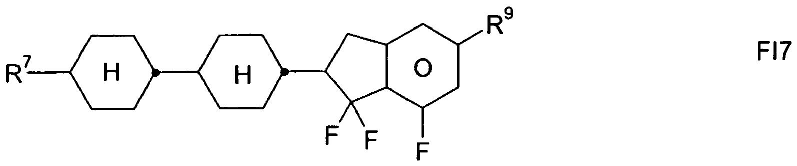 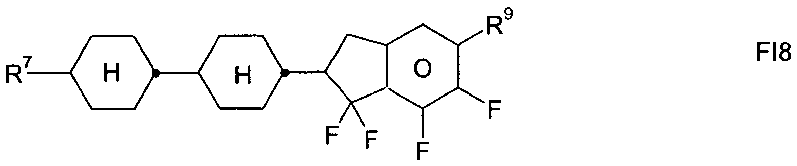 worin R⁷ vorzugsweise geradkettiges Alkyl bedeutet und R⁹ CH₃, C₂H₅ oder n-C₃H₇ bedeutet. Besonders bevorzugt sind die Verbindungen der Formel FI1, FI2 und FI3.
m) FK-Medium, welches zusätzlich eine oder mehrere Verbindungen der folgenden Formeln enthält: 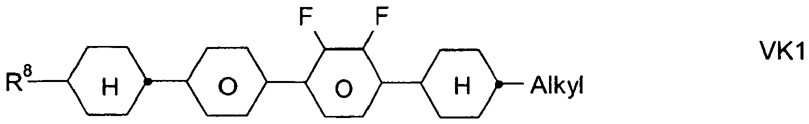 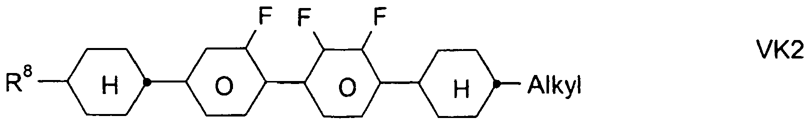 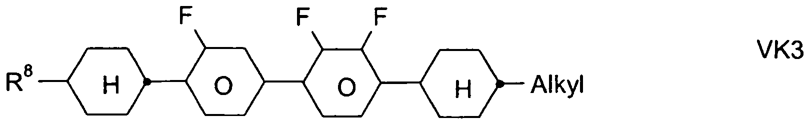 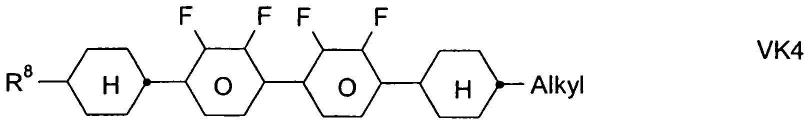 worin R⁸ die für R¹ angegebene Bedeutung hat und Alkyl einen geradkettigen Alkylrest mit 1-6 C-Atomen bedeutet.
n) FK-Medium, welches zusätzlich eine oder mehrere Verbindungen enthält, die eine Tetrahydronaphthyl- oder Naphthyl-Einheit aufweisen, wie z.B. die Verbindungen ausgewählt aus den folgenden Formeln: 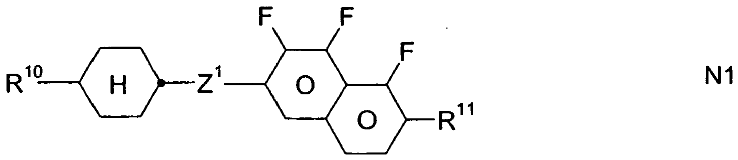 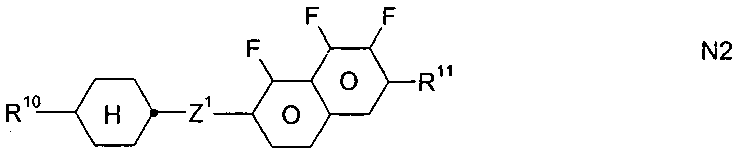 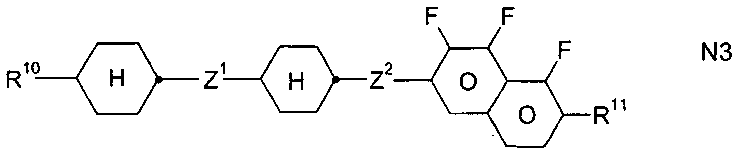 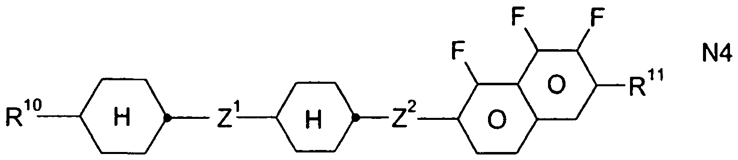 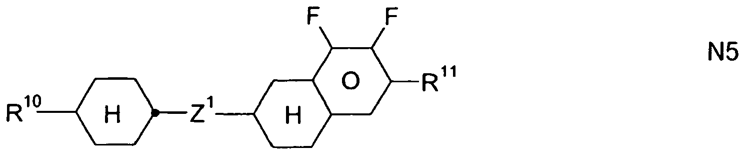 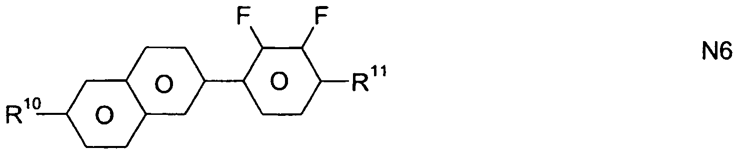 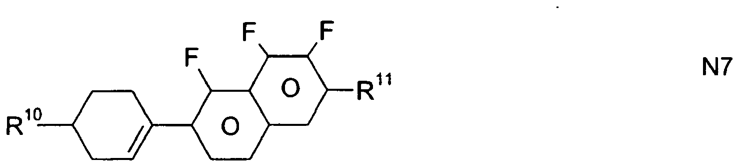 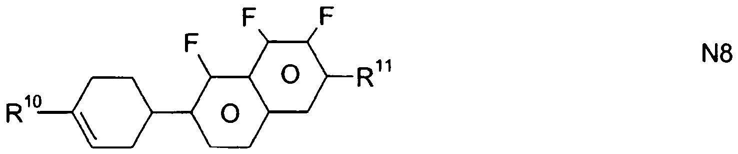 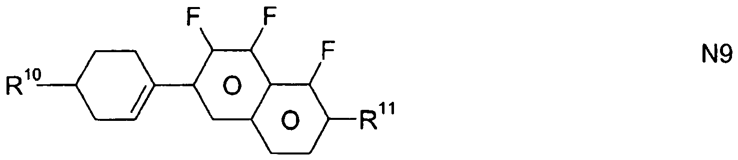 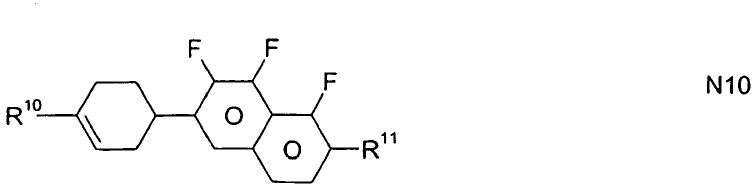 worin R¹⁰ und R¹¹ jeweils unabhängig voneinander eine der für R¹ angegebenen Bedeutungen haben, vorzugsweise geradkettiges Alkyl, geradkettiges Alkoxy oder geradkettiges Alkenyl bedeuten, und Z, Z¹ und Z² jeweils unabhängig voneinander -C₂H₄-, -CH=CH-, - (CH₂)₄-, -(CH₂)₃O-, -O(CH₂)₃-, -CH=CHCH₂CH₂-, -CH₂CH₂CH=CH-, - CH₂O-, -OCH₂-, -COO-, -OCO-, -C₂F₄-, -CF=CF-, -CF=CH-, -CH=CF-, -CH₂- oder eine Einfachbindung bedeuten.
o) FK-Medium, welches zusätzlich eine oder mehrere eine oder mehrere Difluordibenzochromane und/oder Chromane der folgenden Formeln enthält: 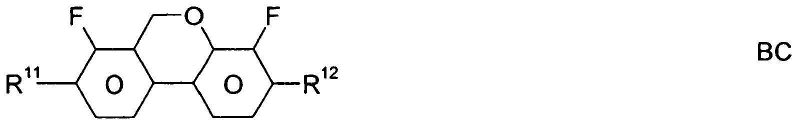 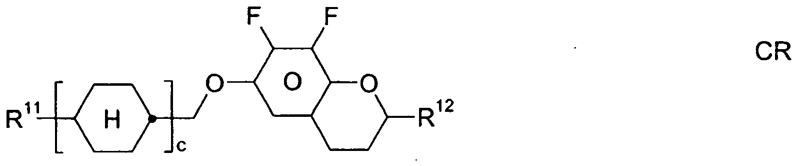 worin R¹¹ und R¹² jeweils unabhängig voneinander die oben angegebene Bedeutung aufweisen, und c 0 oder 1 bedeutet, vorzugsweise in Mengen von 3 bis 20 Gew.%, insbesondere in Mengen von 3 bis 15 Gew.%.

Besonders bevorzugte Verbindungen der Formeln BC und CR sind ausgewählt aus den folgenden Unterformeln: 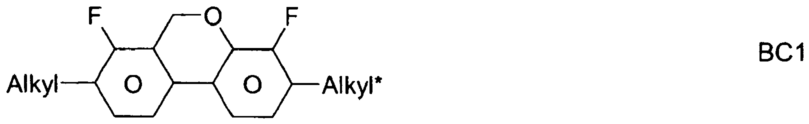 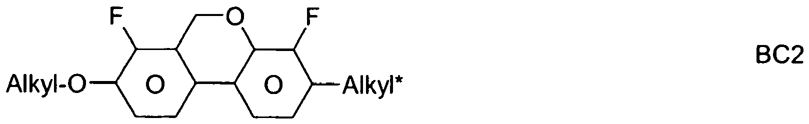 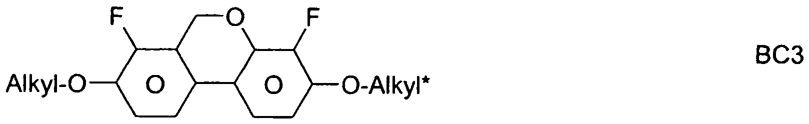 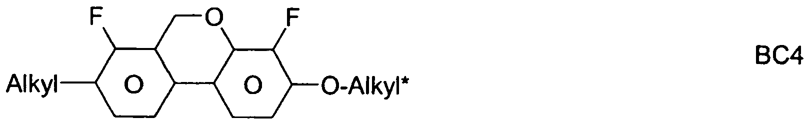 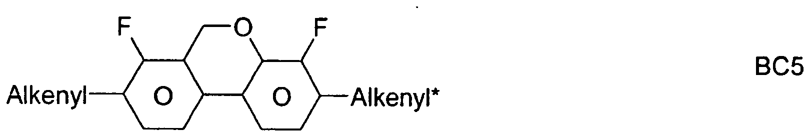 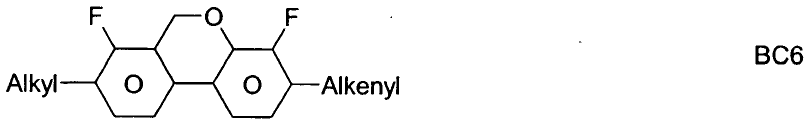 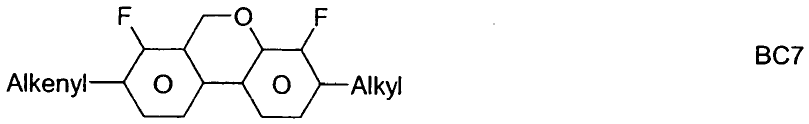 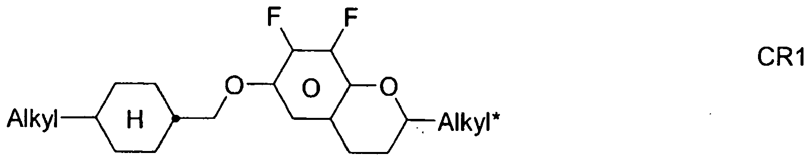 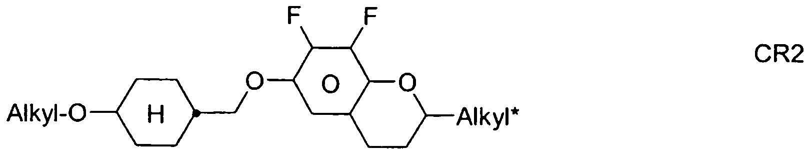 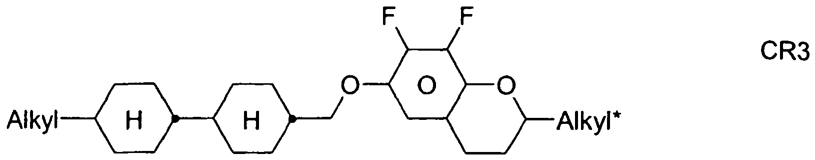 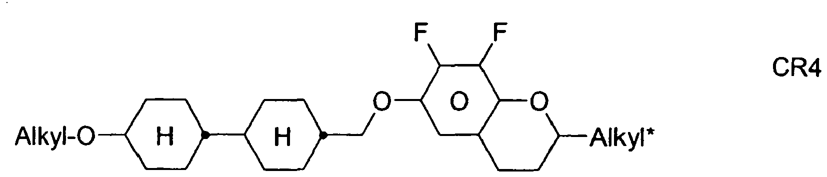 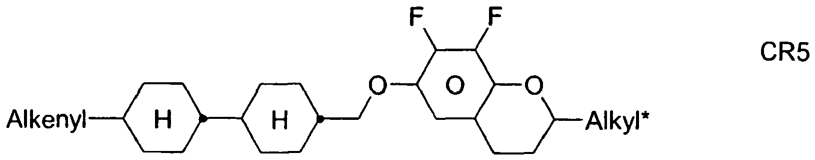 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.

Ganz besonders bevorzugt sind Mischungen enthaltend eine, zwei oder drei Verbindungen der Formel BC-2.
p) FK-Medium, welches zusätzlich eine oder mehrere fluorierte Phenanthrene oder Dibenzofurane der folgenden Formeln enthält: 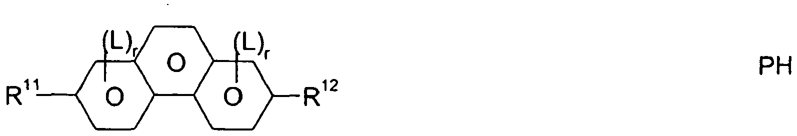 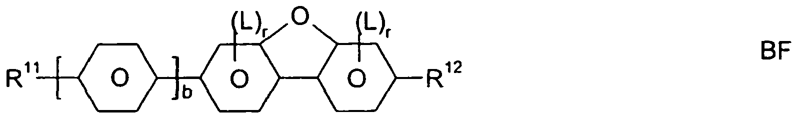 worin R¹¹ und R¹² jeweils unabhängig voneinander die oben angegebenen Bedeutungen besitzen, b 0 oder 1, L F und r 1, 2 oder 3 bedeutet.

Besonders bevorzugte Verbindungen der Formeln PH und BF sind ausgewählt aus den folgenden Unterformeln: 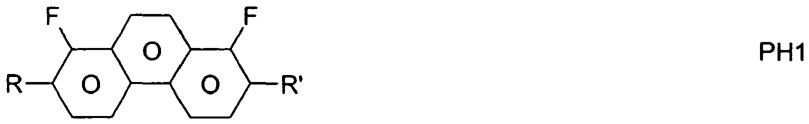 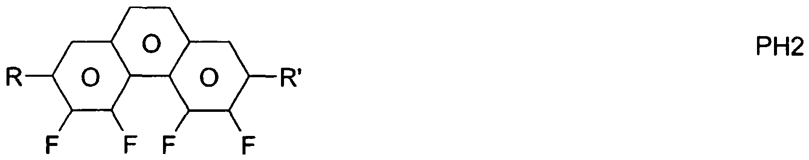 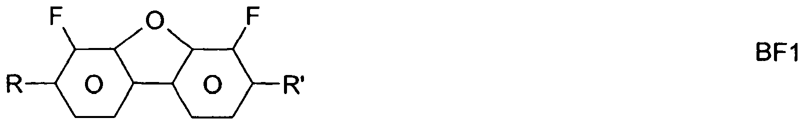 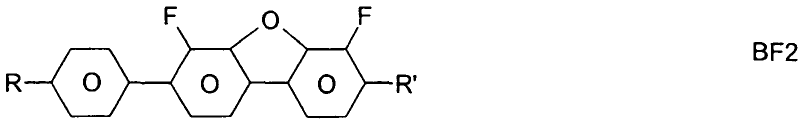 worin R und R' jeweils unabhängig voneinander einen geradkettigen Alkyl- oder Alkoxyrest mit 1-7 C-Atomen bedeuten.
q) FK-Medium, vorzugsweise zur Verwendung in PSA-OCB-Anzeigen, welches eine oder mehrere Verbindungen der folgenden Formeln enthält: 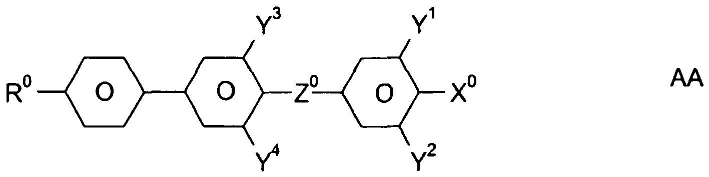 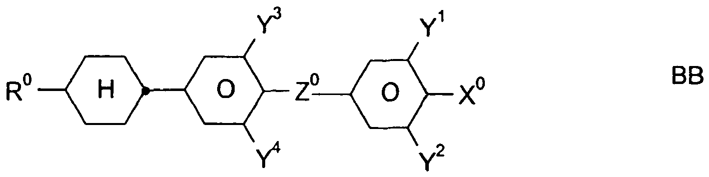 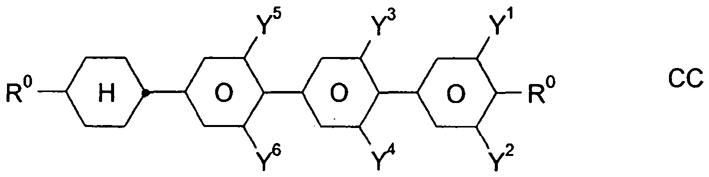 worin
   - R⁰: bei jedem Auftreten gleich oder verschieden n-Alkyl, Alkoxy, Oxaalkyl, Fluoralkyl oder Alkenyl mit jeweils bis zu 9 C-Atomen,
   - X⁰: F, Cl oder jeweils halogeniertes Alkyl, Alkenyl, Alkenyloxy oder Alkoxy mit jeweils bis zu 6 C-Atomen,
   - Z⁰: -CF₂O- oder eine Einfachbindung,
   - Y¹⁻⁶: jeweils unabhängig voneinander H oder F,
   bedeuten.

X⁰ ist vorzugsweise F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CCIF₂, OCCIFCF₂CF₃ oder CH=CF₂, besonders bevorzugt F oder OCF₃.

Die Verbindungen der Formel AA sind vorzugsweise ausgewählt aus den folgenden Formeln: 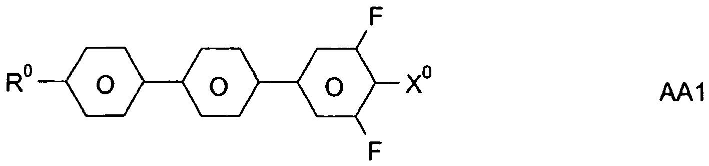 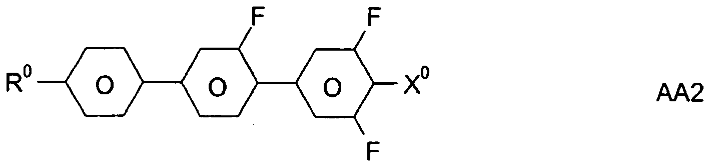 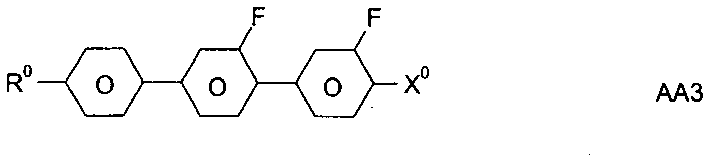 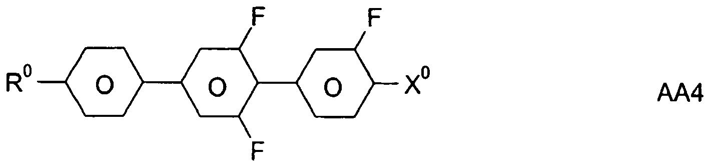 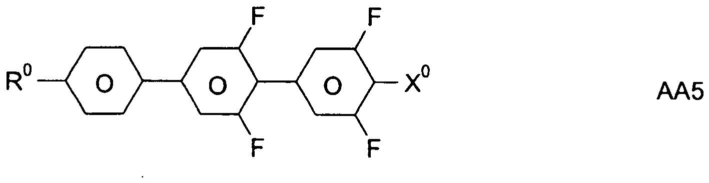 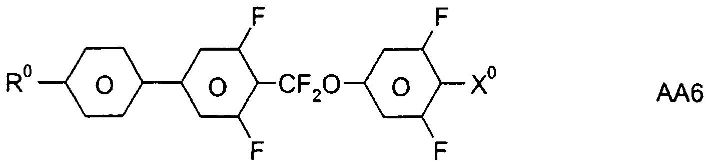 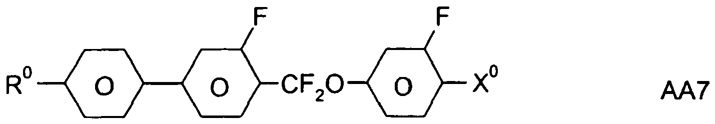 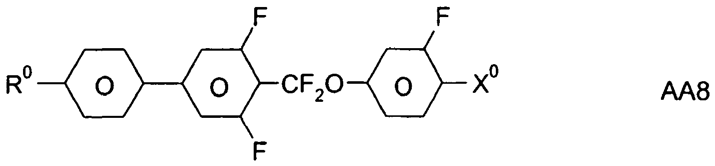 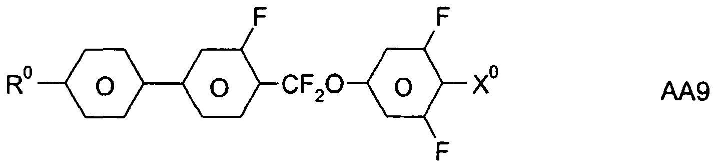 worin R⁰ und X⁰ die oben angegebene Bedeutung besitzen, und X⁰ vorzugsweise F bedeutet. Besonders bevorzugt sind Verbindungen der Formeln AA2 und AA6.

Die Verbindungen der Formel BB sind vorzugsweise ausgewählt aus den folgenden Formeln: 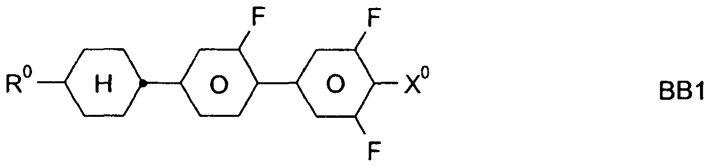 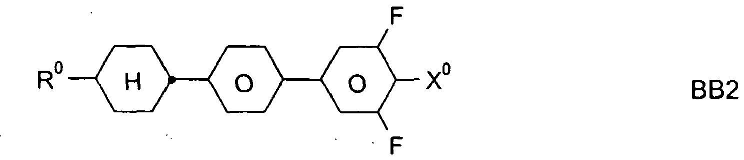 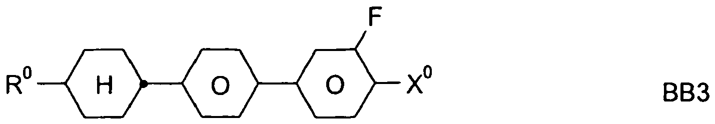 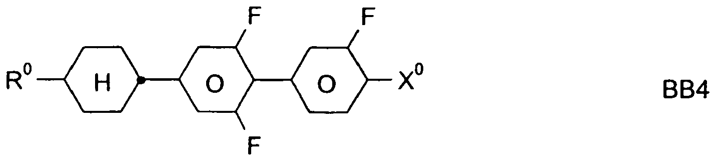 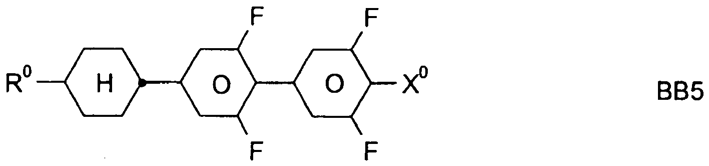 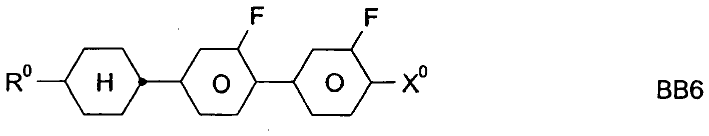 worin R⁰ und X⁰ die oben angegebene Bedeutung besitzen, und X⁰ vorzugsweise F bedeutet. Besonders bevorzugt sind Verbindungen der Formeln BB1, BB2 und BB5.

Die Verbindungen der Formel CC sind vorzugsweise ausgewählt aus den folgenden Formeln: 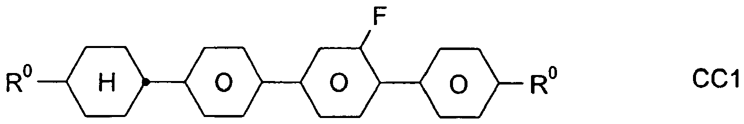 worin R⁰ bei jedem Auftreten gleich oder verschieden die oben angegebene Bedeutung besitzt, und vorzugsweise Alkyl mit 1 bis 6 C-Atomen bedeutet.
r) FK-Medium, welches außer den polymerisierbaren Verbindungen der Formel I oder deren Unterformeln sowie den Comonomeren keine Verbindungen enthält, die eine endständige Vinyl- oder Vinyloxygruppe (-CH=CH₂, -O-CH=CH₂) aufweisen.
s) FK-Medium, welches 1 bis 5, vorzugsweise 1, 2 oder 3 polymerisierbare Verbindungen enthält.
t) FK-Medium, worin der Anteil an polymerisierbaren Verbindungen im Gesamtgemisch 0,05 bis 5 %, vorzugsweise 0,1 bis 1 % beträgt.
u) FK-Medium, welches 1 bis 8, vorzugsweise 1 bis 5 Verbindungen der Formel CY1, CY2, PY1 und/oder PY2 enthält. Der Anteil dieser Verbindungen im Gesamtgemisch beträgt vorzugsweise 5 bis 60 %, besonders bevorzugt 10 bis 35 %. Der Gehalt dieser einzelnen Verbindungen beträgt vorzugsweise jeweils 2 bis 20 %.
v) FK-Medium, welches 1 bis 8, vorzugsweise 1 bis 5 Verbindungen der Formel CY9, CY10, PY9 und/oder PY10 enthält. Der Anteil dieser Verbindungen im Gesamtgemisch beträgt vorzugsweise 5 bis 60 %, besonders bevorzugt 10 bis 35 %. Der Gehalt dieser einzelnen Verbindungen beträgt vorzugsweise jeweils 2 bis 20 %.
w) FK-Medium, welches 1 bis 10, vorzugsweise 1 bis 8 Verbindungen der Formel ZK enthält, insbesondere Verbindungen der Formel ZK1, ZK2 und/oder ZK6. Der Anteil dieser Verbindungen im Gesamtgemisch beträgt vorzugsweise 3 bis 25 %, besonders bevorzugt 5 bis 45 %. Der Gehalt dieser einzelnen Verbindungen beträgt vorzugsweise jeweils 2 bis 20 %.
x) FK-Medium, worin der Anteil an Verbindungen der Formel CY, PY und ZK im Gesamtgemisch mehr als 70 %, vorzugsweise mehr als 80 % beträgt.
y) FK-Medium, welches zusätzlich ein oder mehrere, vorzugsweise niedermolekulare und/oder nicht polymerisierbare, chirale Dotierstoffe enthält, besonders bevorzugt ausgewählt aus der untenstehenden Tabelle B, vorzugsweise in den dort angegebenen Konzentrationsbereichen.

Die Kombination von Verbindungen der oben genannten bevorzugten Ausführungsformen a)-x) mit den oben beschriebenen polymerisierten Verbindungen bewirkt in den erfindungsgemäßen FK-Medien niedrige Schwellenspannungen, niedrige Rotationsviskositäten und sehr gute Tieftemperaturstabilitäten bei gleichbleibend hohen Klärpunkten und hohen HR-Werten, und erlaubt die Einstellung eines Pretilt-Winkels in PS(A)-Anzeigen. Insbesondere zeigen die FK-Medien in PS(A)-Anzeigen im Vergleich zu den Medien aus dem Stand der Technik deutlich verringerte Schaltzeiten, insbesondere auch der Graustufenschaltzeiten.

Vorzugsweise weist die Flüssigkristallmischung einen nematischen Phasenbereich von mindestens 80 K, besonders bevorzugt von mindestens 100 K, und eine Rotationsviskosität von nicht mehr als 250, vorzugsweise nicht mehr als 200 mPa·s, bei 20°C auf.

Erfindungsgemäße FK-Medien zur Verwendung in Anzeigen des VA-Typs weisen eine negative dielektrische Anisotropie Δε auf, vorzugsweise von etwa -0,5 bis -7,5, insbesondere von etwa -2,5 bis -5,5 bei 20°C und 1 kHz.

Erfindungsgemäße FK-Medien zur Verwendung in Anzeigen des OCB-Typs weisen eine positive dielektrische Anisotropie Δε auf, vorzugsweise von etwa +7 bis +17 bei 20°C und 1 kHz.

Die Doppelbrechung Δn in erfindungsgemäßen FK-Medien zur Verwendung in Anzeigen des VA-Typs liegt vorzugsweise unter 0,16, besonders bevorzugt zwischen 0,06 und 0,14, insbesondere zwischen 0,07 und 0,12.

Die Doppelbrechung Δn in erfindungsgemäßen FK-Medien zur Verwendung in Anzeigen des OCB-Typs liegt vorzugsweise zwischen 0,14 und 0,22, insbesondere zwischen 0,16 und 0,22.

Die Dielektrika können auch weitere, dem Fachmann bekannte und in der Literatur beschriebene Zusätze enthalten. Beispielsweise können 0 bis 15 Gew.-% pleochroitische Farbstoffe zugesetzt werden, ferner Nanopartikel, Leitsalze, vorzugsweise Ethyl-dimethyldodecylammonium-4-hexoxy-benzoat, Tetrabutylammoniumtetraphenylborat oder Komplexsalze von Kronenethern (vgl. z.B. Haller et al., Mol. Cryst. Liq. Cryst. 24, 249-258 (1973)) zur Verbesserung der Leitfähigkeit, oder Substanzen zur Veränderung der dielektrischen Anisotropie, der Viskosität und/oder der Orientierung der nematischen Phasen. Derartige Substanzen sind z.B. in DE-A 22 09 127, 22 40 864, 23 21 632, 23 38 281, 24 50 088, 26 37 430 und 28 53 728 beschrieben.

Die einzelnen Komponenten der bevorzugten Ausführungsformen a)-x) der erfindungsgemäßen FK-Medien sind entweder bekannt, oder ihre Herstellungsweisen sind für den einschlägigen Fachmann aus dem Stand der Technik ohne weiteres abzuleiten, da sie auf in der Literatur beschriebenen Standardverfahren basieren. Entsprechende Verbindungen der Formel CY werden beispielsweise in EP-A-0 364 538 beschrieben. Entsprechende Verbindungen der Formel ZK werden beispielsweise in DE-A-26 36 684 und DE-A-33 21 373 beschrieben.

Die Herstellung der erfindungsgemäß verwendbaren FK-Medien erfolgt in an sich üblicher Weise, beispielsweise indem man eine oder mehrere der oben genannten Verbindungen mit einer oder mehreren polymerisierbaren Verbindungen wie oben definiert, und ggf. mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Das Verfahren zur Herstellung der erfindungsgemäßen FK-Medien ist ein weiterer Gegenstand der Erfindung.

Es versteht sich für den Fachmann von selbst, dass die erfindungsgemäßen FK-Medien auch Verbindungen enthalten können, worin beispielsweise H, N, O, Cl, F durch die entsprechenden Isotope ersetzt sind.

Der Aufbau der erfindungsgemäßen FK-Anzeigen entspricht der für PS(A)-Anzeigen üblichen Geometrie, wie er im eingangs zitierten Stand der Technik beschrieben ist. Es sind Geometrien ohne Protrusions bevorzugt, insbesondere diejenigen, bei denen darüber hinaus die Elektrode auf der Colour Filter-Seite unstrukturiert ist und lediglich die Elektrode auf der TFT-Seite Schlitze aufweist. Besonders geeignete und bevorzugte Elektrodenstrukturen für PSA-VA-Anzeigen sind beispielsweise in US 2006/0066793 A1 beschrieben.

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschaftskombinationen zugänglich sind.

Folgende Abkürzungen werden verwendet:
(n, m, z: jeweils unabhängig voneinander 1, 2, 3, 4, 5 oder 6)

**Tabelle A**

| | |
|---|---|
| 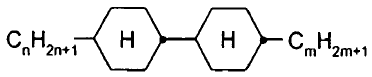 | 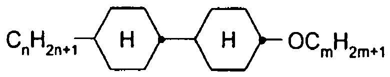 |
| CCH-nm | CCH-nOm |
| 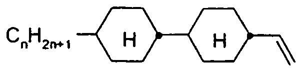 | 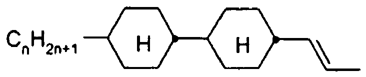 |
| CC-n-V | CC-n-V1 |
| 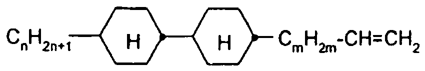 | 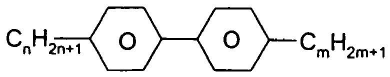 |
| CC-n-mV | PP-n-m |
| 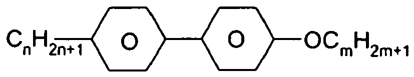 | 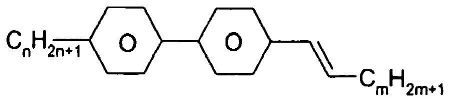 |
| PP-n-Om | PP-n-Vm |
| 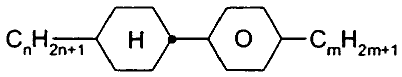 | 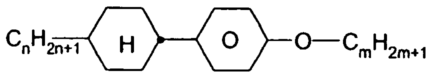 |
| PCH-nm | PCH-nOm |
| 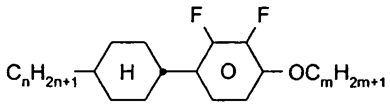 | 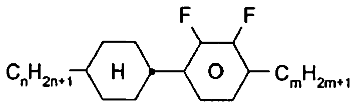 |
| CY-n-Om | CY-n-m |
| 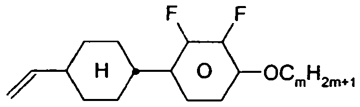 | 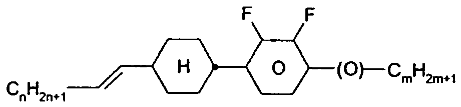 |
| CY-V-Om | CY-nV-(O)m |
| 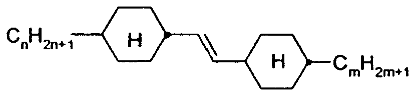 | 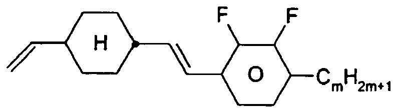 |
| CVC-n-m | CVY-V-m |
| 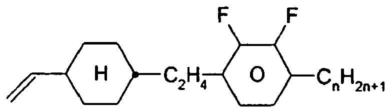 | 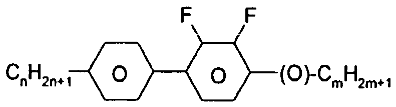 |
| CEY-V-m | PY-n-(O)m |
| 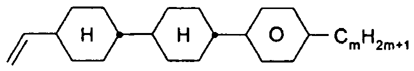 | 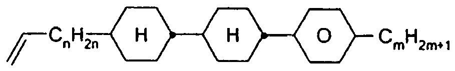 |
| CCP-V-m | CCP-Vn-m |
| 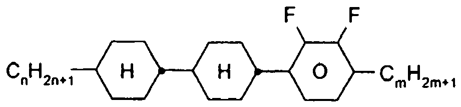 | 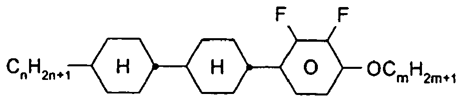 |
| CCY-n-m | CCY-n-Om |
| 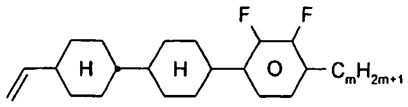 | 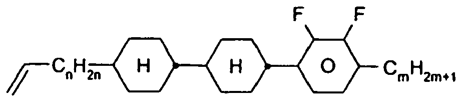 |
| CCY-V-m | CCY-Vn-m |
| 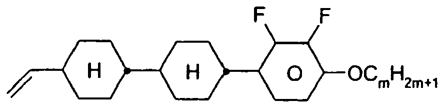 | 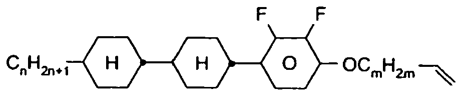 |
| CCY-V-Om | CCY-n-OmV |
| 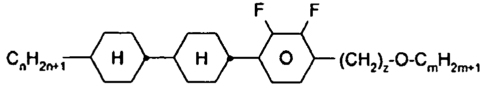 | 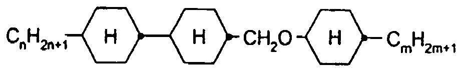 |
| CCY-n-zOm | CCOC-n-m |
| 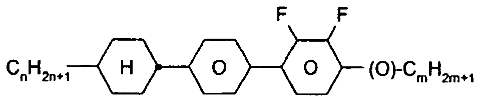 | 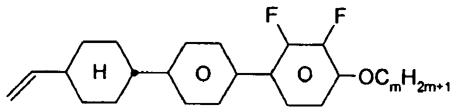 |
| CPY-n-(O)m | CPY-V-Om |
| 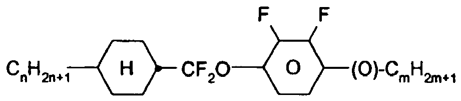 | 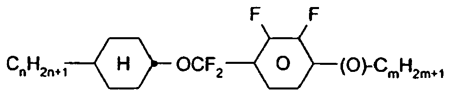 |
| CQY-n-(O)m | CQIY-n-(O)m |
| 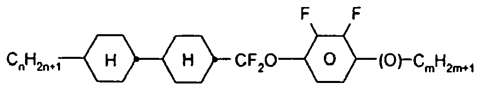 | 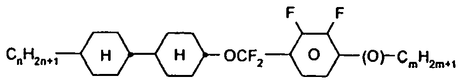 |
| CCQY-n-(O)m | CCQIY-n-(O)m |
| 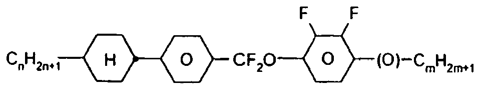 | 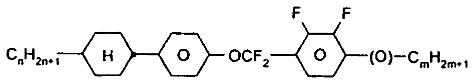 |
| CPQY-n-(O)m | CPQIY-n-Om |
| 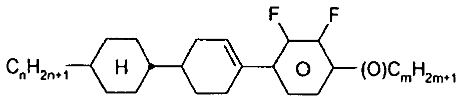 | 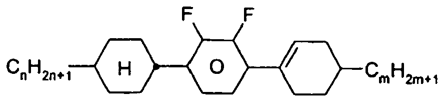 |
| CLY-n-(O)m | CYLI-n-m |
| 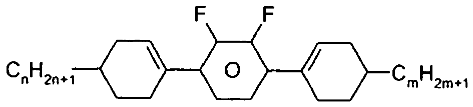 | 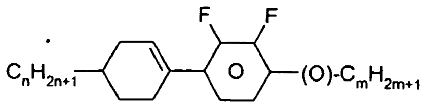 |
| LYLI-n-m | LY-n-(O)m |
| 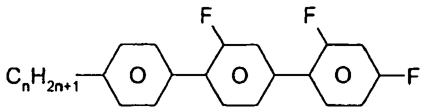 | 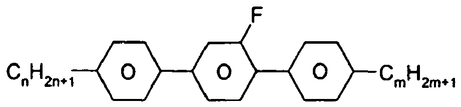 |
| PGIGI-n-F | PGP-n-m |
| 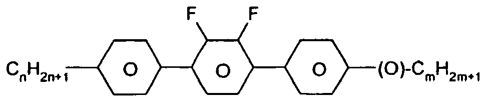 | 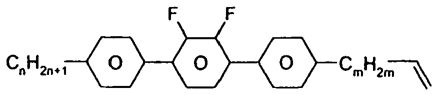 |
| PYP-n-(O)m | PYP-n-mV |
| 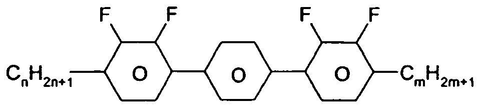 | 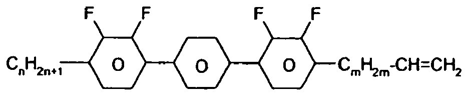 |
| YPY-n-m | YPY-n-mV |
| 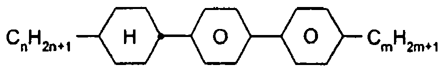 | 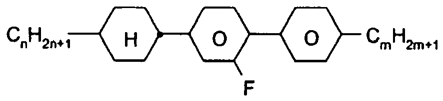 |
| BCH-nm | BCH-nmF |
| 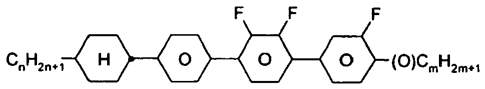 | 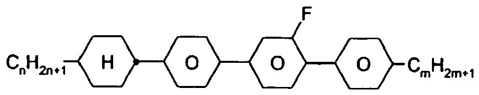 |
| CPYP-n-(O)m | CPGP-n-m |
| 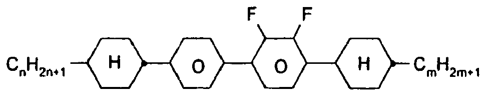 | 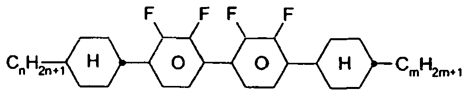 |
| CPYC-n-m | CYYC-n-m |
| 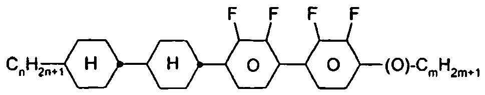 | 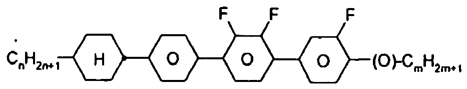 |
| CCYY-n-m | CPYG-n-(O)m |
| 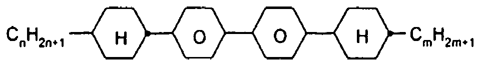 | 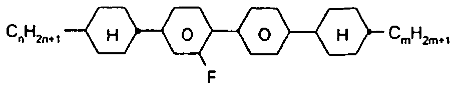 |
| CBC-nm | CBC-nmF |
| 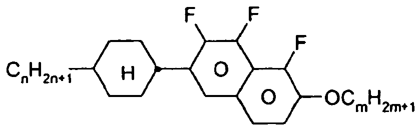 | 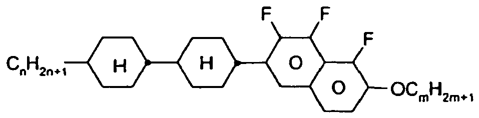 |
| CNap-n-Om | CCNap-n-Om |
| 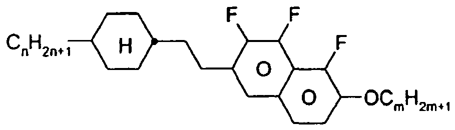 | 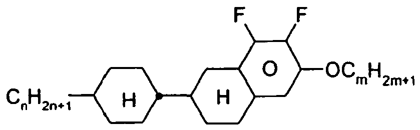 |
| CENap-n-Om | CTNap-n-Om |
| 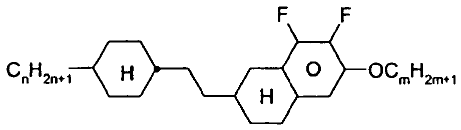 | 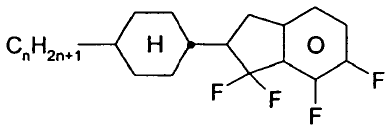 |
| CETNap-n-Om | CK-n-F |
| 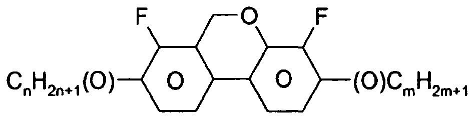 | 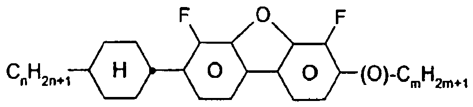 |
| DFDBC-n(O)-(O)m | C-DFDBF-n-(O)m |

In einer bevorzugten Ausführungsform der vorliegenden Erfindung enthalten die erfindungsgemäßen FK-Medien eine oder mehrere Verbindungen ausgewählt aus der Guppe bestehend aus Verbindungen der Tabelle A.

**Tabelle B**

| | |
|---|---|
| In der Tabelle B werden mögliche Dotierstoffe angegeben, die den erfindungsgemäßen FK-Medien zugesetzt werden können. | |
| 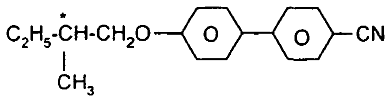 | 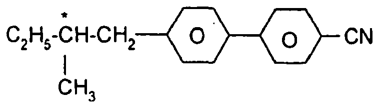 |
| **C 15** | **CB 15** |
| 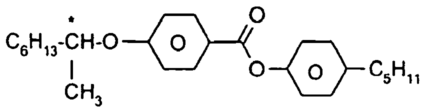 | 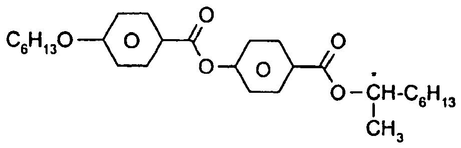 |
| **CM 21** | **R/S-811** |
| 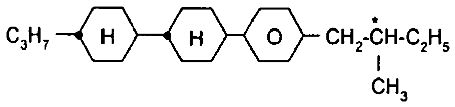 | 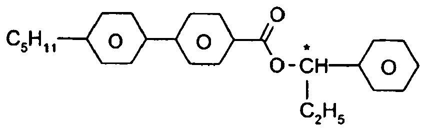 |
| **CM 44** | **CM 45** |
| 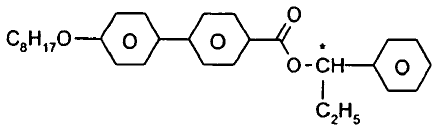 | 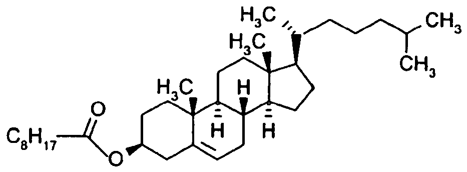 |
| **CM 47** | **CN** |
| 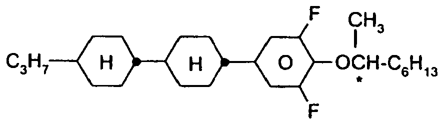 | 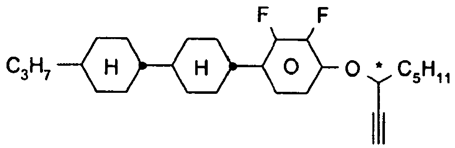 |
| **R/S-2011** | **R/S-3011** |
| 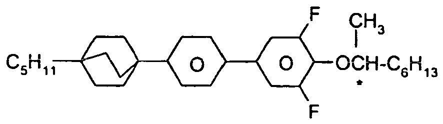 | 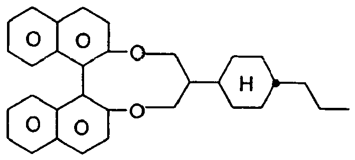 |
| **R/S-4011** | **R/S-5011** |
| 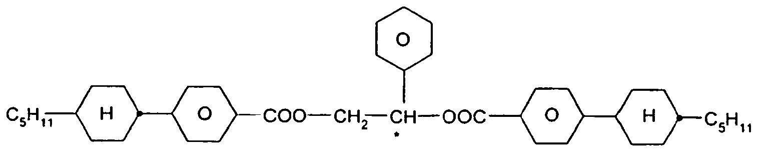 | |
| **R/S-1011** | |

Vorzugsweise enthalten die FK-Medien 0 bis 10 Gew.%, insbesondere 0,01 bis 5 Gew.% und besonders bevorzugt 0,1 bis 3 Gew.% an Dotierstoffen. Vorzugsweise enthalten die FK-Medien einen oder mehrere Dotierstoffe ausgewählt aus der Guppe bestehend aus Verbindungen der Tabelle B.

**Tabelle C**

| | |
|---|---|
| In der Tabelle C werden mögliche erfindungsgemäßen FK-Medien (n bedeutet hier eine ganze Zahl Stabilisatoren angegeben, die den zugesetzt werden können. von 1 bis 12) | |
| 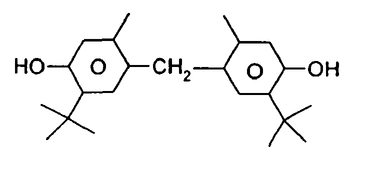 | 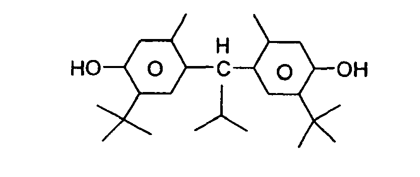 |
| 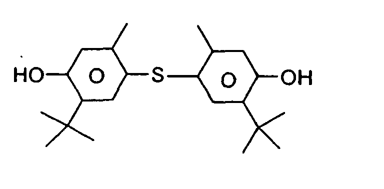 | 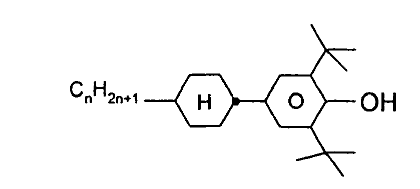 |
| 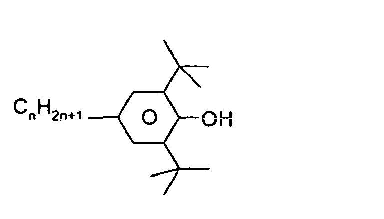 | 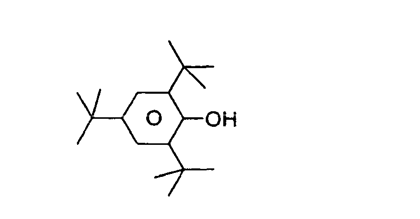 |
| 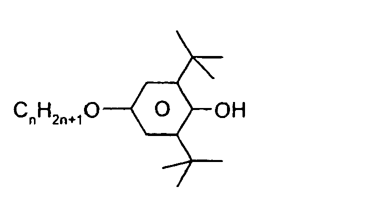 | 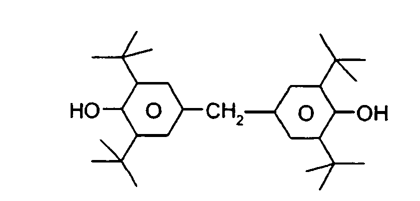 |
| 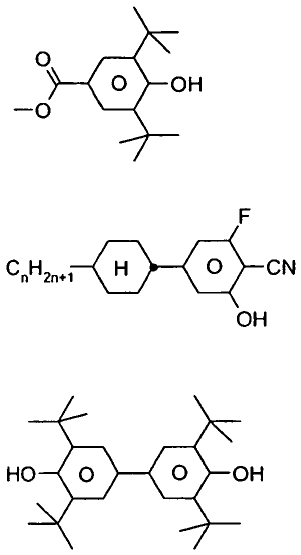 | 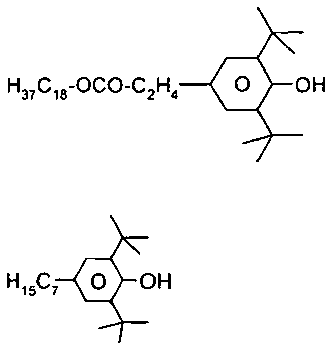 |
| | 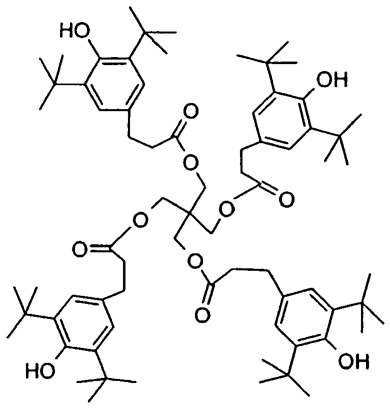 |
| 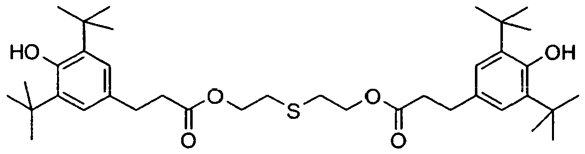 | |
| 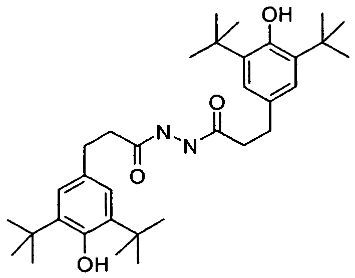 | 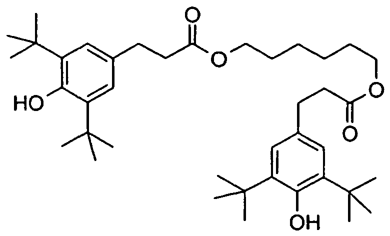 |
| 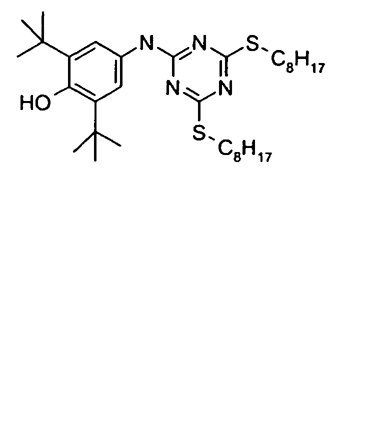 | 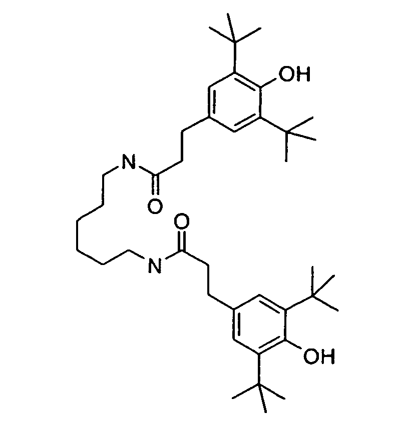 |
| 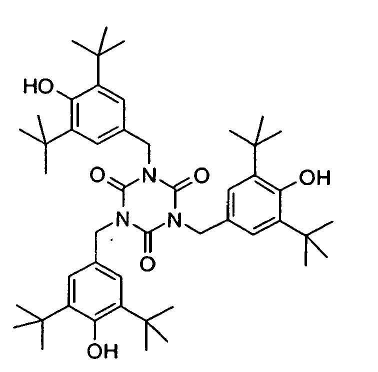 | 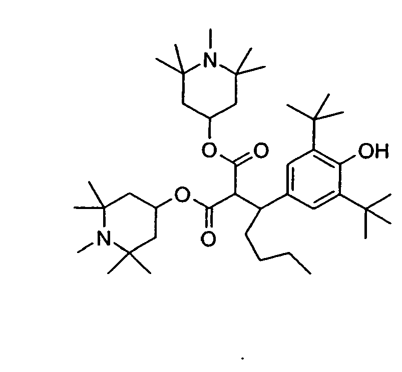 |
| 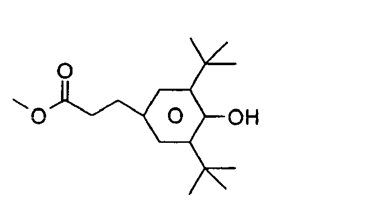 | 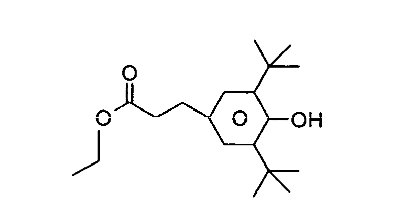 |
| 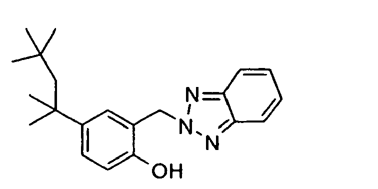 | 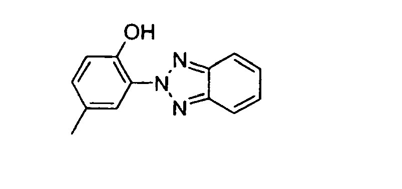 |
| 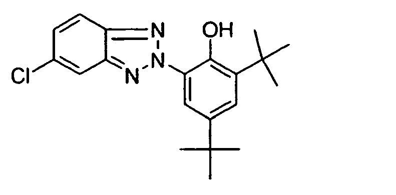 | 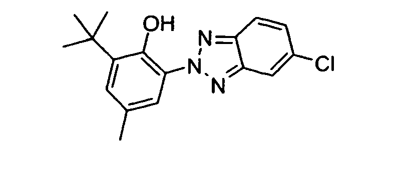 |
| 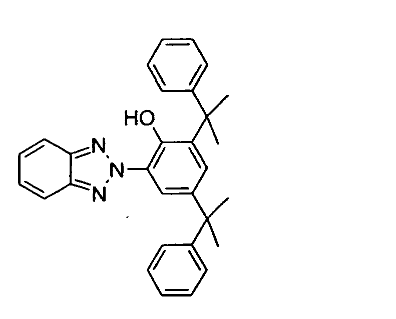 | 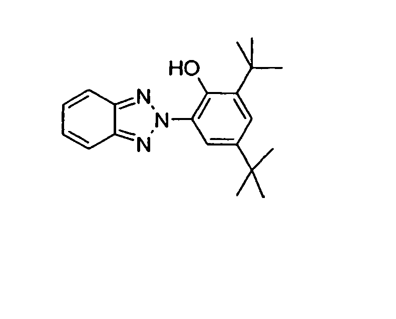 |
| 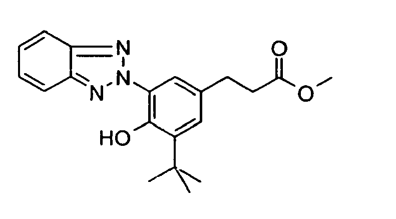 | 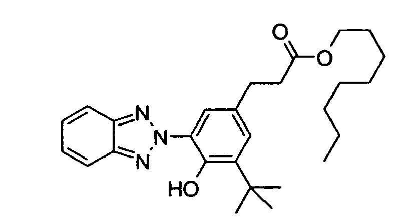 |
| 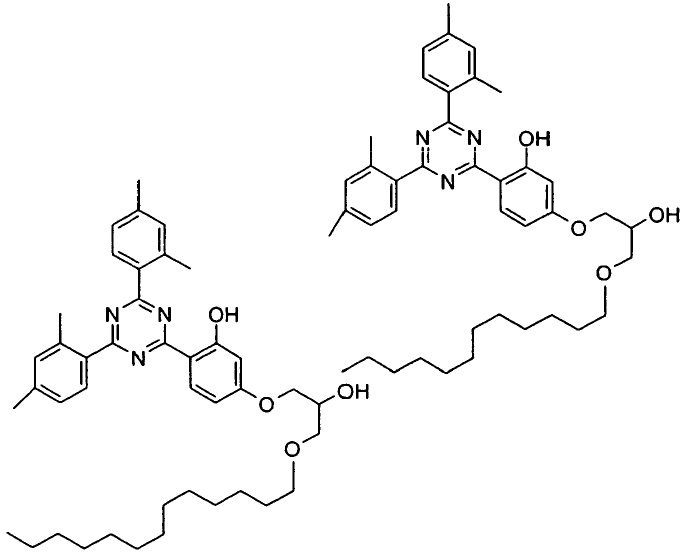 | |
| 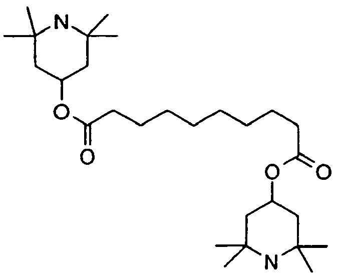 | 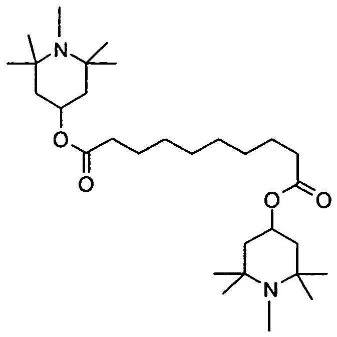 |

Vorzugsweise enthalten die FK-Medien 0 bis 10 Gew.%, insbesondere 0,01 bis 5 Gew.% und besonders bevorzugt 0,1 bis 3 Gew.% an Stabilisatoren. Vorzugsweise enthalten die FK-Medien einen oder mehrere Stabilisatoren ausgewählt aus der Gruppe bestehend aus Verbindungen der Tabelle C.

### Weiterhin bedeuten:

- Vₒ: Schwellenspannung, kapazitiv [V] bei 20°C,
- nₑ: außerordentlicher Brechungsindex bei 20°C und 589 nm,
- nₒ: ordentlicher Brechungsindex bei 20°C und 589 nm,
- Δn: optische Anisotropie bei 20°C und 589 nm,
- ε_{⊥}: dielektrische Suszeptibilität senkrecht zum Direktor bei 20°C und 1 kHz,
- ε∥: dielektrische Suszeptibilität parallel zum Direktor bei 20°C und 1 kHz,
- Δε: dielektrische Anisotropie bei 20°C und 1 kHz,
- Kp. ,T(N,I): Klärpunkt [°C],
- γ1: Rotationsviskosität bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN],
- LTS: "low temperature stability" (Phase), bestimmt in Testzellen,
- HR₂₀: "voltage holding ratio" bei 20°C [%] und
- HR₁₀₀: "voltage holding ratio" bei 100°C [%].

Soweit nicht explizit anders vermerkt, sind in der vorliegenden Anmeldung alle Konzentrationen in Gewichtsprozent angegeben, und beziehen sich auf die entsprechende Mischung oder Mischungskomponente soweit nicht explizit anders angegeben.

Soweit nicht explizit anders vermerkt, sind in der vorliegenden Anmeldung alle angegebenen Werte für Temperaturen, wie z. B. der Schmelzpunkt T(C,N), der Übergang von der smektischen (S) zur nematischen (N) Phase T(S,N) und der Klärpunkt T(N,I), in Grad Celsius (°C) angegeben.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und Δn wird bei 589 nm und Δε bei 1 kHz bestimmt, sofern nicht jeweils explizit anders angegeben.

Der Begriff "Schwellenspannung" bezieht sich für die vorliegende Erfindung auf die kapazitive Schwelle (V₀), auch Freedericksz-Schwelle genannt, sofern nicht explizit anders angegeben. In den Beispielen kann auch, wie allgemein üblich, die optische Schwelle für 10 % relativen Kontrast (V₁₀) angegeben werden.

Die zur Messung der kapazitiven Schwellenspannung verwendete Anzeige weist zwei planparallele Trägerplatten im Abstand von 4 µm und Elektrodenschichten mit darüberliegenden Orientierungsschichten aus geriebenem Polyimid auf den Innenseiten der Trägerplatten auf, welche eine homöotrope Randorientierung der Flüssigkristallmoleküle bewirken.

Die polymerisierbaren Verbindungen werden in der Anzeige durch UV-Bestrahlung bei vorgegebener Zeit polymerisiert, wobei gleichzeitig eine Spannung an die Anzeige angelegt wird (üblicherweise 10V bis 30V Wechselstrom, 1 kHz). In den Beispielen wurde, falls nicht anders angegeben, eine Quecksilberdampflampe mit 28 mW/cm² verwendet, die Intensität wurde mit einem Standard-UV-Meter (Fabrikat Ushio UNI meter) gemessen, der mit einem Bandpassfilter bei 365nm ausgerüstet ist.

Der Tiltwinkel wird per Drehkristall-Experiment (Autronic-Melchers TBA-105) bestimmt. Ein kleiner Wert (d.h. eine große Abweichung vom 90°-Winkel) entspricht dabei einem großen Tilt.

### Beispiel 1

### 2-Methylacrylsäure-4'-[3-(2-methyl-acryloyloxy)-propoxy]-biphenyl-4-ylester (1) wird wie folgt hergestellt:

### 1.1. 4'-(3-Hydroxy-propoxy)-biphenyl-4-ol

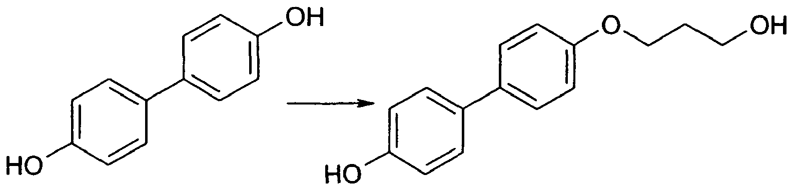

20,0 g (0,107 mol) 4,4'-Dihydroxybiphenyl, 10,0 g (0,070 mol) 3-Brom-1-propanol und 15,0 g (0,109 mol) Kaliumcarbonat werden in 300 ml Aceton 16 h unter Rückfluss erhitzt. Anschließend wird der Ansatz filtriert und das Filtrat eingeengt. Der Rückstand wird in MTB-Ether aufgenommen, mit Wasser gewaschen und über Natriumsulfat getrocknet. Das Lösungsmittel wird i. Vak. entfernt und das Rohprodukt mit Toluol/Essigester (1:1) an Kieselgel chromatographiert. Kristallisation aus Toluol/Essigester liefert 4'-(3-Hydroxy-propoxy)-biphenyl-4-ol als farblosen Feststoff.

### 1.2. 2-Methylacrylsäure-4'-[3-(2-methyl-acryloyloxy)-propoxy]-biphenyl-4-ylester

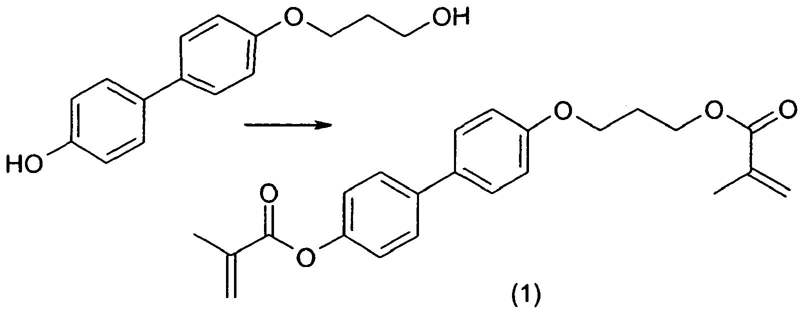

4,50 g (18,4 mmol) 4'-(3-Hydroxy-propoxy)-biphenyl-4-ol, 6,5 ml (0,766 mol) Methacrylsäure und 0,5 g N,N-Dimethylaminopyridin (DMAP) werden in 250 ml Toluol vorgelegt, unter Eiskühlung mit einer Lösung von 16,0 g (0,775 mol) N,N'-Dicyclohexylcarbodiimid versetzt und über Nacht bei Raumtemp. gerührt. Nach Zugabe von 6,5 g Oxalsäure-Dihydrat wird der Ansatz 1 h gerührt, filtriert und das Filtrat eingeengt. Der Rückstand wird mit Heptan/Essigester (2:1) über Kieselgel filtriert und aus Diethylether umkristallisiert. Man erhält 2-Methylacrylsäure-3'-(2-methyl-acryloyloxy)-biphenyl-3-ylester als farblose Kristalle vom Schmp. 102 °C.

### Beispiel 2

### 2-Methylacrylsäure-4'-(2-methyl-acryloyloxymethyl)-biphenyl-4-ylester (2) wird wie folgt hergestellt:

### 2.1. 4'-Hydroxymethyl-4-biphenylol

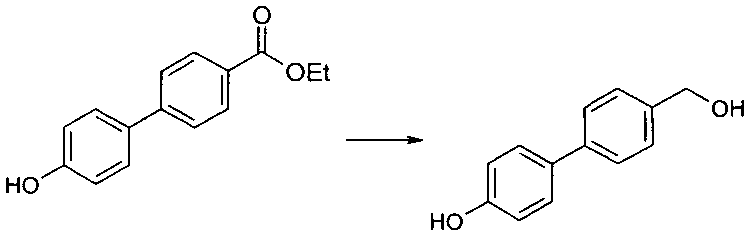

15,0 g (60,7 mmol) 4-Hydroxybiphenyl-4-carbonsäureethylester werden in 500 ml THF gelöst und bei -70 °C mit 200 ml einer 1 M Lösung von Diisobutylaluminiumhydrid in Toluol versetzt. Anschließend wird die Kühlung entfernt und der Ansatz 2 h bei Raumtemp. gerührt. Nach Zugabe von 5 ml Isopropanol wird die Lösung auf Wasser gegeben, dreimal mit MTB-Ether extrahiert und die vereinigten org. Phasen werden mit Wasser gewaschen und über Natriumsulfat getrocknet. Das Lösungsmittel wird i. Vak. entfernt und der Rückstand mit Toluol/Essigester über Kieselgel filtriert. Man erhält 4'-Hydroxymethyl-4-biphenylol als farblosen Feststoff.
¹H-NMR (DMSO-d₆, 300 MHz): δ = 4,51 ppm (s, 2 H, -C*H*₂OH), 5,13 (s, br., austauschbar, 1 H, OH), 6, 83 (AB-m_{c}, 2 H, Ar-H), 7,34 (AB-d, J = 8,3 Hz, 2 H, Ar-H). 7,46 (AB-m_{c}, 2 H, Ar-H), 7,52 (AB-m_{c}, 2 H, Ar-H), 9,51 (s, br., austauschbar, 1 H, OH).

### 2.2. 2-Methylacrylsäure-4'-(2-methyl-acryloyloxymethyl)-biphenyl-4-ylester

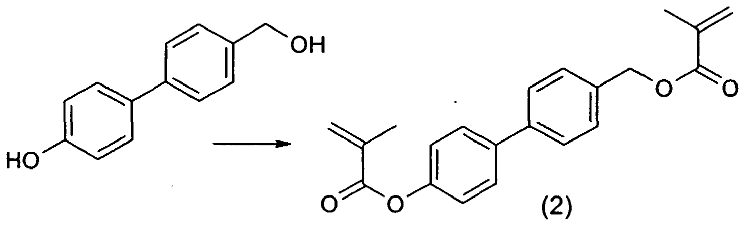

Analog der unter 1.2. beschriebenen Veresterung erhält man aus 4'-Hydroxymethyl-4-biphenylol und Methacrylsäure den 2-Methylacrylsäure-4'-(2-methyl-acryloyloxymethyl)-biphenyl-4-ylester als farblosen Feststoff vom Schmp. 71 °C.

### Beispiel 3

Acrylsäure-4'-(acryloyloxymethyl)-biphenyl-4-ylester (3) wird in Analogie zu Beispiel 2 hergestellt.

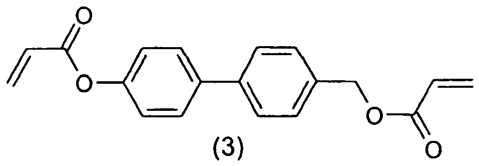

Man erhält Acrylsäure-4'-(acryloyloxymethyl)-biphenyl-4-ylester als farblose Kristalle vom Schmp. 62 °C.

Entsprechend dem Beispiel 1 erhält man aus kommerziell erhältlichen Vorstufen

### Beispiel 4

### 2-Methyl-acrylsäure-3-[4-(2-methyl-acryloyloxy)-phenoxy]-propylester (4) wird in Analogie zu Beispiel 1 hergestellt.

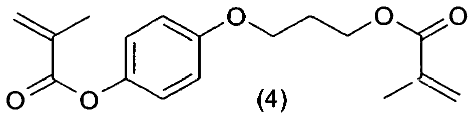

Man erhält farblose Kristalle vom Schmp. 58 °C

### Beispiel 5

### 2-Methylacrylsäure-6-[3-(2-methyl-acryloyloxy)-propoxy]-naphth-2-ylester (5) wird in Analogie zu Beispiel 1 hergestellt.

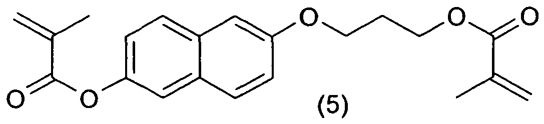

Man erhält farblose Kristalle vom Schmp. 68 °C.

### Beispiel 6

### 2-Methylacrylsäure-3-[4'-(2-methyl-acryloyloxy)-biphenyl-4-yl]-propylester (6) wird in Analogie zu Beispiel 2 hergestellt.

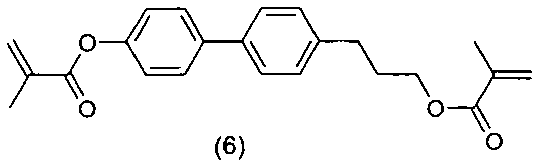

Man erhält farblose Kristalle vom Schmp. 69 °C.

### Beispiel 7

### 2-Methylacrylsäure-2-[4'-(2-methyl-acryloyloxy)-biphenyl-4-yl]-ethylester (7) wird in Analogie zu Beispiel 2 hergestellt.

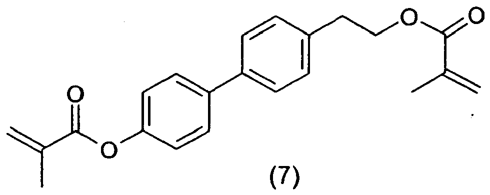

Man erhält farblose Kristalle vom Schmp. 108 °C.

### Beispiel 8

Die Löslichkeit der Verbindungen (1) und (5) wird mit der Löslichkeit der aus dem Stand der Technik (z.B. EP 1 498 468 A1) bekannten strukturanalogen Verbindungen (A) und (B) ohne Abstandsgruppe verglichen:

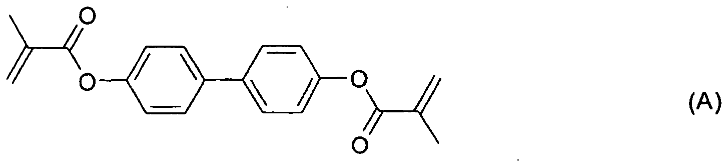

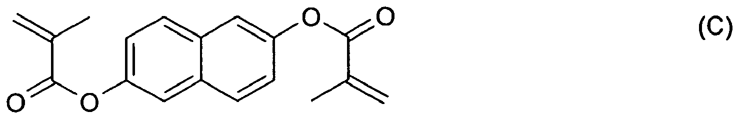

Hierzu wird jede Verbindung unter Rühren bei 50°C (1/2 Stunde) in der kommerziell erhältlichen nematischen FK-Mischung LCT-06-441 (Merck KGaA, Darmstadt) in einer Konzentration von 5 Gew.-% gelöst, und dann ohne Rühren auf Zimmertemperatur abgekühlt. Ergebnis:
(1): Über Nacht bei RT auskristallisiert
(5): Über Nacht bei RT geringfügig auskristallisiert
(A): beim Abkühlen auf RT sofort auskristallisiert
(C): beim Abkühlen auf RT sofort auskristallisiert

Die erfindungsgemäßen Verbindungen mit einer Abstandsgruppe zeigen deutlich bessere Löslichkeit als die Verbindungen aus dem Stand der Technik ohne Abstandsgruppe.

### Beispiel 9 - Mischungsbeispiel

Die nematische FK-Host-Mischung N1 wird wie folgt formuliert

| | | | |
|---|---|---|---|
| CCH-501 | 9,00 % | Kp. | + 70,0 |
| CCH-35 | 14,00 % | Δn | 0,0825 |
| PCH-53 | 8,00 % | Δε | - 3,5 |
| CY-3-04 | 14,00 % | ε∥ | 3,5 |
| CY-5-04 | 13,00 % | K₃/K₁ | 1,00 |
| CCY-3-02 | 8,00 % | γ1 | 141 |
| CCY-5-O2 | 8,00 % | V₀ | 2,06 |
| CCY-2-1 | 9,00 % | | |
| CCY-3-1 | 9,00 % | | |
| CPY-2-O2 | 8,00 % | | |

Zur FK-Mischung N1 werden 0.3% einer polymerisierbaren monomeren Verbindung aus den Beispielen 1 bis 6 zugesetzt, und die dadurch entstandenen Mischungen in VA-e/o-Testzellen gefüllt (90° gerieben, Orientierungsschicht VA-Polyimid, Schichtdicke d≈4µm). Unter Anlegen einer Spannung von 10V (Wechselstrom) wird jede Zelle 20 Minuten lang mit UV-Licht der Intensität 28mW/cm² bestrahlt, dadurch erfolgt Polymerisation der monomeren Verbindung. In einer zweiten Versuchsreihe wird der FK/Monomer-Mischung noch zusätzlich 0.006% des Photoinitiators Irgacure-651 zugesetzt und die Belichtungszeit auf 2 Minuten verkürzt. Vor und nach der UV-Bestrahlung wird per Drehkristall-Experiment (Autronic-Melchers TBA-105) der Tiltwinkel bestimmt.

Zu Vergleichszwecken werden die oben beschriebenen Versuche mit den aus dem Stand der Technik bekannten strukturanalogen polymerisierbaren Verbindungen (A), (B) und (C) durchgeführt, die keine Abstandsgruppen enthalten.

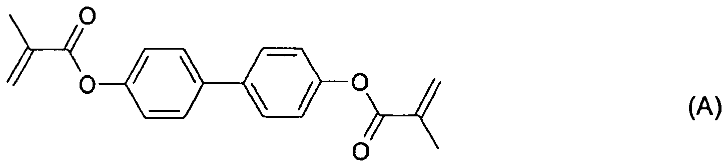

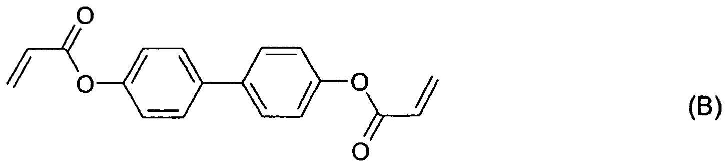

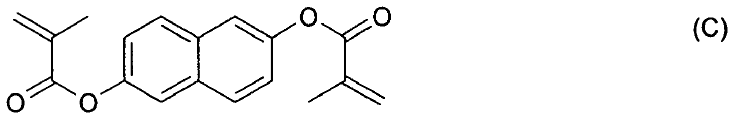

Die Ergebnisse sind in Tabelle 1 zusammengefasst.

**Tabelle 1**

| Monomer | Initiator | Tilt vor UV | Tilt nach UV |
|---|---|---|---|
| (1) | nein | 89.9° | 84.9° |
| (1) | ja | 89.9° | 86.8° |
| (2) | nein | 89.9° | 86.3° |
| (2) | ja | 89.9° | 88.0° |
| (3) | nein | 89.8° | 86.9° |
| (3) | ja | 84.9° | 84.2° |
| (4) | nein | 89.9° | 88.5° |
| (4) | ja | 89.9° | 88.7° |
| (5) | nein | 89.9° | 85.5° |
| (5) | ja | 89.8° | 87.4° |
| (6) | nein | 89.8° | 82.2° |
| (6) | ja | 89.9° | 87.2° |
| | | | |
| (A) | nein | 89.7° | 81.8° |
| (A) | ja | 89.8° | 84.8° |
| (B) | nein | 89.6° | 86.2° |
| (B) | ja | 89.7° | 87.0° |
| (C) | nein | 89.8° | 82.1° |
| (C) | ja | 89.6° | 83.5° |

Wie aus Tabelle 1 ersichtlich ist, kann auch mit den erfindungsgemäßen Monomeren (1)-(6) ein ausreichend großer Tilt (d.h. kleiner Tiltwinkel) nach Polymerisation erreicht werden, insbesondere ohne Verwendung eines Photoinitiators.

Aufgrund ihrer besseren Löslichkeit (siehe Beispiel 8) sind die erfindungsgemäßen Verbindungen (1)-(6) somit besonders gut zur Verwendung in PS(A)-Anzeigen geeignet.

### Beispiel 10 - Mischungsbeispiel

Ein FK-Medium bestehend aus 99,00 % der nematische FK-Host-Mischung N2

| | | | |
|---|---|---|---|
| CY-3-O4 | 24,00 % | Kp. | + 88,2 |
| CY-5-O4 | 10,00 % | Δn | 0,1443 |
| CCY-3-O2 | 6,00 % | Δε | - 5,9 |
| CCY-3-O3 | 6,00 % | ε∥ | 4,2 |
| CCY-4-O2 | 6,00 % | K₃/K₁ | 1,09 |
| CCY-5-O2 | 4,00 % | γ1 | 331 |
| CPY-2-O2 | 10,00 % | | |
| CPY-3-O2 | 10,00 % | | |
| PYP-2-3 | 14,00 % | | |
| PYP-2-4 | 10,00 % | | |

0,25 % der polymerisierbaren monomeren Verbindung aus Beispiel 6, sowie 0,75 % des chiralen Dotierstoffs S-4011, eignet sich für eine PS - VA-Anzeige.

### Beispiel 11 - Mischungsbeispiel

Ein FK-Medium bestehend aus 99,00 % der nematische FK-Host-Mischung N2 (siehe Beispiel 10), 0,25 % der polymerisierbaren monomeren Verbindung aus Beispiel 7, sowie 0,75 % des chiralen Dotierstoffs S-4011, eignet sich für eine PS-VA-Anzeige.

### Beispiel 12 - Mischungsbeispiel

Ein FK-Medium bestehend aus 99,50 % der nematische FK-Host-Mischung N2 (siehe Beispiel 10), 0,25 % der polymerisierbaren monomeren Verbindung aus Beispiel 6, sowie 0,25 % des chiralen Dotierstoffs S-5011, eignet sich für eine PS-VA-Anzeige.

### Beispiel 13 - Mischungsbeispiel

Ein FK-Medium bestehend aus 99,50 % der nematische FK-Host-Mischung N2 (siehe Beispiel 10), 0,25 % der polymerisierbaren monomeren Verbindung aus Beispiel 7, sowie 0,25 % des chiralen Dotierstoffs S-5011, eignet sich für eine PS-VA-Anzeige.

## Patentansprüche

1. Verwendung von polymerisierbaren Verbindungen enthaltend eine mesogene Gruppe sowie zwei oder mehr polymerisierbare Gruppen, wovon mindestens eine polymerisierbare Gruppe über eine Abstandsgruppe, und mindestens eine polymerisierbare Gruppe ohne Abstandsgruppe, mit der mesogenen Gruppe verknüpft ist (erfindungsgemäße Verbindungen), in Flüssigkristall (FK)-Anzeigen des des PS- (polymer stabilized) oder PSA- (polymer sustained alignment) Typs, enthaltend eine FK-Zelle bestehend aus zwei Substraten, wobei mindestens ein Substrat lichtdurchlässig ist und mindestens ein Substrat eine Elektrodenschicht aufweist, sowie einer zwischen den Substraten befindlichen Schicht eines FK-Mediums enthaltend eine polymerisierte Komponente und eine niedermolekulare Komponente, wobei die polymerisierte Komponente erhältlich ist durch Polymerisation einer oder mehrerer polymerisierbarer Verbindungen zwischen den Substraten der FK-Zelle im FK-Medium unter Anlegen einer elektrischen Spannung, worin mindestens eine der polymerisierbaren Verbindungen eine erfindungsgemäße Verbindung ist.

2. Verwendung nach Anspruch 1, **dadurch gekennzeichnet, dass** die polymerisierte Komponente ausschließlich aus einer oder mehreren polymerisierbaren Verbindungen besteht, die eine mesogene Gruppe sowie zwei polymerisierbare Gruppen enthalten, wovon eine polymerisierbare Gruppe über eine Abstandsgruppe und eine polymerisierbare Gruppe ohne Abstandsgruppe mit der mesogenen Gruppe verknüpft ist.

3. Verwendung nach einem oder mehreren der Ansprüche 1 und 2, **dadurch gekennzeichnet, dass** die polymerisierbaren Verbindungen eine mesogene Gruppe mit zwei, drei oder vier Kohlenwasserstoffringen enthalten, welche ausgewählt sind aus fünf- oder sechsgliedrigen Ringen, welche auch anelliert sein können und auch ein oder mehrere Heteratome enthalten können.

4. Verwendung nach einem oder mehreren der Ansprüche 1 bis 3, **dadurch gekennzeichnet, dass** die polymerisierbaren Verbindungen aus Formel I ausgewählt sind:
P^{a}-Sp-A¹-(Z¹-A²)ₘ₁-P^{b} I
worin die einzelnen Reste folgende Bedeutung haben
P^{a} und P^{b} jeweils unabhängig voneinander eine polymerisierbare Gruppe,
Sp eine Abstandsgruppe,
A¹ und A² jeweils unabhängig voneinander eine aromatische, heteroaromatische, alicyclische oder heterocyclische Gruppe, vorzugsweise mit 4 bis 25 C-Atomen, welche auch anellierte Ringe enthalten kann, und welche auch durch L ein- oder mehrfach substituiert sein kann,
L H, OH, Halogen, SF₅, NO₂, eine Kohlenstoffgruppe oder Kohlenwasserstoffgruppe,
Z¹ bei jedem Auftreten gleich oder verschieden -O-, -S-,-CO-, -CO-O-, -OCO-, -O-CO-O-, -OCH₂-, -CH₂O-,-SCH₂-, -CH₂S-, -CF₂O-, -OCF₂-, -CF₂S-, -SCF₂-,-(CH₂)n1-, -CF₂CH₂-, -CH₂CF₂-, -(CF₂)ₙ₁-, -CH=CH-,-CF=CF-, -C≡C-, -CH=CH-COO-, -OCO-CH=CH-, CR⁰R⁰⁰ oder eine Einfachbindung,
R⁰ und R⁰⁰ jeweils-unabhängig voneinander H oder Alkyl mit 1 bis 12 C-Atomen,
m1 0, 1, 2, 3 oder 4,
n1 1, 2, 3 oder 4.

5. Verwendung nach Anspruch 4, **dadurch gekennzeichnet, dass** A¹, A², Z¹, Sp und m1 die in Anspruch 4 angegebene Bedeutung haben, und
A¹ und A² jeweils unabhängig voneinander 1,4-Phenylen, Naphthalin-1,4-diyl oder Naphthalin-2,6-diyl, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
L P-, P-Sp-, OH, CH₂OH, F, Cl, Br, I, -CN, -NO₂, -NCO,-NCS, -OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P- oder P-Sp-ersetzt sein können,
P eine polymerisierbare Gruppe,
Y¹ Halogen,
R^{x} P-, P-Sp-, H, Halogen, geradkettiges, verzweigtes oder cyclisches Alkyl mit 1 bis 25 C-Atomen, worin auch eine oder mehrere nicht benachbarte CH₂-Gruppen durch-O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P- oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
bedeuten.

6. Verwendung nach Anspruch 4 oder 5, **dadurch gekennzeichnet, dass** die polymerisierbaren Verbindungen aus folgenden Unterformeln ausgewählt sind: 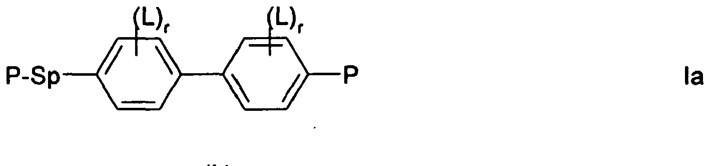 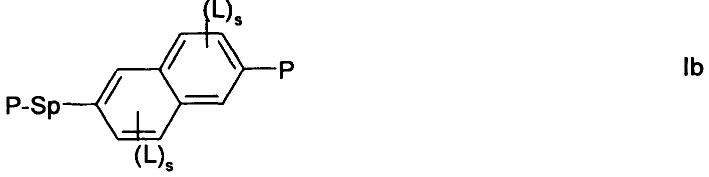 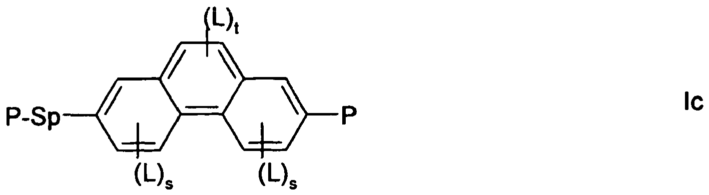 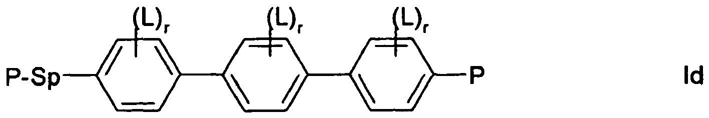 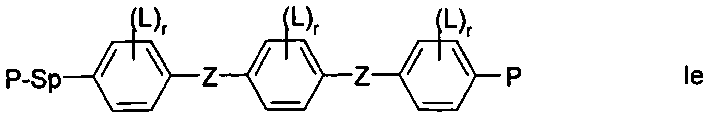 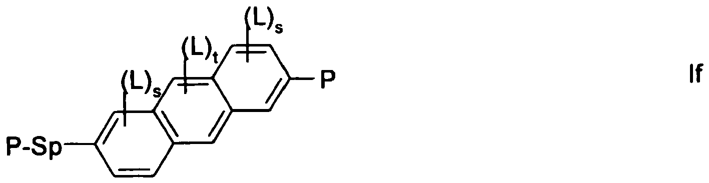 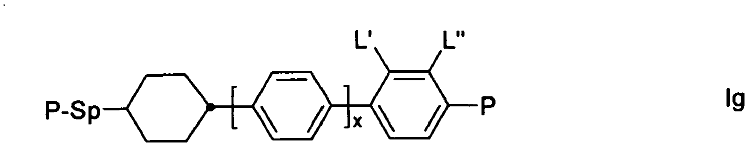 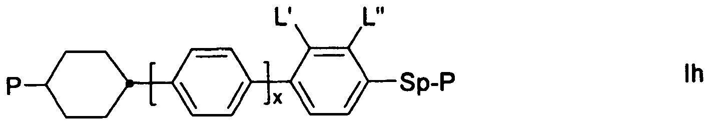 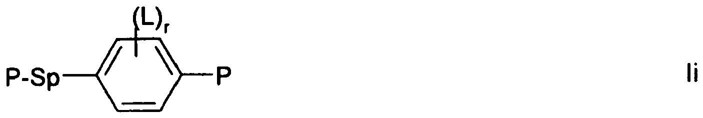 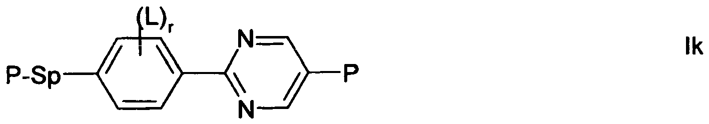 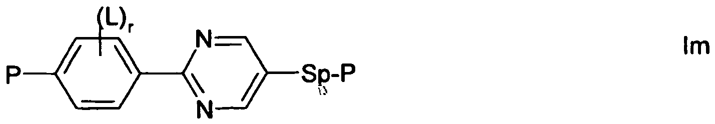 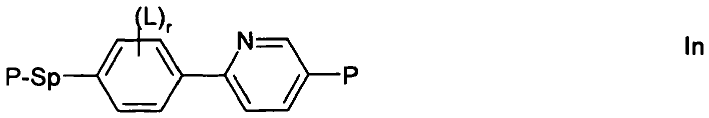 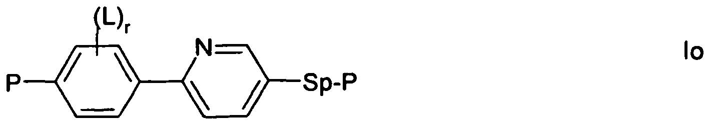 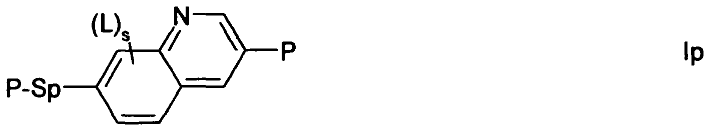 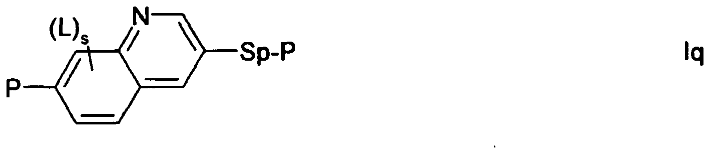 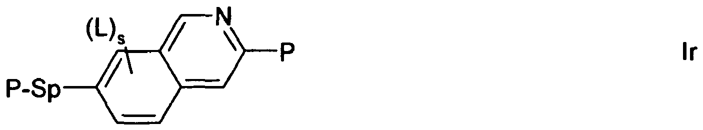 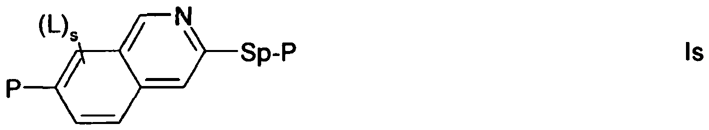 worin P und Sp bei jedem Auftreten gleich oder verschieden die in Anspruch 4 und 5 angegebene Bedeutung besitzen, L eine der in Anspruch 4 und 5 angegebenen Bedeutungen hat, L' und L" jeweils unabhängig voneinander H, F oder Cl bedeuten, Z bei jedem Auftreten gleich oder verschieden eine der in Anspruch 5 für Z¹ angegebenen Bedeutungen hat, und vorzugsweise -COO-, -OCO-oder eine Einfachbindung bedeutet, x 0 oder 1, r 0, 1, 2, 3 oder 4, s 0, 1, 2 oder 3 und t 0, 1 oder 2 ist.

7. Verwendung nach einem oder mehreren der Ansprüche 1 bis 6, **dadurch gekennzeichnet, dass** die polymerisierbare Gruppe ausgewählt ist aus CH₂=CW¹-COO-, CH₂=CW¹-CO-, 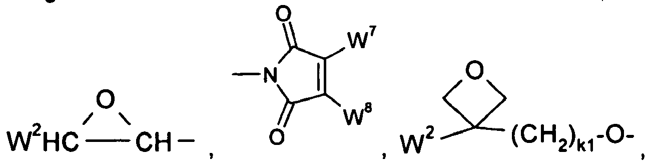 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂₌CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN-, und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, welches optional mit ein oder mehreren Resten L wie oben definiert substiuiert ist, k₁, k₂ und k₃ jeweils unabhängig voneinander 0 oder 1 bedeuten, k₃ vorzugsweise 1 bedeutet.

8. Verwendung nach einem oder mehreren der Ansprüche 1 bis 7, **dadurch gekennzeichnet, dass** die Abstandsgruppe Sp ausgewählt ist aus der Formel Sp'-X', so dass der Rest "P^{(a,b)}-Sp-" der Formel "P^{(a,b)}-Sp'-X'-" entspricht, wobei
Sp' Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-, -NH-, -NR⁰-, -SiR⁰R⁰⁰-, -CO-, -COO-, -OCO-, - OCO-O-, -S-CO-, -CO-S-, -NR⁰-CO-O-, -O-CO-NR⁰-, -NR⁰-CO-NR⁰-, -CH=CH- oder -C≡C- ersetzt sein können, dass O-und/oder S-Atome nicht direkt miteinander verknüpft sind, X' -O-, -S-, -CO-, -COO-, -OCO-, -O-COO-, -CO-NR⁰-,-NR⁰-CO-, -NR⁰-CO-NR⁰-, -OCH₂-, -CH₂O-, -SCH₂-, -CH₂S-, -CF₂O--OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C=C-, -CH=CH-COO-, -OCO-CH=CH- oder eine Einfachbindung
bedeutet,
R⁰ und R⁰⁰ jeweils unabhängig voneinander H oder Alkyl mit 1 bis 12 C-Atomen bedeuten, und
Y² und Y³ jeweils unabhängig voneinander H, F, Cl oder CN
bedeuten.

9. Verwendung nach einem oder mehreren der Ansprüche 1 bis 8, **dadurch gekennzeichnet, dass** das FK-Medium eine oder mehrere Verbindungen ausgewählt aus den folgenden Formeln enthält: 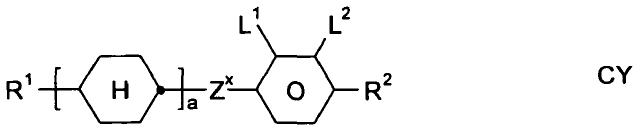 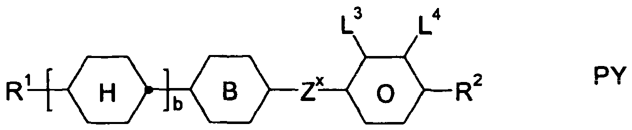 worin die einzelnen Reste folgende Bedeutung besitzen
a 1 oder 2,
b 0 oder 1, 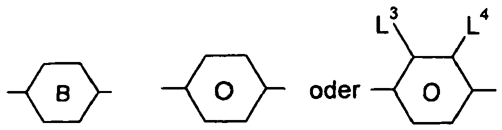
R¹ und R² jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder-COO- so ersetzt sein können, dass O-Atome nicht direkt miteinander verknüpft sind,
Z^{x} -CH=CH-, -CH₂O-, -OCH₂-, -CF₂O-, -OCF₂-, -O-, -CH₂-, -CH₂CH₂-, oder eine Einfachbindung, vorzugsweise eine Einfachbindung,
L¹⁻⁴ jeweils unabhängig voneinander F, Cl, OCF₃, CF₃, CH₃, CH₂F, CHF₂.

10. Verwendung nach Anspruch 9, **dadurch gekennzeichnet, dass** die Verbindungen der Formel CY ausgewählt sind aus den folgenden Unterformeln 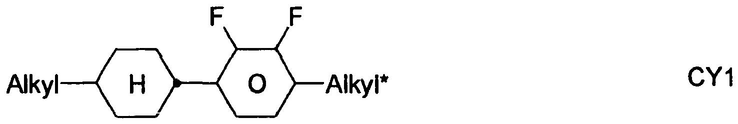 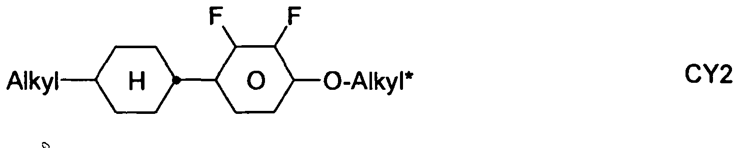 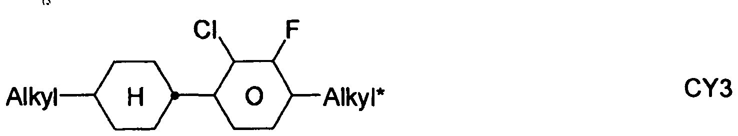 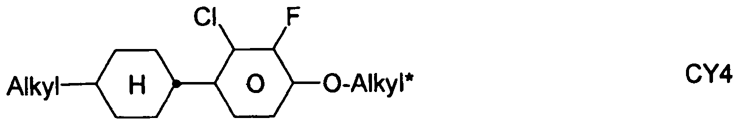 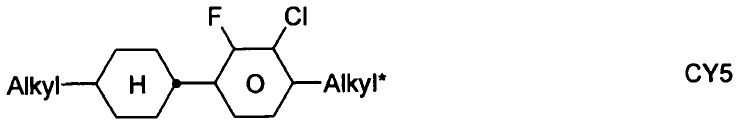 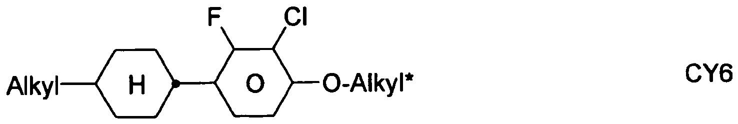 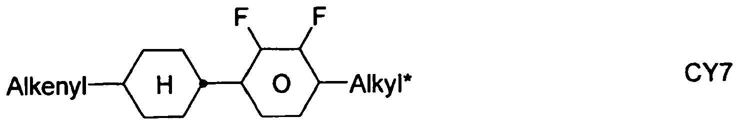 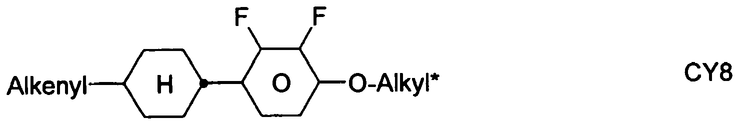 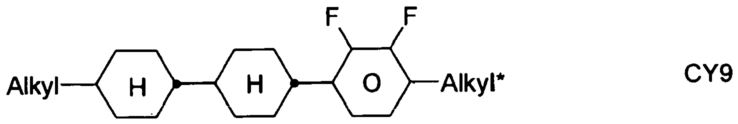 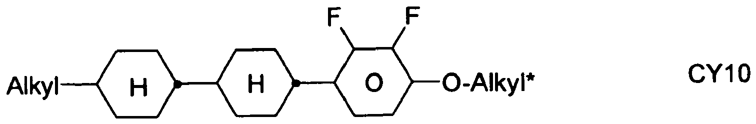 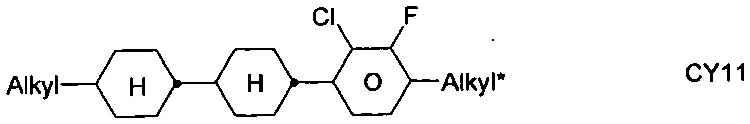 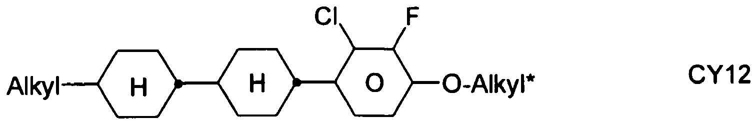 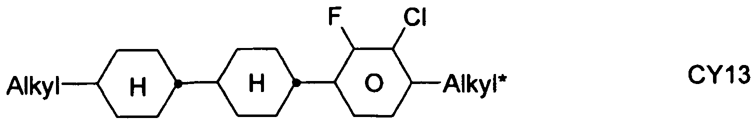 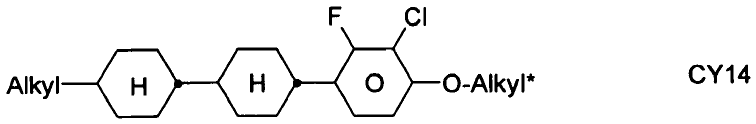 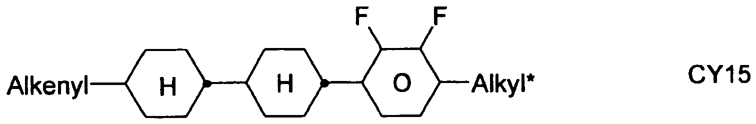 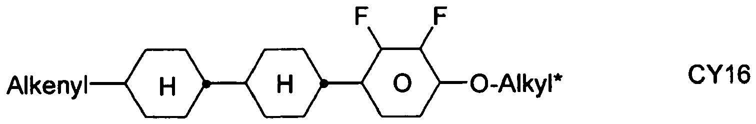 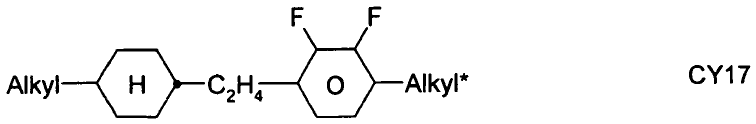 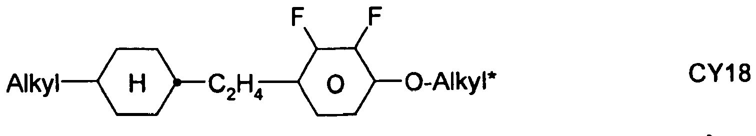 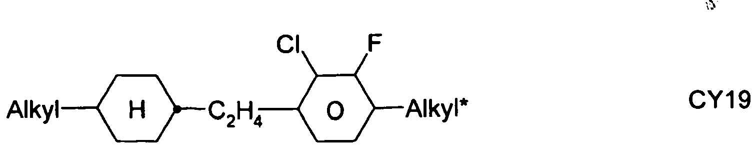 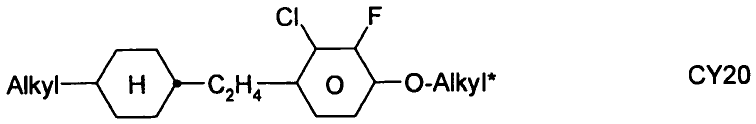 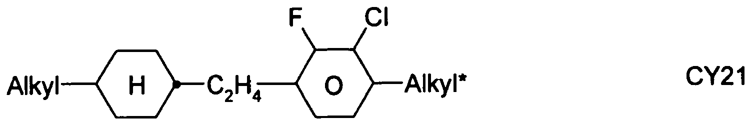 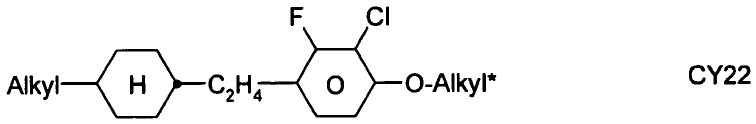 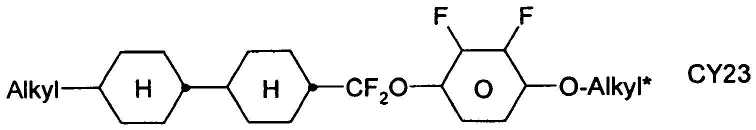 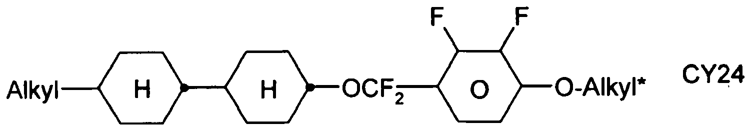 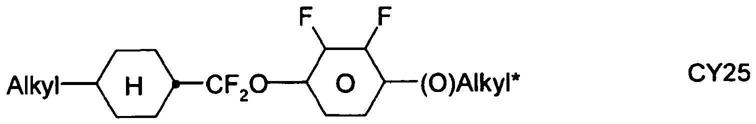 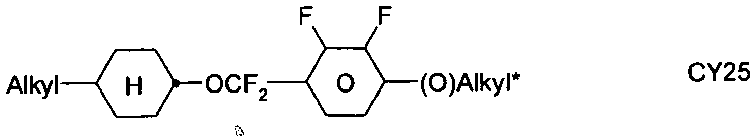 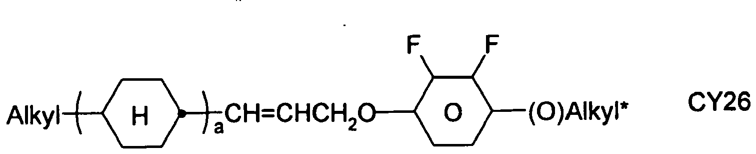 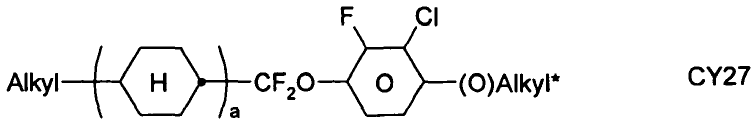 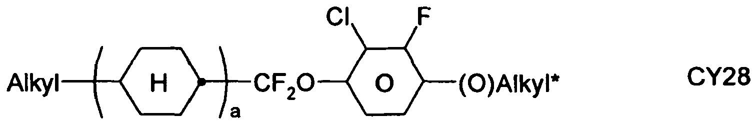 worin a 1 oder 2, Alkyl und Alkyl* jeweils unabhängig voneinander einen geradkettigen Alkylrest mit 1-6 C-Atomen, und Alkenyl einen geradkettigen Alkenylrest mit 2-6 C-Atomen bedeuten.

11. Verwendung nach Anspruch 9 oder 10, **dadurch gekennzeichnet, dass** die Verbindungen der Formel PY ausgewählt sind aus den folgenden Unterformeln: 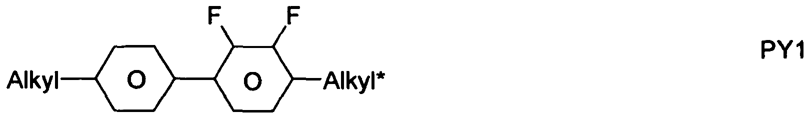 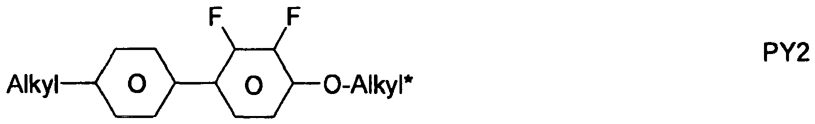 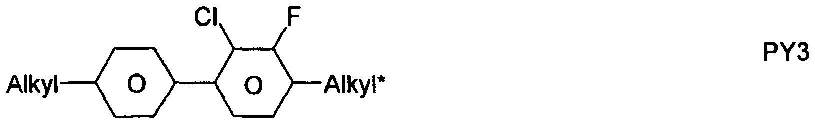 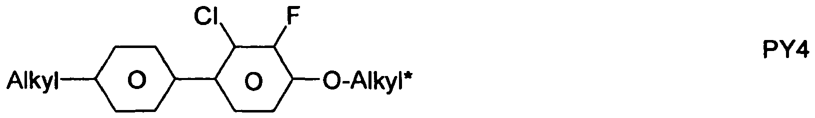 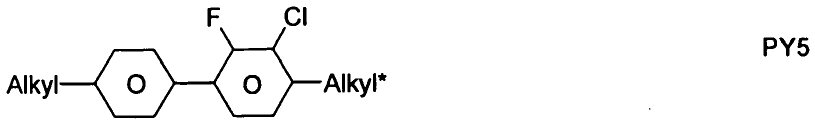 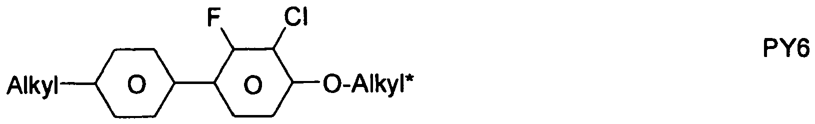 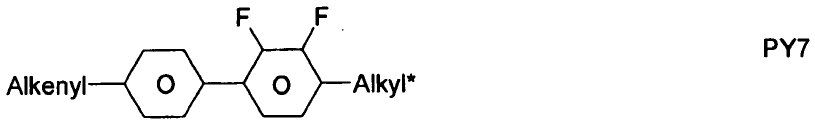 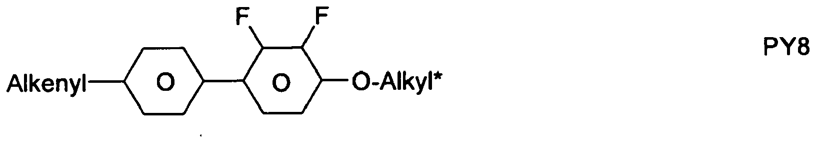 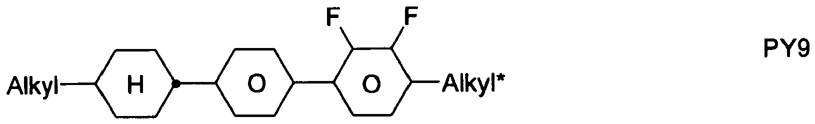 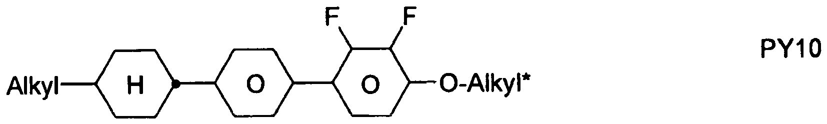 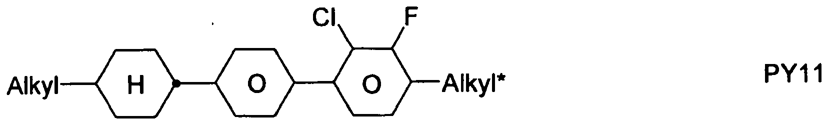 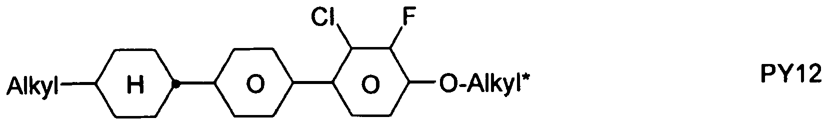 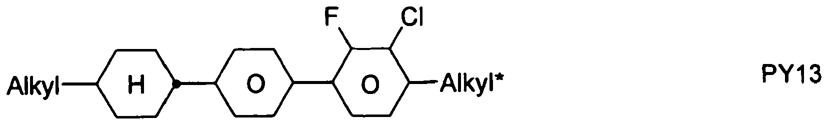 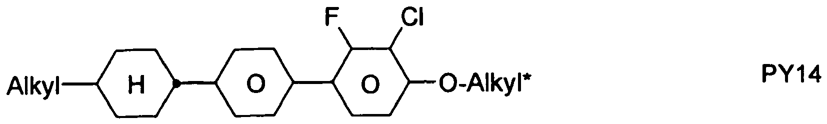 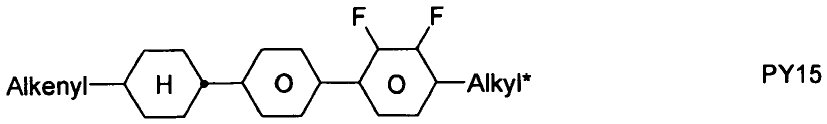 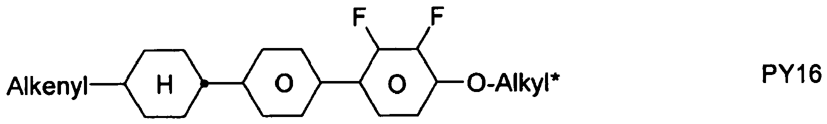 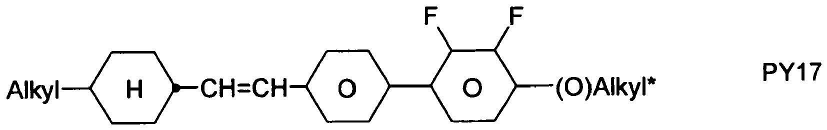 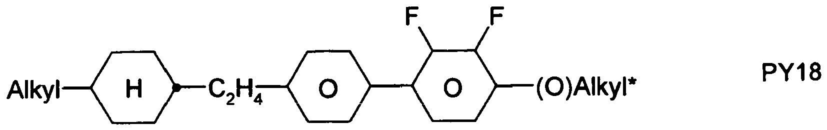 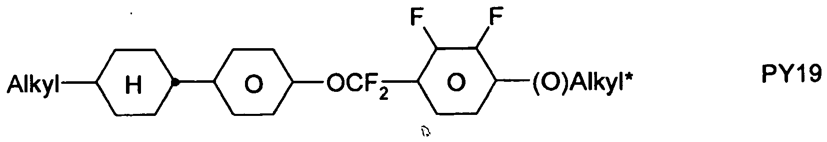 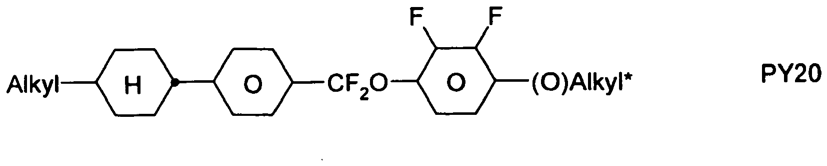 worin Alkyl und Alkyl* jeweils unabhängig voneinander einen geradkettigen Alkylrest mit 1-6 C-Atomen und Alkenyl einen geradkettigen Alkenylrest mit 2-6 C-Atomen bedeuten

12. Verwendung nach einem oder mehreren der Ansprüche 1 bis 11, **dadurch gekennzeichnet, dass** das FK-Medium eine oder mehrere Verbindungen der folgenden Formel enthält: 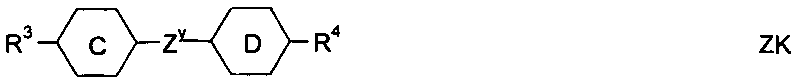 worin die einzelnen Reste folgende Bedeutung besitzen 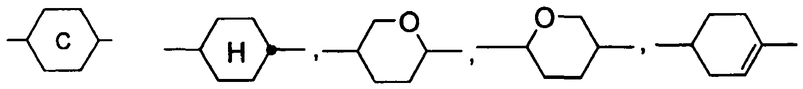 oder 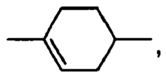 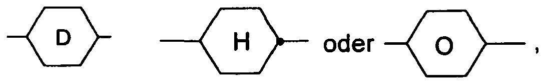
R³ und R⁴ jeweils unabhängig voneinander Alkyl mit 1 bis 12 C-Atomen, worin auch eine oder zwei nicht benachbarte CH₂-Gruppen durch -O-, -CH=CH-, -CO-, -OCO- oder-COO- so ersetzt sein können, dass O-Atome nicht direkt miteinander verknüpft sind,
Z^{y} -CH₂CH₂-, -CH=CH-, -CF₂O-, -OCF₂-, -CH₂O-, -OCH₂-, -COO-, -OCO-, -C₂F₄-, -CF=CF- oder eine Einfachbindung.

13. Verwendung nach Anspruch 12, **dadurch gekennzeichnet, dass** die Verbindungen der Formel ZK ausgewählt sind aus den folgenden Unterformeln: 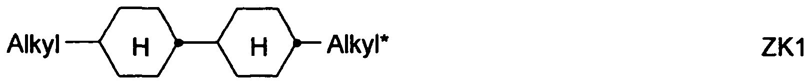 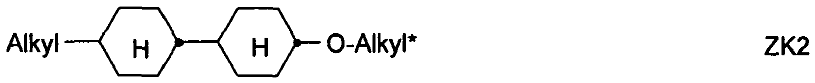 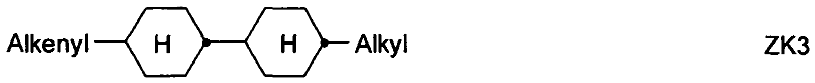 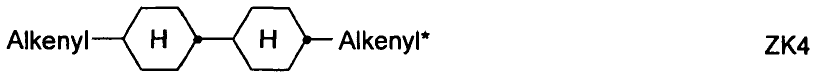 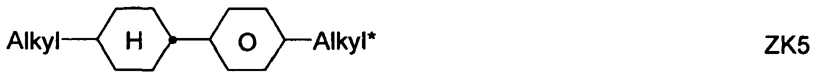 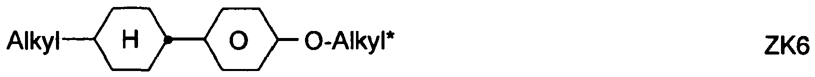 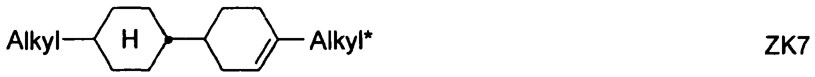 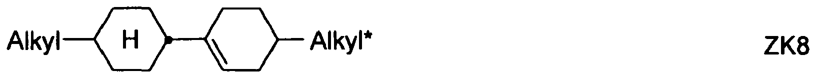 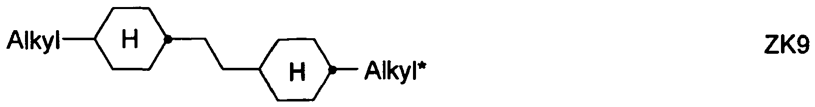 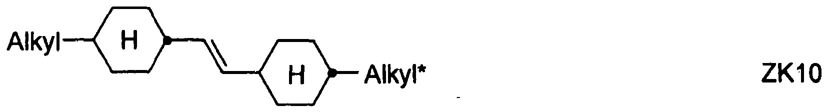 worin Alkyl und Alkyl* jeweils unabhängig voneinander einen geradkettigen Alkylrest mit 1-6 C-Atomen bedeuten, und Alkenyl einen geradkettigen Alkenylrest mit 2-6 C-Atomen bedeuten

14. Verwendung nach einem oder mehreren der Ansprüche 1 bis 13, **dadurch gekennzeichnet, dass** das FK-Medium zusätzlich eine oder mehrere Verbindungen der folgenden Formel enthält: 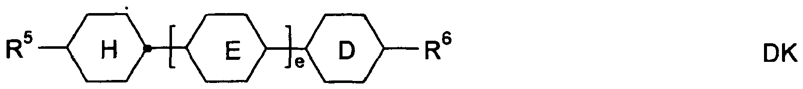 worin die einzelnen Reste bei jedem Auftreten gleich oder verschieden folgende Bedeutung haben:
R⁵ und R⁶ jeweils unabhängig voneinander eine der für R¹ in Anspruch 8 angegebenen Bedeutungen, 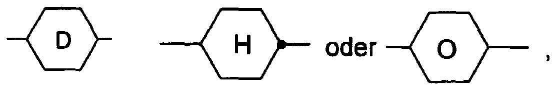 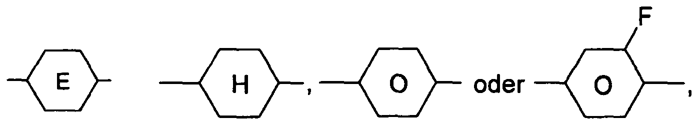
und
e 1 oder 2.

15. Verwendung nach einem oder mehreren der Ansprüche 1 bis 14, **dadurch gekennzeichnet, dass** das FK-Medium zusätzlich eine oder mehrere Verbindungen der folgenden Formel enthält: 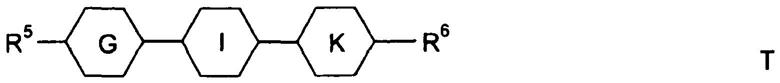 worin R⁵ und R⁶ jeweils unabhängig voneinander eine der für R¹ in Anspruch 8 angegebenen Bedeutungen besitzen und 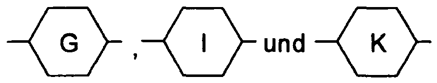 jeweils unabhängig voneinander 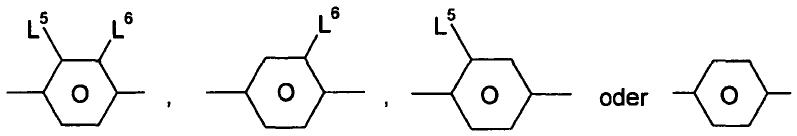 bedeuten, worin L⁵ F oder Cl und L⁶ F, Cl, OCF₃, CF₃, CH₃, CH₂F oder CHF₂ bedeuten.

16. Verwendung nach Anspruch 15, **dadurch gekennzeichnet, dass** die Verbindungen der Formel T ausgewählt sind aus den folgenden Unterformeln 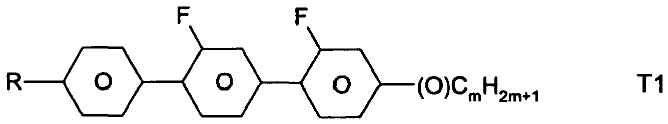 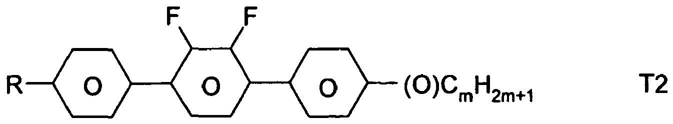 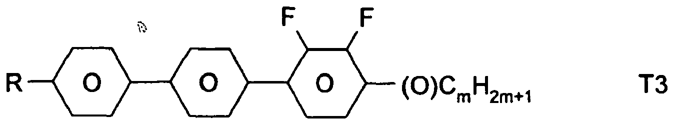 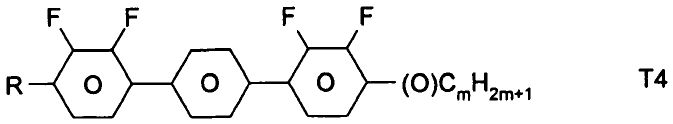 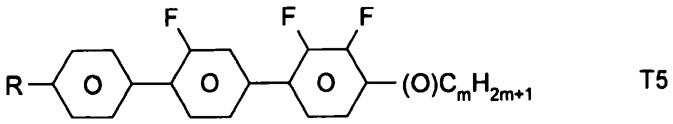 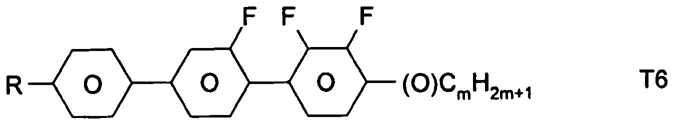 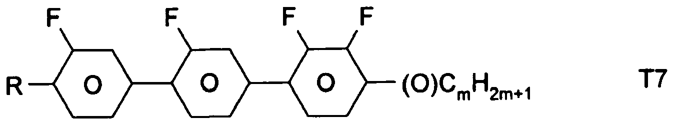 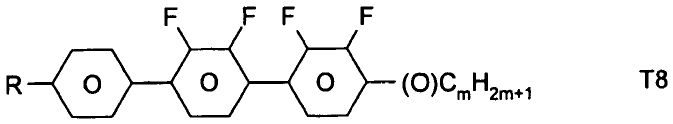 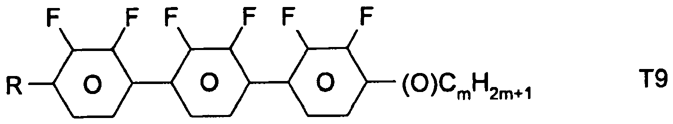 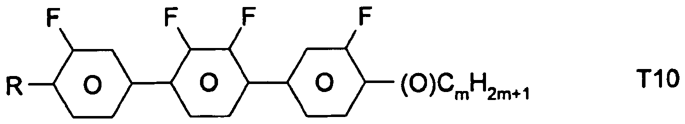 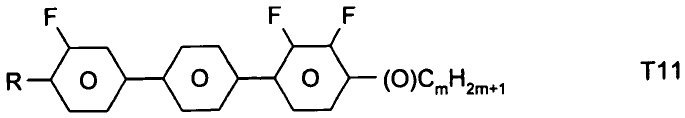 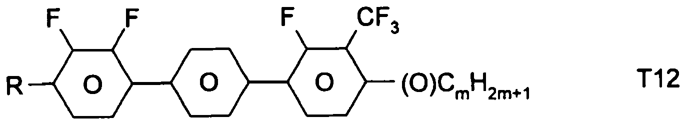 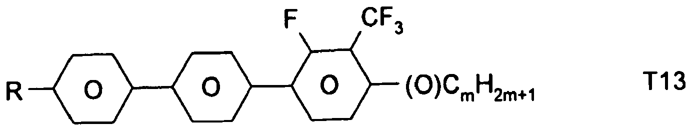 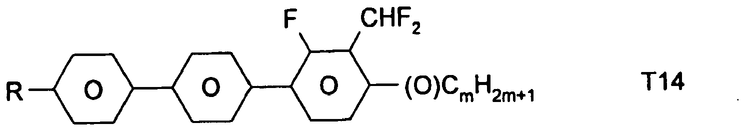 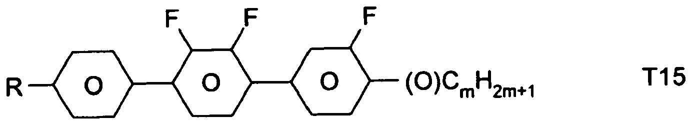 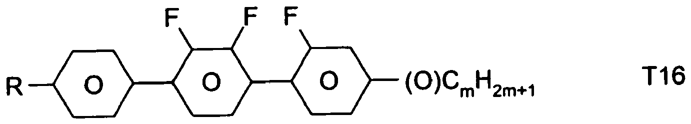 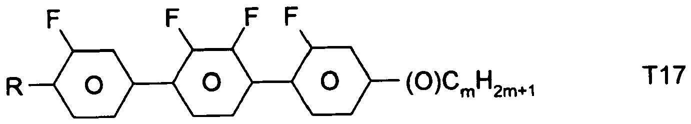 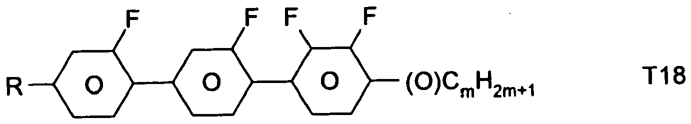 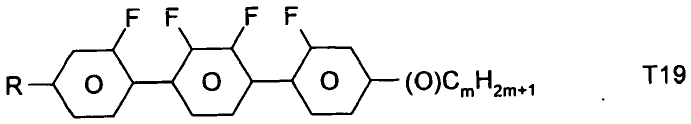 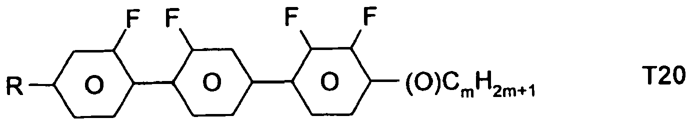 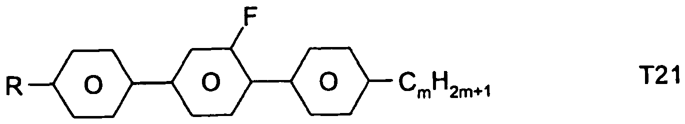 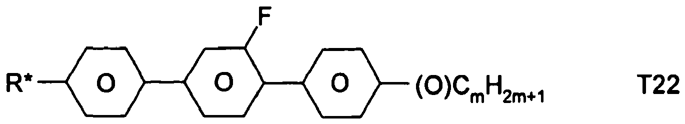 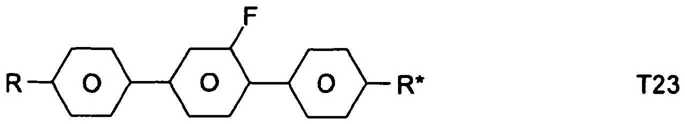 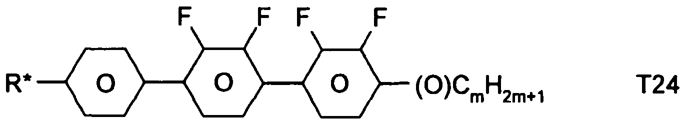 worin R einen geradkettigen Alkyl- oder Alkoxyrest mit 1-7 C-Atomen, R* einen geradkettigen Alkenylrest mit 2-7 C-Atomen, und m eine ganze Zahl von 1 bis 6 bedeutet.

17. FK-Anzeige wie in einem oder mehreren der Ansprüche 1 bis 16 definiert.

18. FK-Anzeige nach Anspruch 17, **dadurch gekennzeichnet, dass** sie eine PSA-VA-, PSA-OCB-, PS-IPS-, PS-FFS- oder PS-TN-Anzeige ist.

19. FK-Medium enthaltend
- eine polymerisierbare Komponente A) enthaltend eine oder mehrere polymerisierbare Verbindungen, sowie
- eine flüssigkristalline Komponente B) enthaltend eine oder mehrere niedermolekulare Verbindungen,
wobei Komponente A) eine-oder mehrere polymerisierbare Verbindungen wie in einem oder mehreren der Ansprüche 1 bis 8 definiert enthält, und worin Komponente B) eine oder mehrere Verbindungen wie in einem oder mehreren der Ansprüche 10 bis 16 definiert enthält.

20. Verwendung, FK-Anzeige oder FK-Medium nach einem oder mehreren der Ansprüche 1 bis 19, **dadurch gekennzeichnet, dass** die polymerisierbare Komponente (Komponente A) ausschließlich polymerisierbare Verbindungen wie in einem oder mehreren der Ansprüche 1 bis 8 definiert enthält.

21. Verwendung, FK-Anzeige oder FK-Medium nach einem oder mehreren der Ansprüche 1 bis 20, **dadurch gekennzeichnet, dass** im FK-Medium der Anteil an polymerisierbaren Verbindungen im Gesamtgemisch 0,05 bis 5 % beträgt.

22. Verwendung, FK-Anzeige oder FK-Medium nach einem oder mehreren der Ansprüche 1 bis 21, **dadurch gekennzeichnet, dass** das FK-Medium keinen Polymerisationsinitiator enthält.

23. Verwendung, FK-Anzeige oder FK-Medium nach einem oder mehreren der Ansprüche 1 bis 22, **dadurch gekennzeichnet, dass** die polymerisierbare Komponente (Komponente A) oder das FK-Medium einen Stabilisator enthält.

24. Verwendung, FK-Anzeige oder FK-Medium nach einem oder mehreren der Ansprüche 1 bis 23, **dadurch gekennzeichnet, dass** das FK-Medium einen oder mehrere chirale Dotierstoffe enthält.

25. Verfahren zur Verstellung eines FK-Mediums nach einem oder mehreren der Ansprüche 19 bis 24, indem man eine oder mehrere niedermolekulare flüssigkristalline Verbindungen mit einer oder mehreren polymerisierbaren Verbindungen wie in einem oder mehreren der Ansprüche 1 bis 16 definiert, und gegebenenfalls mit weiteren flüssigkristallinen Verbindungen und/oder Additiven, mischt.

26. Polymerisierbare Verbindung ausgewählt aus folgenden Formeln: 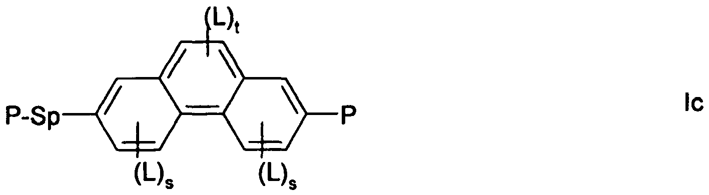 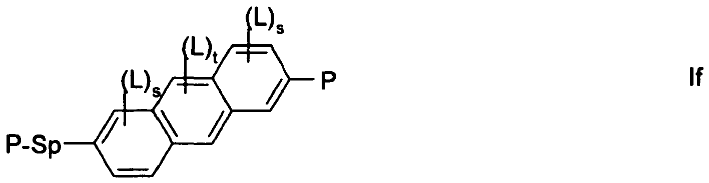 worin P und Sp bei jedem Auftreten gleich oder verschieden die in Anspruch 7 und 8 angegebene Bedeutung besitzen, L eine der in Anspruch 4 und 5 angegebenen Bedeutungen besitzt, r 0, 1, 2, 3 oder 4, s 0, 1, 2 oder 3 und t 0, 1 oder 2 ist.

27. Polymerisierbare Verbindung nach Anpruch 26, **dadurch gekennzeichnet, dass** P Vinyloxy, Acrylat, Methacrylat, Fluoracrylat, Chloracrylat, Oxetan oder Epoxy bedeutet.

28. Polymerisierbare Verbindung nach Anpruch 26 oder 27, **dadurch gekennzeichnet, dass** Sp ausgewählt ist aus der Formel Sp'-X', so dass der Rest P-Sp- der Formel P-Sp'-X'- entspricht, worin
X' -O-, -S -CO-, -COO-, -OCO-, -O-COO-, -CO-NR⁰-, -NR⁰-CO-, X' -O-, -S-CO-, -COO-, -OCO-, -O-COO-, -CO-NR⁰-, NR⁰-CO-, -NR⁰-CO-NR⁰- oder eine Einfachbindung bedeutet, und
Sp' -(CH₂)ₚ₁-, -(CH₂CH₂O)_{q1} -CH₂CH₂-, -CH₂CH₂-S-CH₂CH₂-, - CH₂CH₂-NH-CH₂CH₂- oder -(SiR⁰R⁰⁰-O)ₚ₁- bedeutet, worin p1 eine ganze Zahl von 1 bis 12 ist, q1 eine ganze Zahl von 1 bis 3 ist, und R⁰ und R⁰⁰ die in Anspruch 8 angegebene Bedeutung besitzen.

## Claims

1. Use of polymerisable compounds containing a mesogenic group and two or more polymerisable groups, of which at least one polymerisable group is linked to the mesogenic group via a spacer group and of which at least one polymerisable group is linked to the mesogenic group without a spacer group (compounds according to the invention), in liquid-crystal (LC) displays of the PS (polymer stabilised) or PSA (polymer sustained alignment) type containing an LC cell consisting of two substrates, where at least one substrate is transparent to light and at least one substrate has an electrode layer, and a layer of an LC medium comprising a polymerised component and a low-molecular-weight component located between the substrates, where the polymerised component is obtainable by polymerisation of one or more polymerisable compounds between the substrates of the LC cell in the LC medium with application of an electrical voltage, wherein at least one of the polymerisable compounds is a compound according to the invention.

2. Use according to Claim 1, **characterised in that** the polymerised component consists exclusively of one or more polymerisable compounds which contain a mesogenic group and two polymerisable groups, of which one polymerisable group is linked to the mesogenic group via a spacer group and of which one polymerisable group is linked to the mesogenic group without a spacer group.

3. Use according to one or more of Claims 1 and 2, **characterised in that** the polymerisable compounds contain a mesogenic group having two, three or four hydrocarbon rings, which are selected from five- or six-membered rings, which may also be fused and may also contain one or more heteroatoms.

4. Use according to one or more of Claims 1 to 3, **characterised in that** the polymerisable compounds are selected from formula I:
P^{a}-Sp-A¹-(Z¹-A²)ₘ₁-P^{b} I
in which the individual radicals have the following meanings:
P^{a} and P^{b} each, independently of one another, denote a polymerisable group,
Sp denotes a spacer group,
A¹ and A² each, independently of one another, denote an aromatic, heteroaromatic, alicyclic or heterocyclic group, preferably having 4 to 25 C atoms, which may also contain fused rings and which may also be mono- or polysubstituted by L,
L denotes H, OH, halogen, SF₅, NO₂, a carbon group or hydrocarbon group,
Z¹ on each occurrence, identically or differently, denotes -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ or a single bond,
R⁰ and R⁰⁰ each, independently of one another, denote H or alkyl having 1 to 12 C atoms,
m1 denotes 0, 1, 2, 3 or 4,
n1 denotes 1, 2, 3 or 4.

5. Use according to Claim 4, **characterised in that** A¹, A², Z¹, Sp and m1 have the meanings indicated in Claim 4, and
A¹ and A² each, independently of one another, denote 1,4-phenylene, naphthalene-1,4-diyl or naphthalene-2,6- diyl, where, in addition, one or more CH groups in these groups may be replaced by N, cyclohexane-1,4-diyl, in which, in addition, one or more non-adjacent CH₂ groups may be replaced by O and/or S, 1,4-cyclohexenylene, bicyclo[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L,
L denotes P-, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P- or P-Sp-,
P denotes a polymerisable group,
Y¹ denotes halogen,
R^{x} denotes P-, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl, P- or P-Sp-, an optionally substituted aryl or aryloxy group having 6 to 40 C atoms, or an optionally substituted heteroaryl or heteroaryloxy group having 2 to 40 C atoms.

6. Use according to Claim 4 or 5, **characterised in that** the polymerisable compounds are selected from the following sub-formulae: 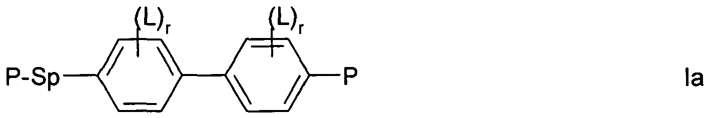 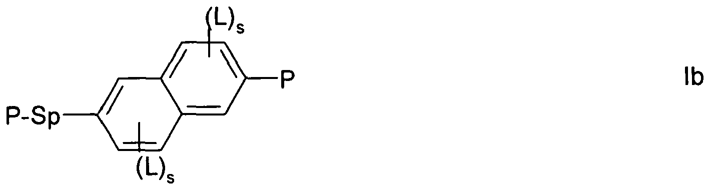 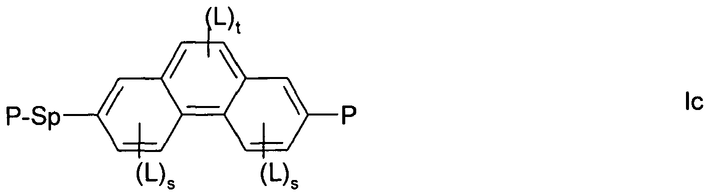 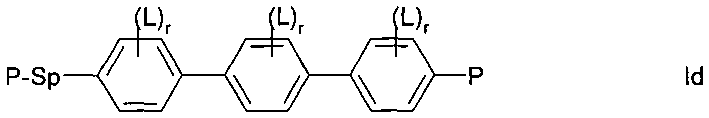 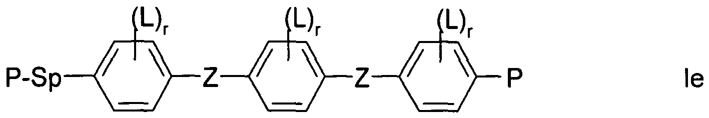 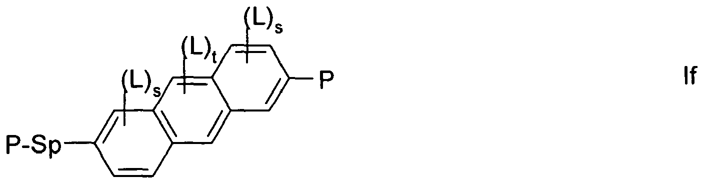 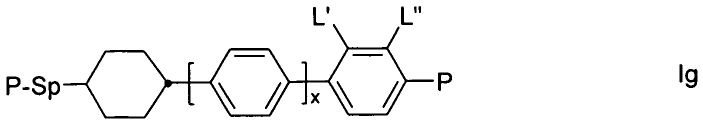 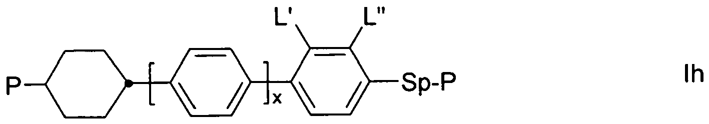 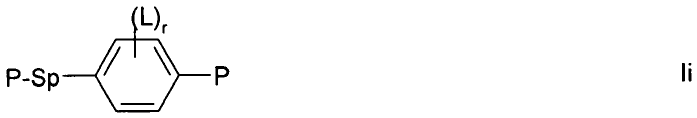 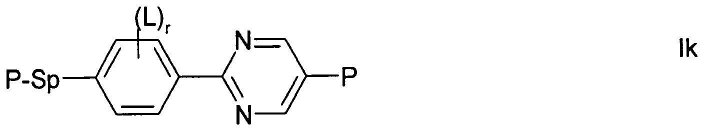 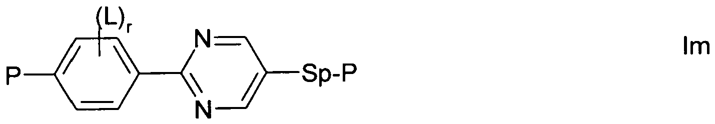 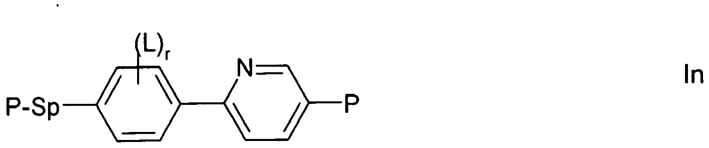 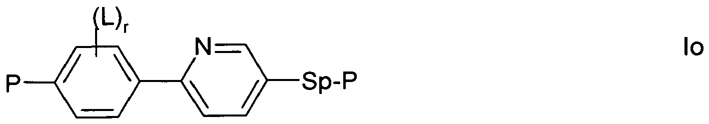 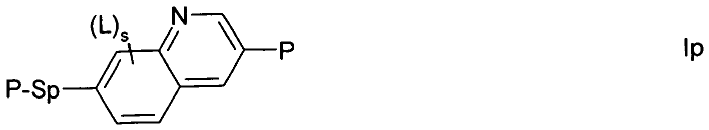 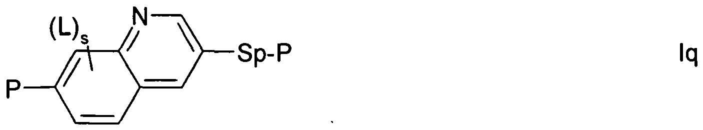 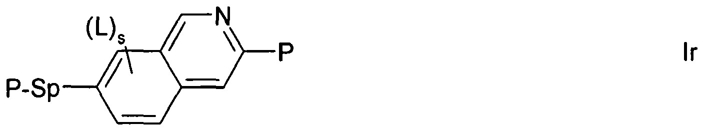 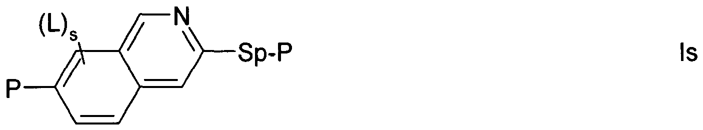 in which P and Sp on each occurrence, identically or differently, have the meanings indicated in Claims 4 and 5, L has one of the meanings indicated in Claims 4 and 5, L' and L" each, independently of one another, denote H, F or Cl, Z on each occurrence, identically or differently, has one of the meanings indicated for Z¹ in Claim 4 and preferably denotes -COO-, -OCO- or a single bond, x is 0 or 1, r is 0, 1, 2, 3 or 4, s is 0, 1, 2 or 3, and t is 0, 1 or 2.

7. Use according to one or more of Claims 1 to 6, **characterised in that** the polymerisable group is selected from CH₂=CW¹-COO-, 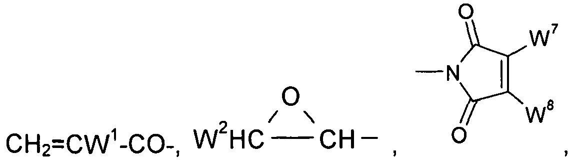 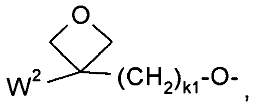 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN-and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, which is optionally substituted by one or more radicals L as defined above, k₁, k₂ and k₃ each, independently of one another, denote 0 or 1, k₃ preferably denotes 1.

8. Use according to one or more of Claims 1 to 7, **characterised in that** the spacer group Sp is selected from the formula Sp'-X' so that the radical "P^{(a,b)}-Sp-" corresponds to the formula "P^{(a,b)}-Sp'-X'-", where
Sp' denotes alkylene having 1 to 20, preferably 1 to 12, C atoms, which is optionally mono- or polysubstituted by F, Cl, Br, I or CN and in which, in addition, one or more non-adjacent CH₂ groups may each be replaced, independently of one another, by -O-, -S-, -NH-, -NR⁰-, -SiR⁰R⁰⁰- -CO-, -COO-, -OCO-, -OCO-O-, -S-CO-, -CO-S-, -NR⁰-CO-O-, -O-CO-NR⁰-, -NR⁰-CO-NR⁰-, -CH=CH- or -C≡C- in such a way that O and/or S atoms are not linked directly to one another,
X' denotes -O-, -S-, -CO-, -COO-, -OCO-, -O-COO-, -CO-NR⁰-, -NR⁰-CO-, -NR⁰-CO-NR⁰-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-COO-, -OCO-CH=CH- or a single bond,
R⁰ and R⁰⁰ each, independently of one another, denote H or alkyl having 1 to 12 C atoms, and
Y² and Y³ each, independently of one another, denote H, F, Cl or CN.

9. Use according to one or more of Claims 1 to 8, **characterised in that** the LC medium comprises one or more compounds selected from the following formulae: 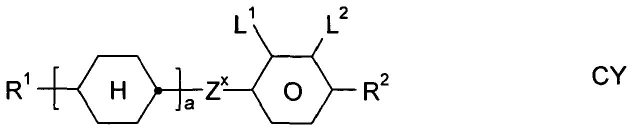 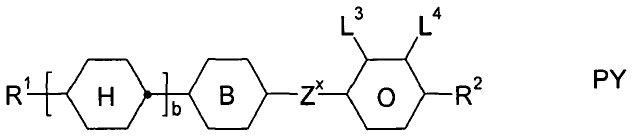 in which the individual radicals have the following meanings:
a denotes 1 or 2,
b denotes 0 or 1, 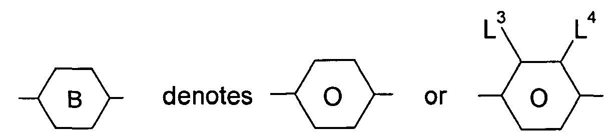
R¹ and R² each, independently of one another, denote alkyl having 1 to 12 C atoms, in which, in addition, one or two non-adjacent CH₂ groups may be replaced by -O-, -CH=CH-, -CO-, -OCO- or -COO- in such a way that O atoms are not linked directly to one another,
Z^{x} denotes -CH=CH-, -CH₂O-, -OCH₂-, -CF₂O-, -OCF₂-, -O-, -CH₂-, -CH₂CH₂- or a single bond, preferably a single bond,
L¹⁻⁴ each, independently of one another, denote F, Cl, OCF₃, CF₃, CH₃, CH₂F, CHF₂.

10. Use according to Claim 9, **characterised in that** the compounds of the formula CY are selected from the following sub-formulae: 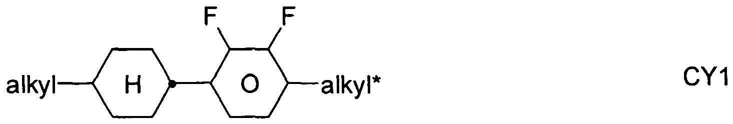 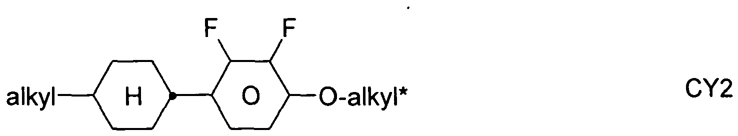 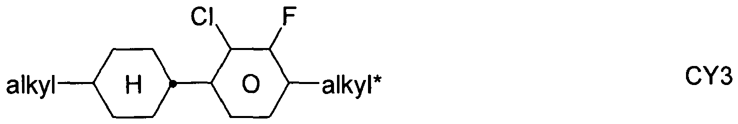 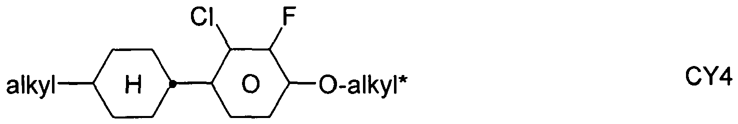 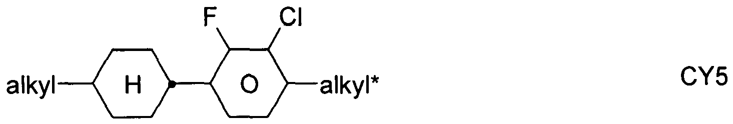 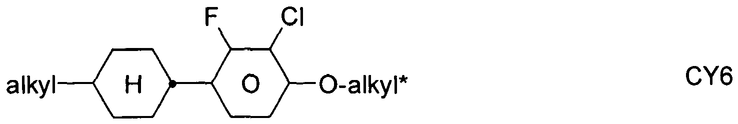 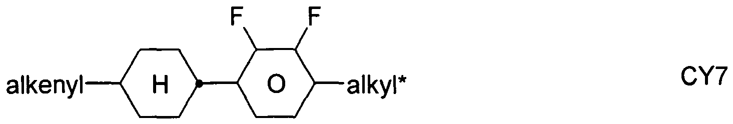 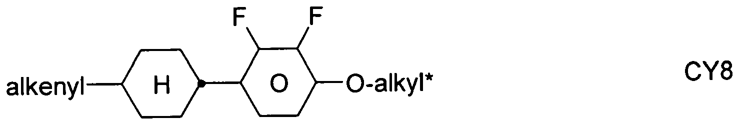 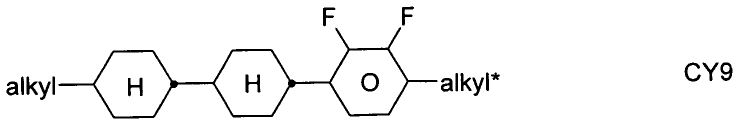 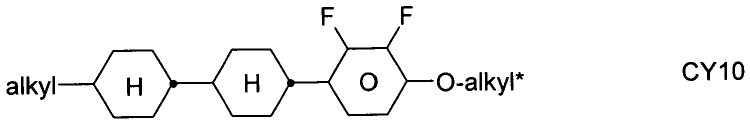 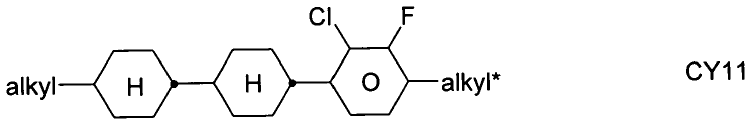 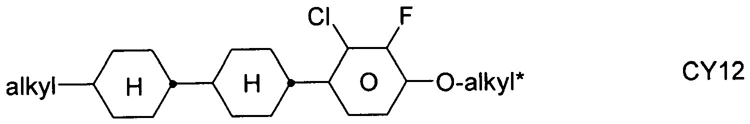 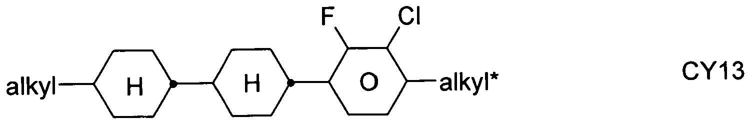 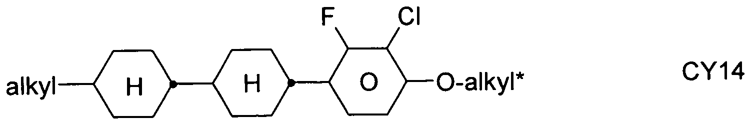 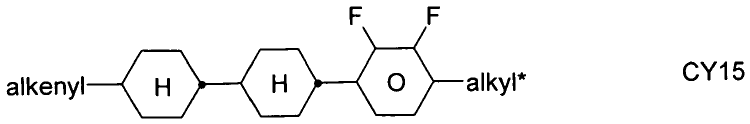 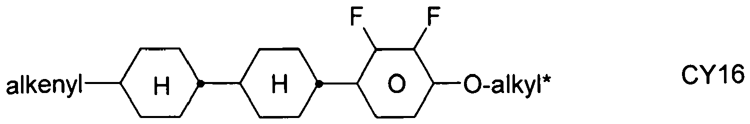 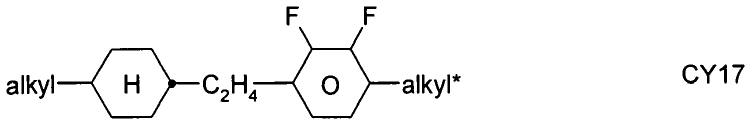 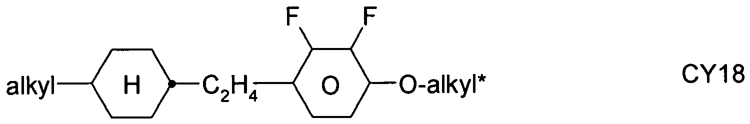 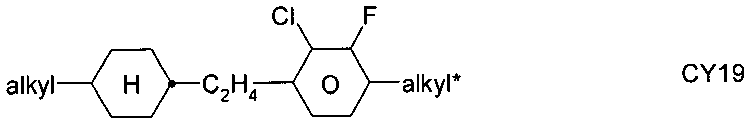 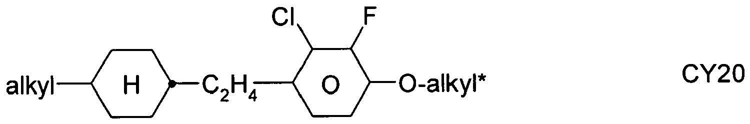 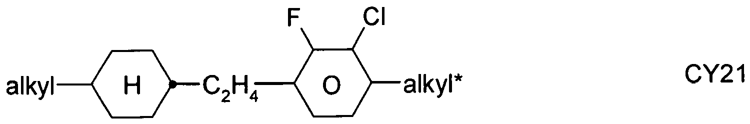 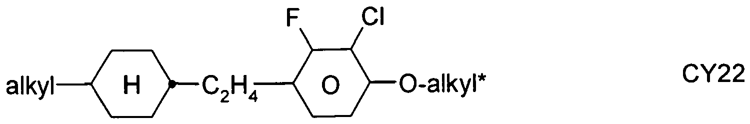 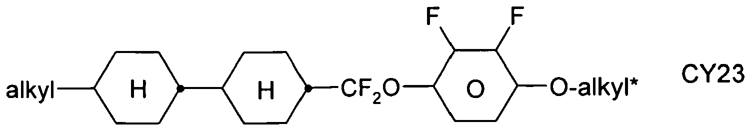 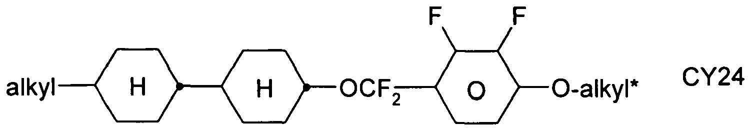 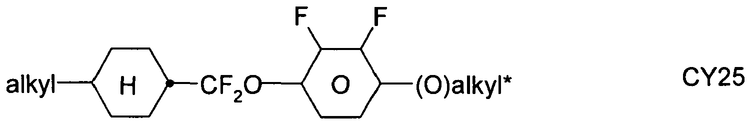 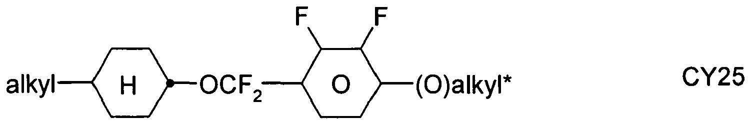 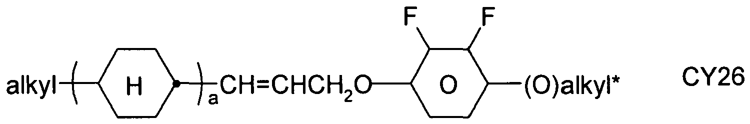 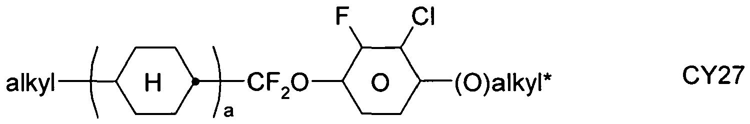 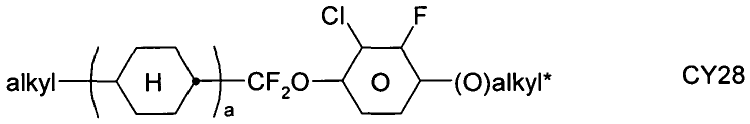 in which a denotes 1 or 2, alkyl and alkyl* each, independently of one another, denote a straight-chain alkyl radical having 1-6 C atoms, and alkenyl denotes a straight-chain alkenyl radical having 2-6 C atoms.

11. Use according to Claim 9 or 10, **characterised in that** the compounds of the formula PY are selected from the following sub-formulae: 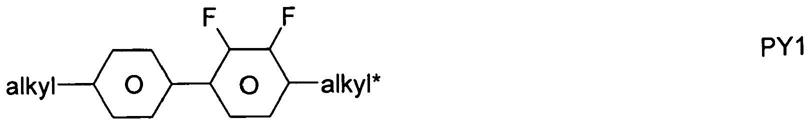 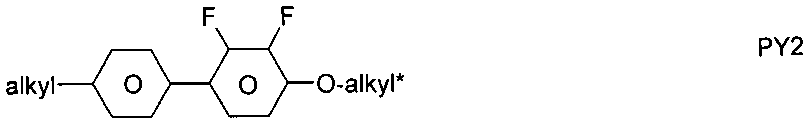 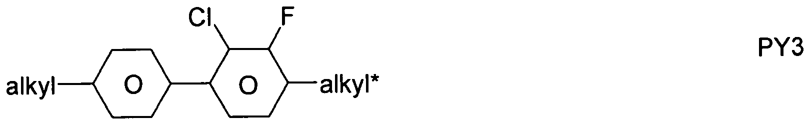 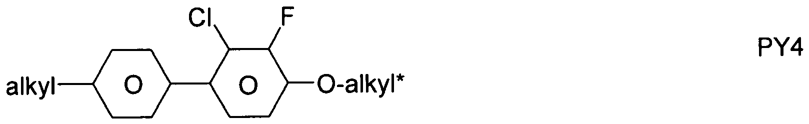 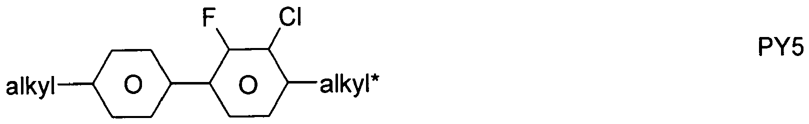 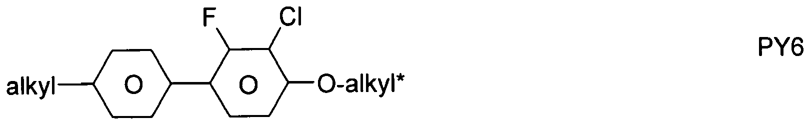 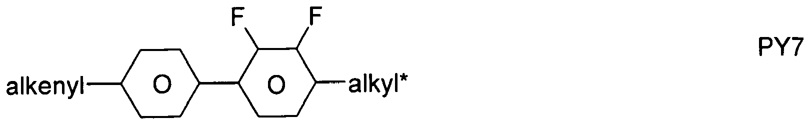 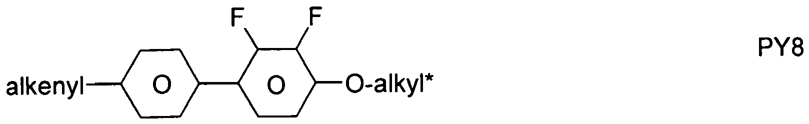 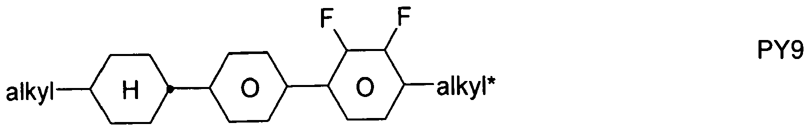 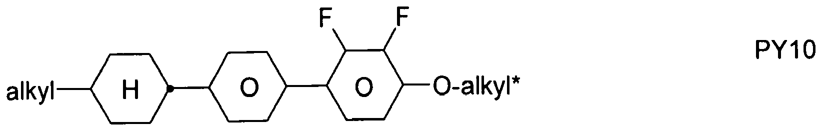 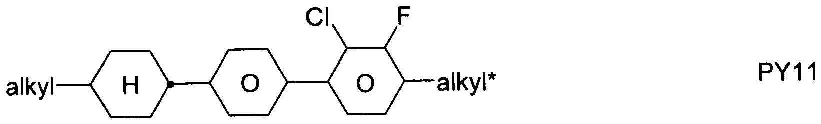 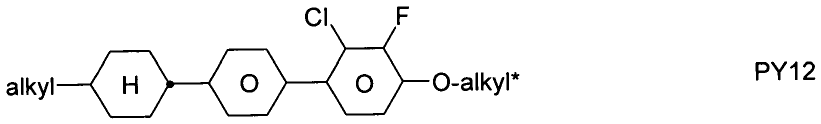 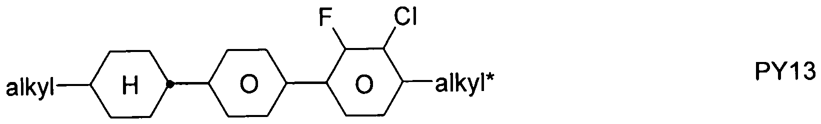 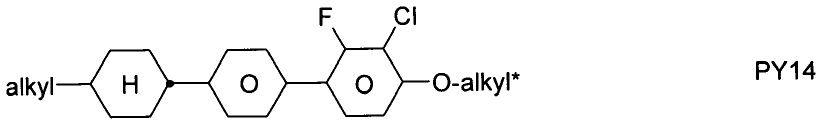 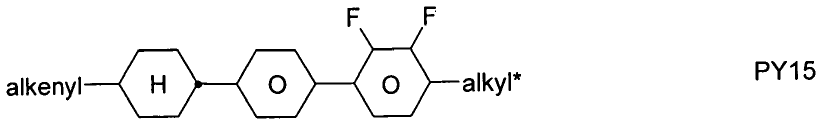 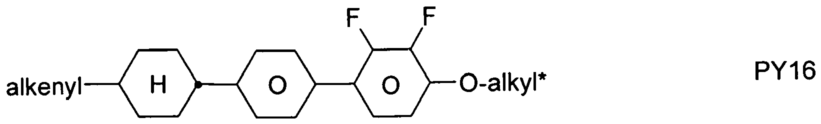 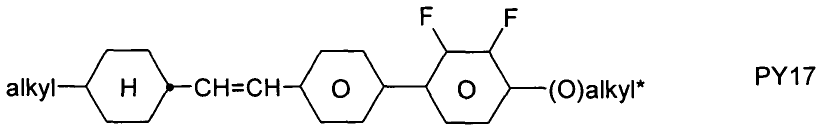 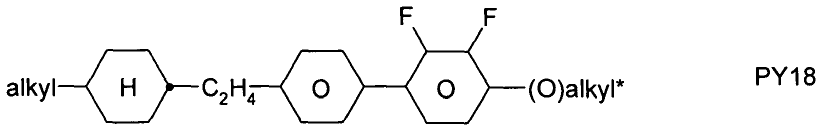 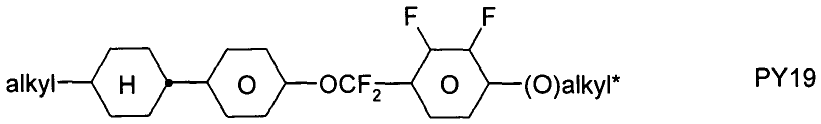 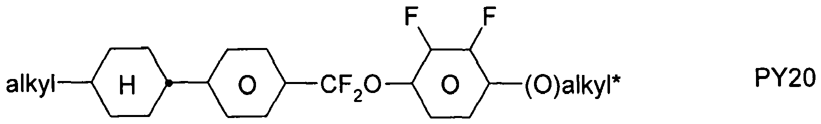 in which alkyl and alkyl* each, independently of one another, denote a straight-chain alkyl radical having 1-6 C atoms, and alkenyl denotes a straight-chain alkenyl radical having 2-6 C atoms.

12. Use according to one or more of Claims 1 to 11, **characterised in that** the LC medium comprises one or more compounds of the following formula: 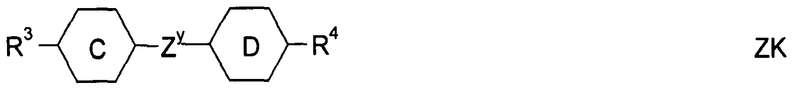 in which the individual radicals have the following meanings: 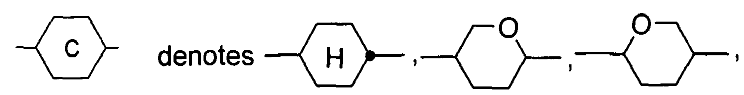 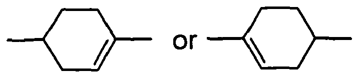 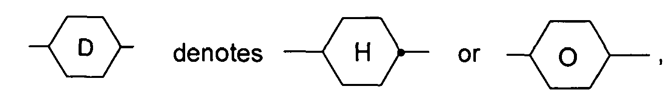
R³ and R⁴ each, independently of one another, denote alkyl having 1 to 12 C atoms, in which, in addition, one or two non-adjacent CH₂ groups may be replaced by -O-, -CH=CH-, -CO-, -OCO- or -COO- in such a way that O atoms are not linked directly to one another,
Z^{Y} denotes -CH₂CH₂-, -CH=CH-, -CF₂O-, -OCF₂-, -CH₂O-, -OCH₂-, -COO-, -OCO-, -C₂F₄-, -CF=CF- or a single bond.

13. Use according to Claim 12, **characterised in that** the compounds of the formula ZK are selected from the following sub-formulae: 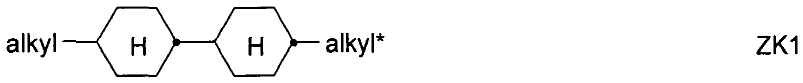 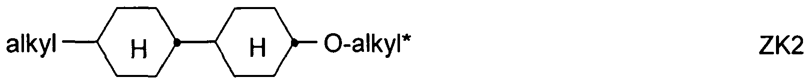 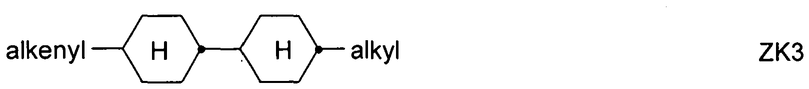 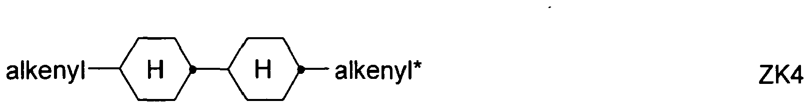 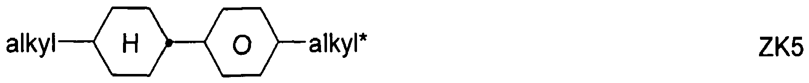 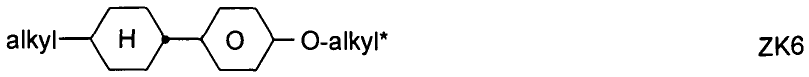 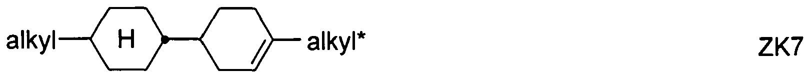 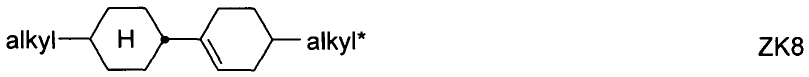 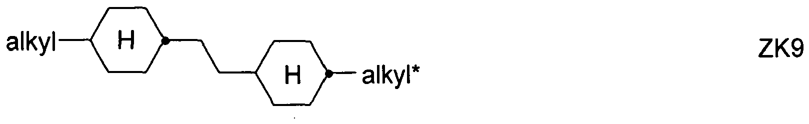 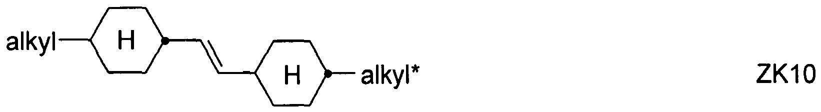 in which alkyl and alkyl* each, independently of one another, denote a straight-chain alkyl radical having 1-6 C atoms, and alkenyl denotes a straight-chain alkenyl radical having 2-6 C atoms.

14. Use according to one or more of Claims 1 to 13, **characterised in that** the LC medium additionally comprises one or more compounds of the following formula: 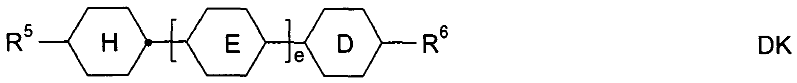 in which the individual radicals on each occurrence, identically or differently, have the following meanings:
R⁵ and R⁶ each, independently of one another, have one of the meanings indicated for R¹ in Claim 8, 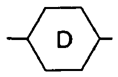
denotes 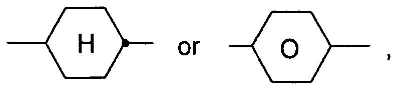 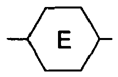 denotes 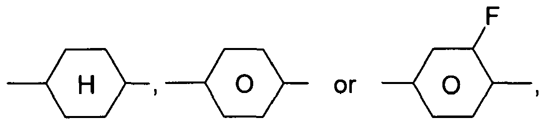 and
e denotes 1 or 2.

15. Use according to one or more of Claims 1 to 14, **characterised in that** the LC medium additionally comprises one or more compounds of the following formula: 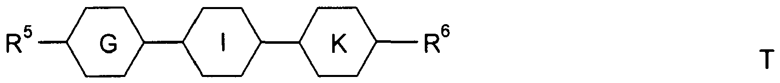 in which R⁵ and R⁶ each, independently of one another, have one of the meanings indicated for R¹ in Claim 8, and 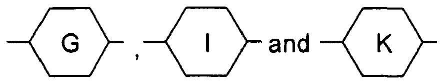 each, independently of one another, denote 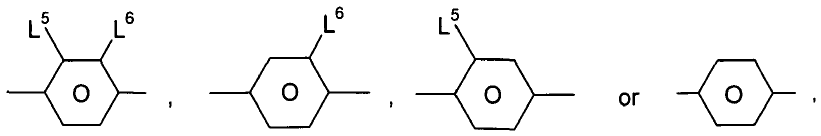 in which L⁵ denotes F or Cl, and L⁶ denotes F, Cl, OCF₃, CF₃, CH₃, CH₂F or CHF₂.

16. Use according to Claim 15, **characterised in that** the compounds of the formula T are selected from the following sub-formulae: 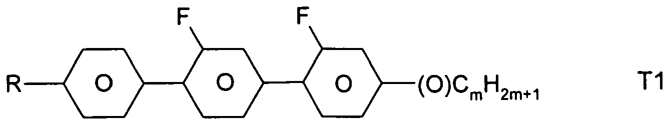 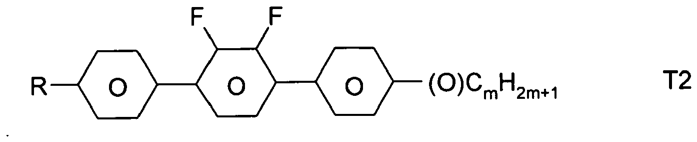 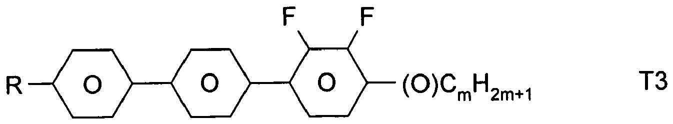 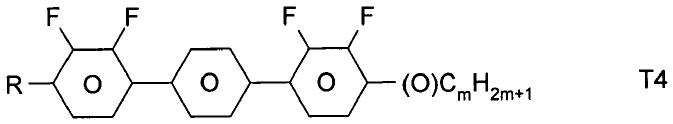 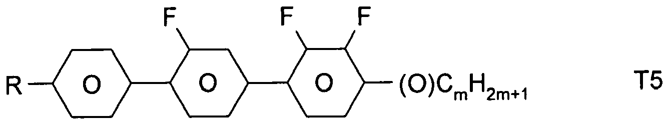 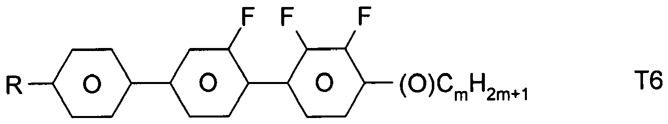 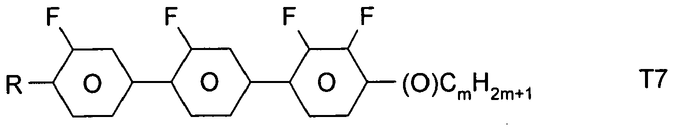 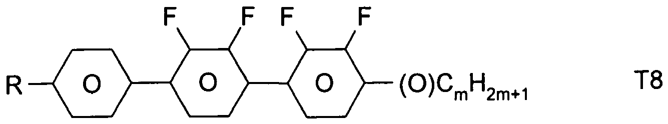 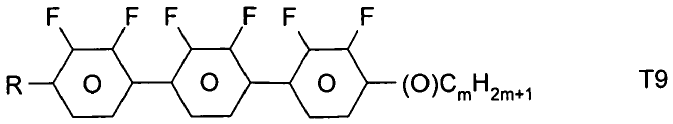 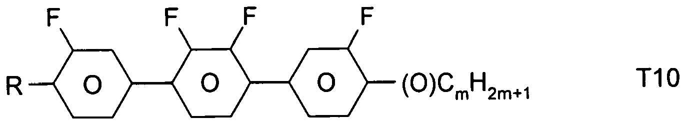 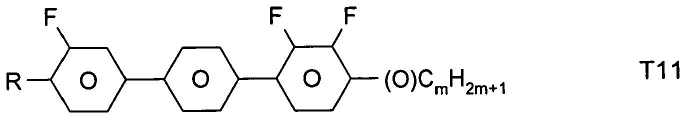 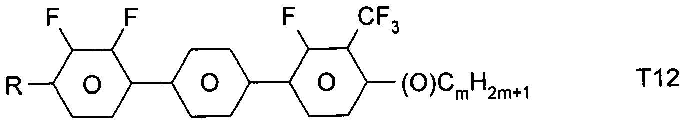 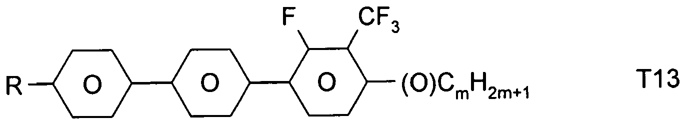 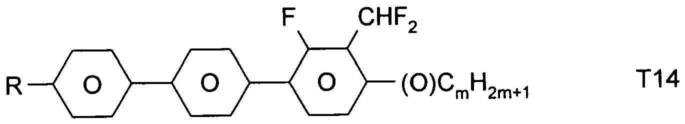 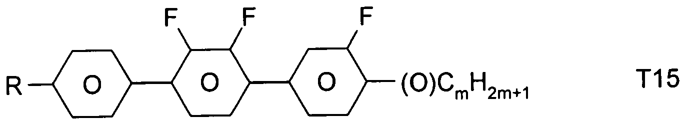 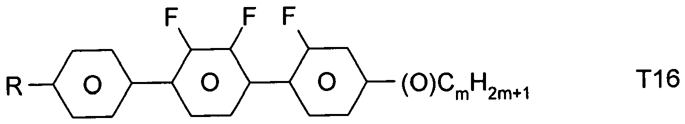 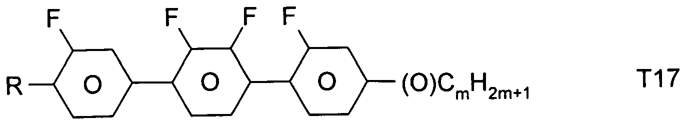 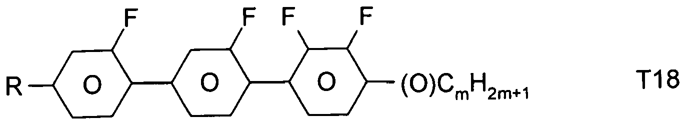 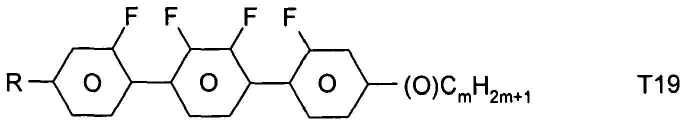 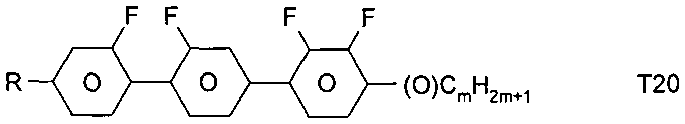 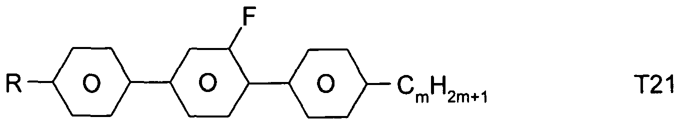 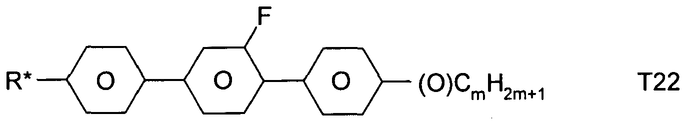 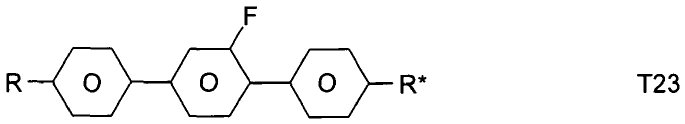 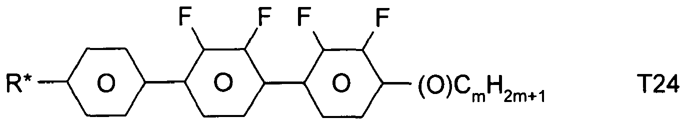 in which R denotes a straight-chain alkyl or alkoxy radical having 1-7 C atoms, R* denotes a straight-chain alkenyl radical having 2-7 C atoms, and m denotes an integer from 1 to 6.

17. LC display as defined in one or more of Claims 1 to 16.

18. LC display according to Claim 17, **characterised in that** it is a PSA-VA, PSA-OCB, PS-IPS, PS-FFS or PS-TN display.

19. LC medium comprising
- a polymerisable component A) comprising one or more polymerisable compounds, and
- a liquid-crystalline component B) comprising one or more low-molecular-weight compounds,
where component A) comprises one or more polymerisable compounds as defined in one or more of Claims 1 to 8, and in which component B) comprises one or more compounds as defined in one or more of Claims 10 to 16.

20. Use, LC display or LC medium according to one or more of Claims 1 to 19, **characterised in that** the polymerisable component (component A) comprises exclusively polymerisable compounds as defined in one or more of Claims 1 to 8.

21. Use, LC display or LC medium according to one or more of Claims 1 to 20, **characterised in that** the proportion of polymerisable compounds in the mixture as a whole in the LC medium is 0.05 to 5%.

22. Use, LC display or LC medium according to one or more of Claims 1 to 21, **characterised in that** the LC medium comprises no polymerisation initiator.

23. Use, LC display or LC medium according to one or more of Claims 1 to 22, **characterised in that** the polymerisable component (component A) or the LC medium comprises a stabiliser.

24. Use, LC display or LC medium according to one or more of Claims 1 to 23, **characterised in that** the LC medium comprises one or more chiral dopants.

25. Process for the preparation of an LC medium according to one or more of Claims 19 to 24, in which one or more low-molecular-weight liquid-crystalline compounds are mixed with one or more polymerisable compounds as defined in one or more of Claims 1 to 16, and optionally with further liquid-crystalline compounds and/or additives.

26. Polymerisable compound selected from the following formulae: 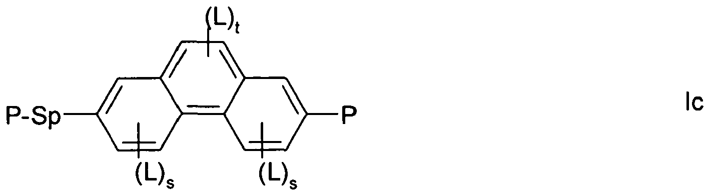 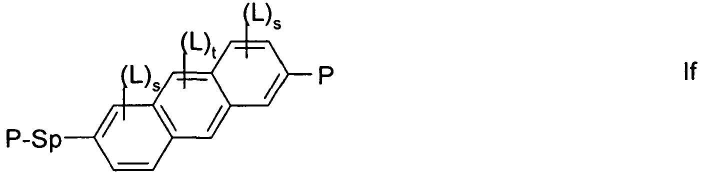 in which P and Sp on each occurrence, identically or differently, have the meanings indicated in Claims 7 and 8, L has one of the meanings indicated in Claims 4 and 5, r is 0, 1, 2, 3 or 4, s is 0, 1, 2 or 3, and t is 0, 1 or 2.

27. Polymerisable compound according to Claim 26, **characterised in that** P denotes vinyloxy, acrylate, methacrylate, fluoroacrylate, chloroacrylate, oxetane or epoxy.

28. Polymerisable compound according to Claim 26 or 27, **characterised in that** Sp is selected from the formula Sp'-X' so that the radical P-Sp- corresponds to the formula P-Sp'-X'-, wherein
X' denotes -O-, -S-, -CO-, -COO-, -OCO-, -O-COO-, -CO-NR⁰-, -NR⁰-CO-, -NR⁰-CO-NR⁰- or a single bond, and
Sp' denotes -(CH₂)ₚ₁-, -(CH₂CH₂O)_{q1}-CH₂CH₂-, -CH₂CH₂-S-CH₂CH₂-, -CH₂CH₂-NH-CH₂CH₂- or -(SiR⁰R⁰⁰-O)ₚ₁-, in which p1 is an integer from 1 to 12, q1 is an integer from 1 to 3, and R⁰ and R⁰⁰ have the meanings indicated in Claim 8.

## Revendications

1. Utilisation de composés polymérisables contenant un groupe mésogène et deux groupes polymérisables ou plus, dont au moins un groupe polymérisable est lié au groupe mésogène via un groupe espaceur et dont au moins un groupe polymérisable est lié au groupe mésogène sans groupe espaceur (composés selon l'invention), dans des affichages à cristaux liquides (LC) du type PS (stabilisé par polymère) ou PSA (à alignement supporté par polymère) contenant une cellule LC constituée de deux substrats, dans lequel au moins un substrat est transparent à la lumière et au moins un substrat a une couche d'électrode, et une couche d'un milieu LC comprenant un composant polymérisé et un composant à poids moléculaire faible situé entre les substrats, dans lequel le composant polymérisé peut être obtenu par polymérisation d'un ou plusieurs composés polymérisables entre les substrats de la cellule LC dans le milieu LC avec application d'une tension électrique, dans lequel au moins l'un des composés polymérisables est un composé selon l'invention.

2. Utilisation selon la revendication 1, **caractérisée en ce que** le composant polymérisé est constitué exclusivement d'un ou plusieurs composés polymérisables qui contiennent un groupe mésogène et deux groupes polymérisables, dont un groupe polymérisable est lié au groupe mésogène via un groupe espaceur et dont un groupe polymérisable est lié au groupe mésogène sans groupe espaceur.

3. Utilisation selon une ou plusieurs des revendications 1 et 2, **caractérisée en ce que** les composés polymérisables contiennent un groupe mésogène ayant deux, trois ou quatre cycles hydrocarbone, qui sont choisis parmi des cycles à cinq ou six membres, qui peuvent également être fusionnés et peuvent également contenir un ou plusieurs hétéroatomes.

4. Utilisation selon une ou plusieurs des revendications 1 à 3, **caractérisée en ce que** les composés polymérisables sont choisis parmi la formule I :
P^{a}-Sp-A¹-(Z¹-A²)ₘ₁-P^{b} I
dans laquelle les radicaux individuels ont les significations suivantes :
P^{a} et P^{b} chacun, indépendamment de l'autre, représentent un groupe polymérisable,
Sp représente un groupe espaceur,
A¹ et A² chacun, indépendamment de l'autre, représentent un groupe aromatique, hétéroaromatique, alicyclique ou hétérocyclique, de préférence ayant 4 à 25 atomes de C, qui peut également contenir des cycles fusionnés et qui peut également être mono- ou polysubstitué par L,
L représente H, OH, halogène, SF₅, NO₂, un groupe carbone ou un groupe hydrocarbone,
Z¹ à chaque occurrence, de façon identique ou différente, représente -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ ou une liaison simple,
R⁰ et R⁰⁰ chacun, indépendamment de l'autre, représentent H ou alkyle ayant 1 à 12 atomes de C,
m1 représente 0, 1, 2, 3 ou 4,
n1 représente 1, 2, 3 ou 4.

5. Utilisation selon la revendication 4, **caractérisée en ce que** A¹, A², Z¹, Sp et m1 ont les significations indiquées dans la revendication 4, et
A¹ et A² chacun, indépendamment de l'autre, représentent 1,4-phenylène, naphtalène-1,4-diyle ou naphtalène-2,6-diyle, où, en addition, un ou plusieurs groupes CH dans ces groupes peuvent être remplacés par N, cyclohexane-1,4-diyle, dans lequel, en addition, un ou plusieurs groupes CH₂ non adjacents peuvent être remplacés par O et/ou S, 1,4-cyclohexénylène, bicyclo-[1.1.1]pentane-1,3-diyle, bicyclo[2.2.2]octane-1,4-diyle, spiro[3.3]heptane-2,6-diyle, piperidine-1,4-diyle, décahydronaphthalène-2,6-diyle, 1,2,3,4-tétrahydronaphtalène-2,6-diyle, indane-2,5-diyle ou octahydro-4,7méthanoindane-2,5-diyle, où tous ces groupes peuvent être non substitués ou mono- ou polysubstitués par L,
L représente P-, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, silyle en option substitué, aryle en option substitué ayant 6 à 20 atomes de C, ou alkyle, alcoxy, alkylcarbonyle, alcoxycarbonyle, alkylcarbonyloxy ou alcoxycarbonyloxy en chaîne droite ou ramifié ayant 1 à 25 atomes de C, dans lequel, en addition, un ou plusieurs atomes de H peuvent être remplacés par F, Cl, P- ou P-Sp-,
P représente un groupe polymérisable,
Y¹ représente halogène,
R^{x} représente P-, P-Sp-, H, halogène, alkyle en chaîne droite, ramifié ou cyclique ayant 1 à 25 atomes de C, dans lequel, en addition, un ou plusieurs groupes CH₂ non adjacents peuvent être remplacés par -O-, -S-, -CO-, -CO-O-, -O-CO-, -O-CO-O- de telle sorte que des atomes de O et/ou S ne soient pas directement liés l'un à l'autre, et dans lequel, en addition, un ou plusieurs atomes de H peuvent être remplacés par F, Cl, P- ou P-Sp-, un groupe aryle ou aryloxy en option substitué ayant 6 à 40 atomes de C, ou un groupe hétéroaryle ou hétéroaryloxy en option substitué ayant 2 à 40 atomes de C.

6. Utilisation selon la revendication 4 ou 5, **caractérisée en ce que** les composés polymérisables sont choisis à partir des sous-formules suivantes : 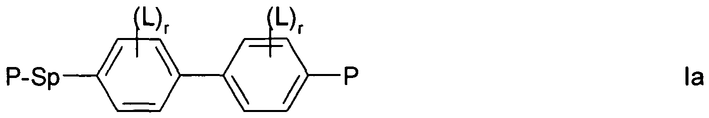 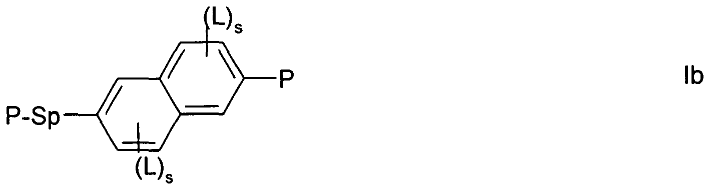 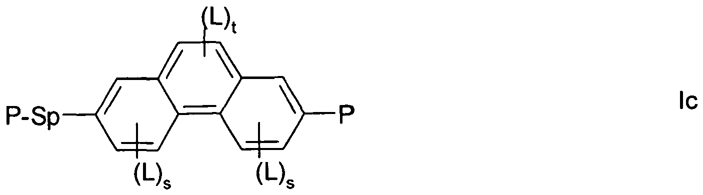 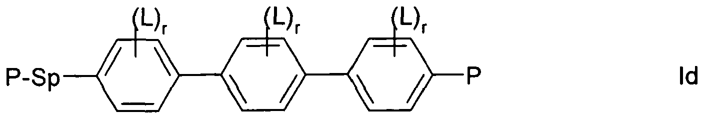 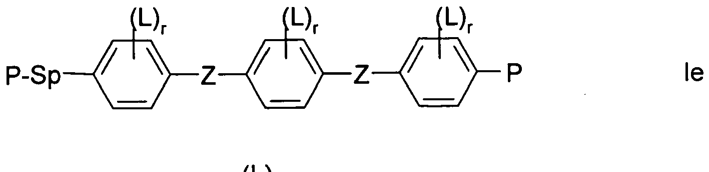 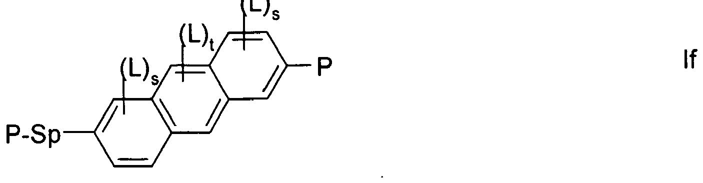 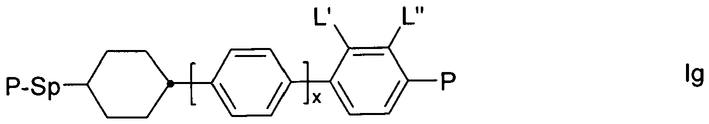 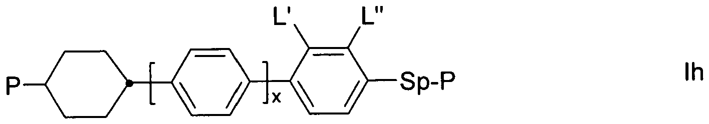 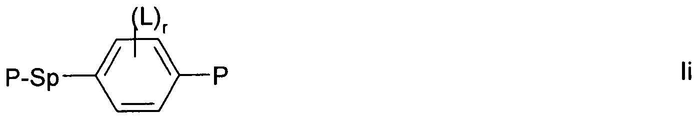 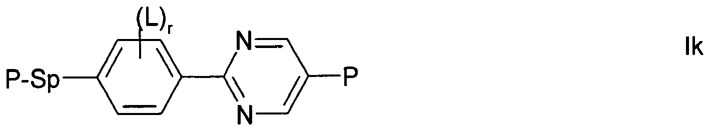 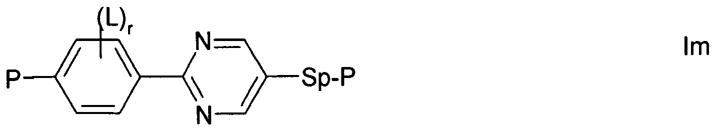 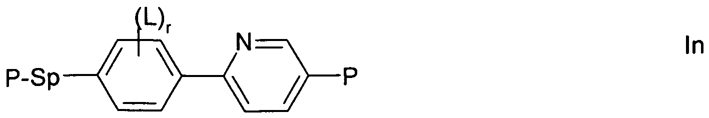 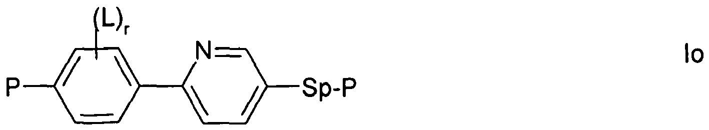 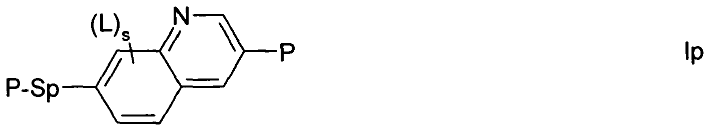 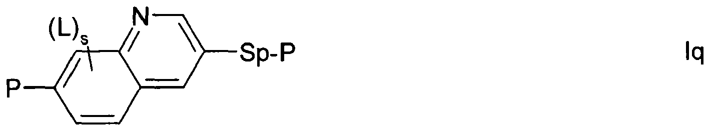 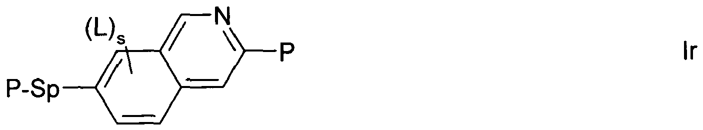 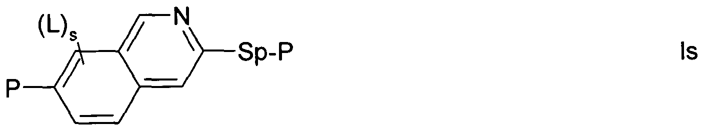 dans lesquelles P et Sp à chaque occurrence, de façon identique ou différente, ont les significations indiquées dans les revendications 4 et 5, L a l'une des significations indiquées dans les revendications 4 et 5, L' et L" chacun, indépendamment de l'autre, représentent H, F ou Cl, Z à chaque occurrence, de façon identique ou différente, a l'une des significations indiquées pour Z¹ dans la revendication 4 et de préférence représente -COO-, -OCO- ou une liaison simple, x est 0 ou 1, r est 0, 1, 2, 3 ou 4, s est 0, 1, 2 ou 3, et t est 0, 1 ou 2.

7. Utilisation selon une ou plusieurs des revendications 1 à 6, **caractérisée en ce que** le groupe polymérisable est choisi parmi CH₂=CW¹-COO-, CH₂=CW¹-CO-, 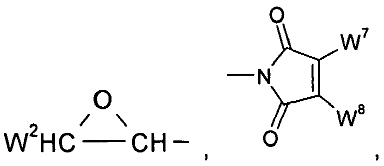 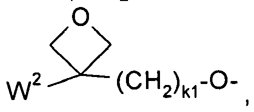 CH₂=CW²-(O)ₖ₃-, CW¹=CH-CO-(O)ₖ₃-, CW'=CH-CO-N_{H}-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN-et W⁴W⁵W⁶Si-, dans lequel W¹ représente H, F, Cl, CN, CF₃, phényle ou alkyle ayant 1 à 5 atomes de C, en particulier H, F, Cl ou CH₃, W² et W³ chacun, indépendamment de l'autre, représentent H ou alkyle ayant 1 à 5 atomes de C, en particulier H, méthyle, éthyle ou n-propyle, W⁴, W⁵ et W⁶ chacun, indépendamment de l'autre, représentent Cl, oxaalkyle ou oxacarbonylalkyle ayant 1 à 5 atomes de C, W⁷ et W⁸ chacun, indépendamment de l'autre, représentent H, Cl ou alkyle ayant 1 à 5 atomes de C, Phe représente 1,4-phény-lène, qui est en option substitué par un ou plusieurs radicaux L comme défini ci-avant, k₁, k₂ et k₃ chacun, indépendamment de l'autre, représentent 0 ou 1, k₃ de préférence représente 1.

8. Utilisation selon une ou plusieurs des revendications 1 à 7, **caractérisée en ce que** le groupe espaceur Sp est choisi parmi la formule Sp'-X' de telle sorte que le radical "P^{(a,b)}-Sp-" corresponde à la formule "p^{(a,b)}-Sp'-X'-", où
Sp' représente alkylène ayant 1 à 20, de préférence 1 à 12, atomes de C, lequel est en option mono- ou polysubstitué par F, Cl, Br, I ou CN et dans lequel, en addition, un ou plusieurs groupes CH₂ non adjacents peuvent chacun être remplacés, indépendamment l'un de l'autre, par -O-, -S-, -NH-, -NR⁰-, -SiR⁰R⁰⁰-, -CO-, -COO-, -OCO-, -OCO-O-, -S-CO-, -CO-S-, -NR⁰-CO-O-, -O-CO-NR⁰-, -NR⁰-CO-NR⁰-, -CH=CH- ou -C≡C- de telle sorte que des atomes de O et/ou S ne soient pas liés directement l'un à l'autre,
X' représente -O-, -S-, -CO-, -COO-, -OCO-, -O-COO-, -CO-NR⁰-, -NR⁰-CO-, -NR⁰-CO-NR⁰-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-COO-, -OCO-CH=CH- ou une liaison simple,
R⁰ et R⁰⁰ chacun, indépendamment de l'autre, représentent H ou alkyle ayant 1 à 12 atomes de C, et
Y² et Y³ chacun, indépendamment de l'autre, représentent H, F, Cl ou CN.

9. Utilisation selon une ou plusieurs des revendications 1 à 8, **caractérisée en ce que** le milieu LC comprend un ou plusieurs composés choisis parmi les formules suivantes : 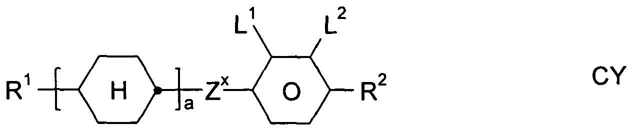 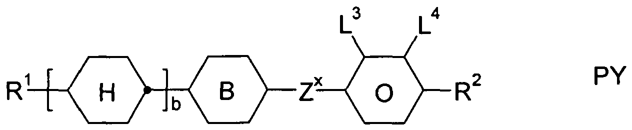 dans lesquelles les radicaux individuels ont les significations suivantes :
a représente 1 ou 2,
b représente 0 ou 1, 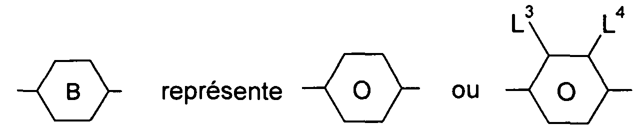
R¹ et R² chacun, indépendamment de l'autre, représentent alkyle ayant 1 à 12 atomes de C, dans lequel, en addition, un ou deux groupes CH₂ non adjacents peuvent être remplacés par -O-, -CH=CH-, -CO-, -OCO- ou -COO- de telle sorte que des atomes de O ne soient pas liés directement l'un à l'autre,
Z^{x} représente -CH=CH-, -CH₂O-, -OCH₂-, -CF₂O-, -OCF₂-, -O-, -CH₂-, -CH₂CH₂- ou une liaison simple, de préférence une liaison simple,
L¹⁻⁴ chacun, indépendamment de l'autre, représentent F, Cl, OCF₃, CF₃, CH₃, CH₂F, CHF₂.

10. Utilisation selon la revendication 9, **caractérisée en ce que** les composés de la formule CY sont choisis parmi les sous-formules suivantes : 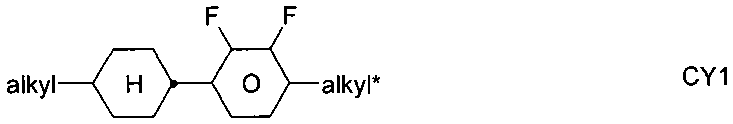 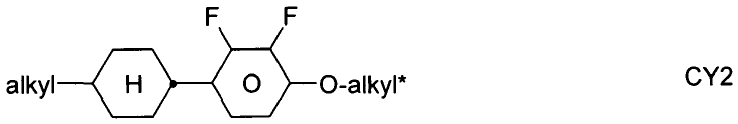 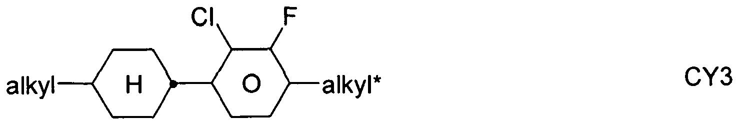 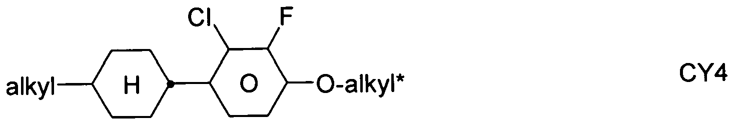 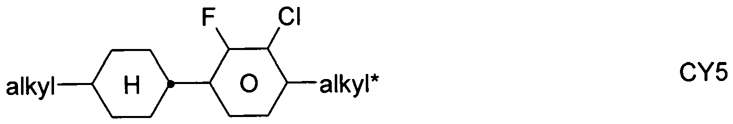 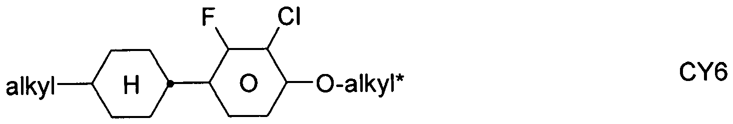 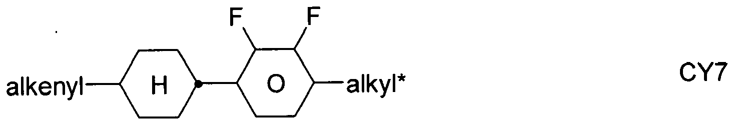 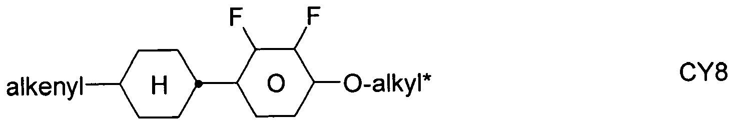 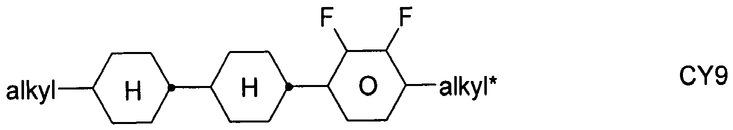 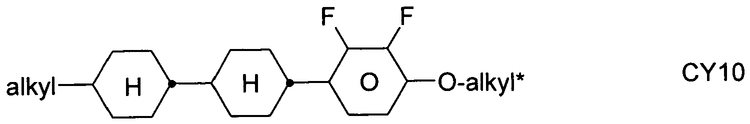 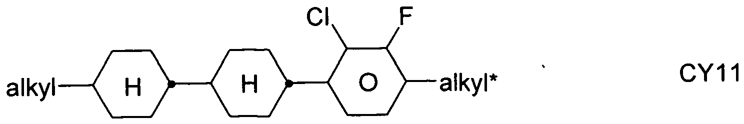 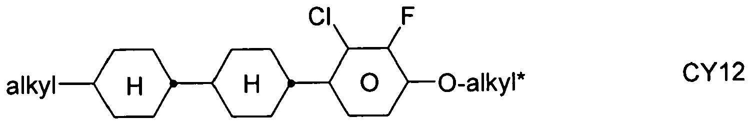 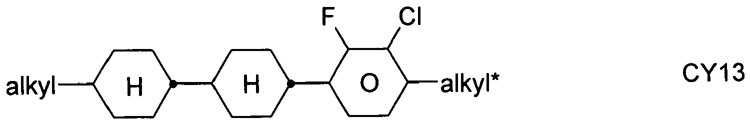 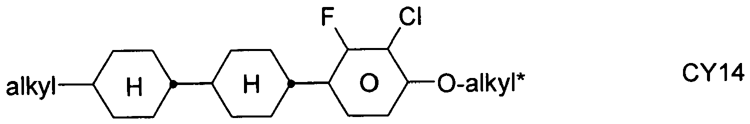 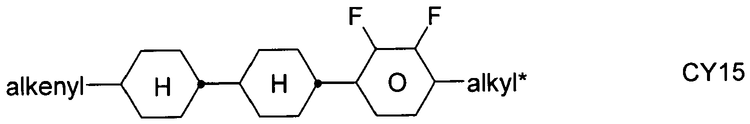 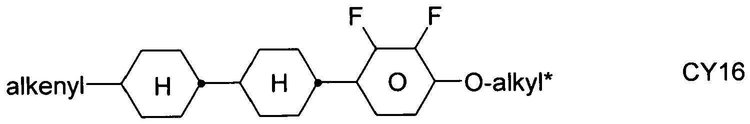 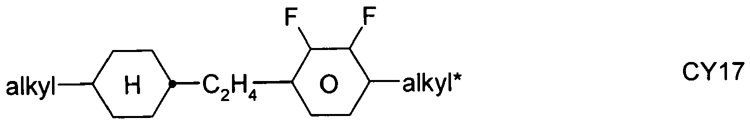 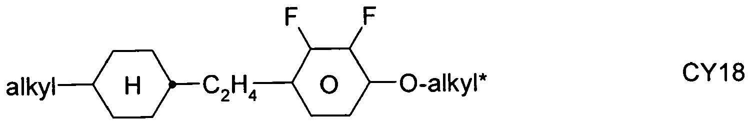 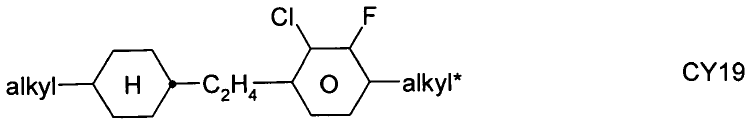 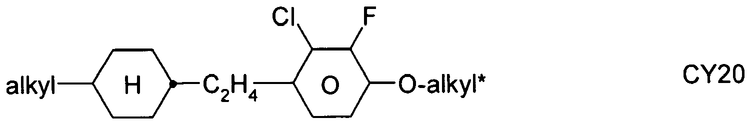 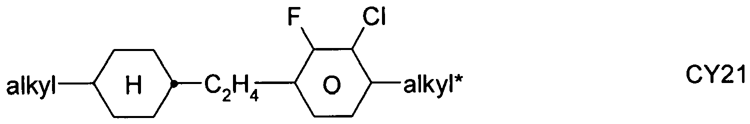 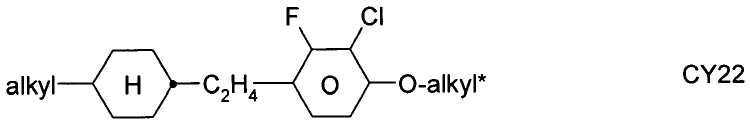 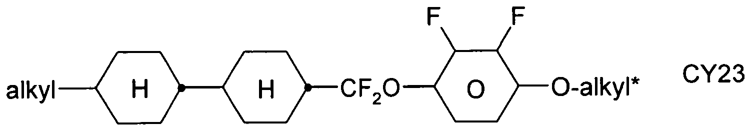 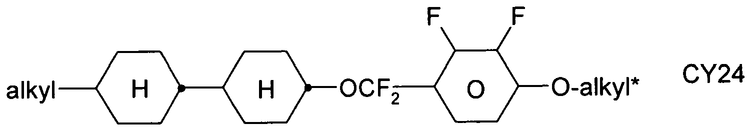 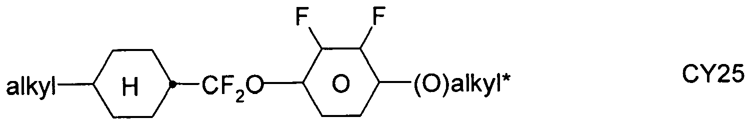 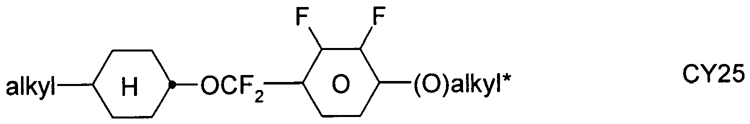 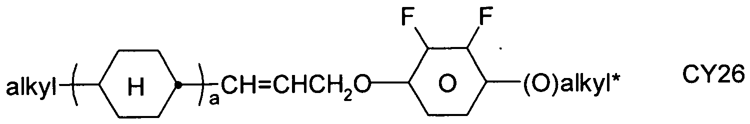 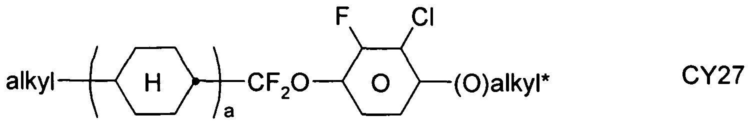 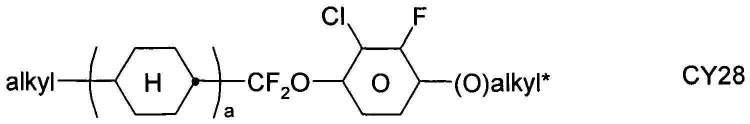 dans lesquelles a représente 1 ou 2, alkyl et alkyl* chacun, indépendamment de l'autre, représentent un radical alkyle en chaîne droite ayant 1-6 atomes de C, et alkenyl représente un radical alkényle en chaîne droite ayant 2-6 atomes de C.

11. Utilisation selon la revendication 9 ou 10, **caractérisée en ce que** les composés de la formule PY sont choisis parmi les sous-formules suivantes : 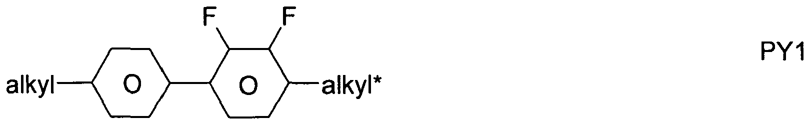 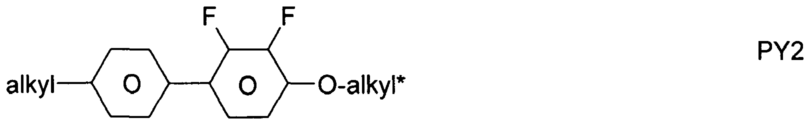 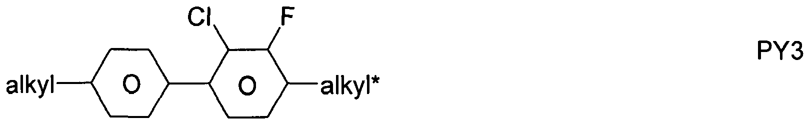 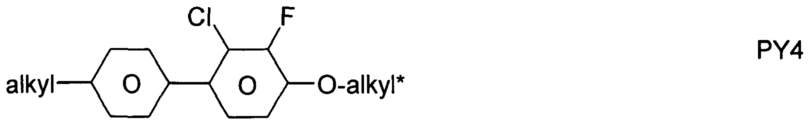 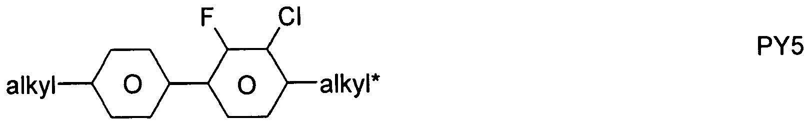 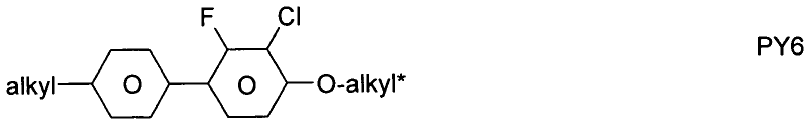 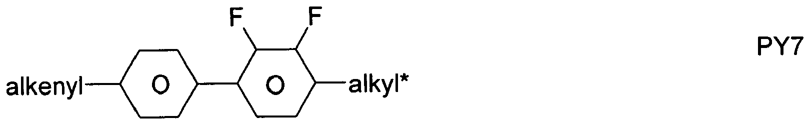 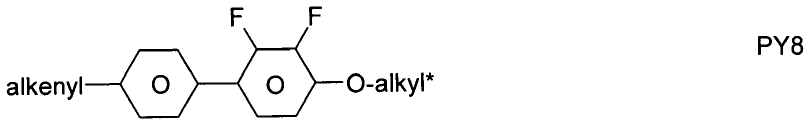 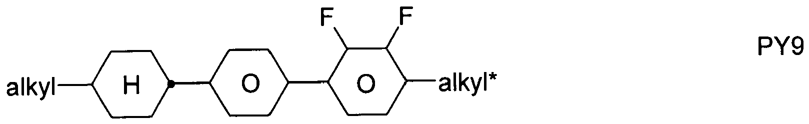 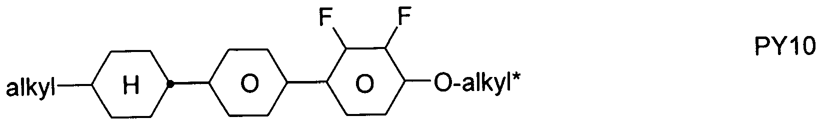 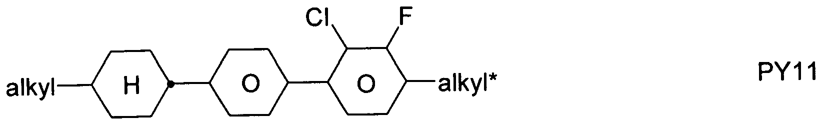 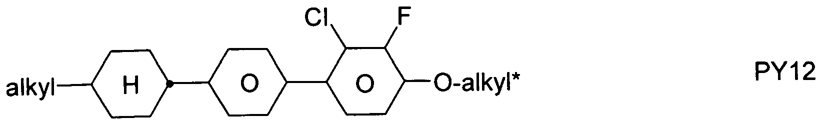 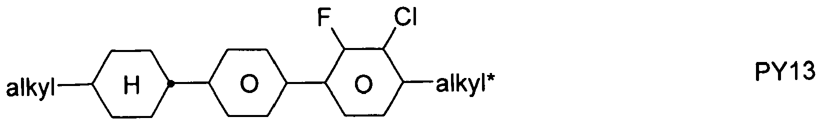 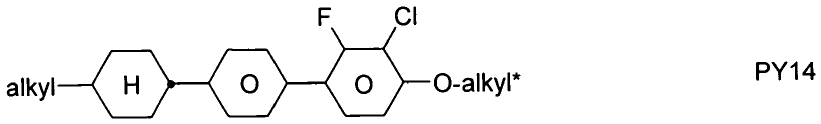 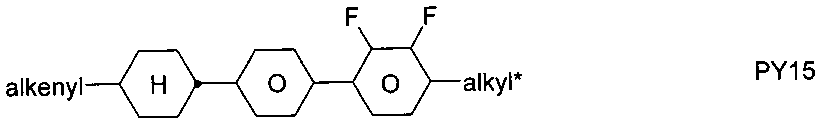 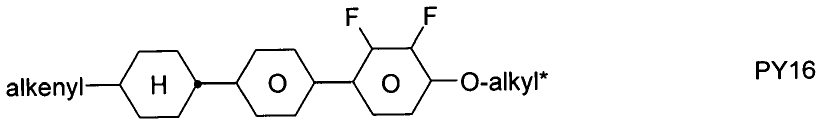 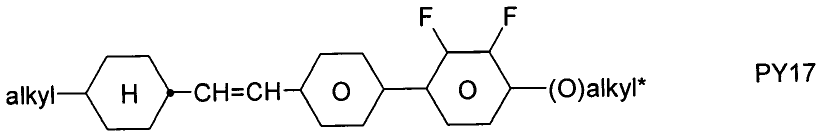 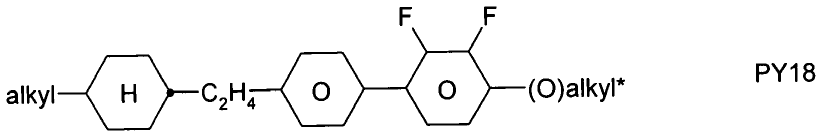 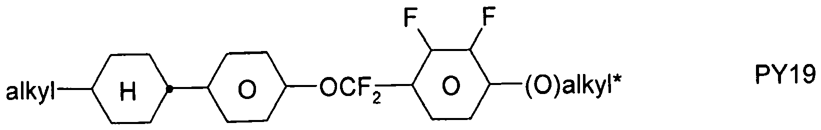 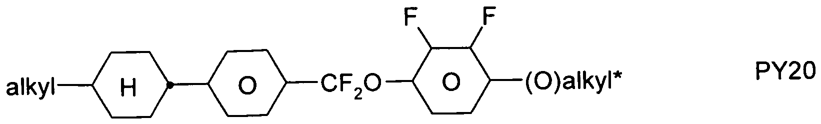 dans lesquelles alkyl et alkyl* chacun, indépendamment de l'autre, représentent un radical alkyle en chaîne droite ayant 1-6 atomes de C, et alkenyl représente un radical alkényle en chaîne droite ayant 2-6 atomes de C.

12. Utilisation selon une ou plusieurs des revendications 1 à 11, **caractérisée en ce que** le milieu LC comprend un ou plusieurs composés de la formule suivante : 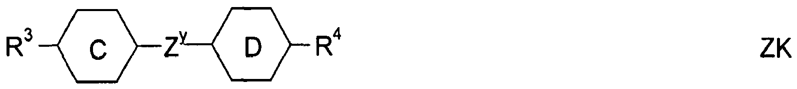 dans laquelle les radicaux individuels ont les significations suivantes : 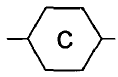 représente 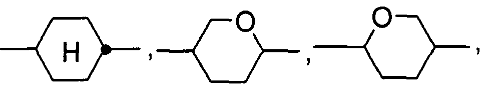 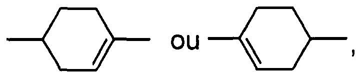 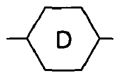 représente 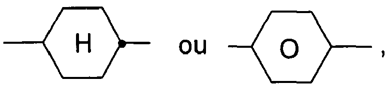
R³ et R⁴ chacun, indépendamment de l'autre, représentent alkyle ayant 1 à 12 atomes de C, dans lequel, en addition, un ou deux groupes CH₂ non adjacents peuvent être remplacés par -O-, -CH=CH-, -CO-, -OCO- ou -COO- de telle sorte que des atomes de O ne soient pas liés directement l'un à l'autre,
Z^{y} représente -CH₂CH₂-, -CH=CH-, -CF₂O- -OCF₂-, -CH₂O-, -OCH₂-, -COO-, -OCO-, -C₂F₄-, -CF=CF- ou une liaison simple.

13. Utilisation selon la revendication 12, **caractérisée en ce que** les composés de la formule ZK sont choisis parmi les sous-formules suivantes : 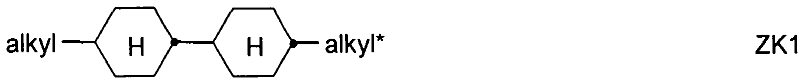 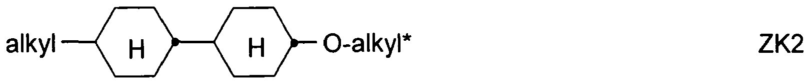 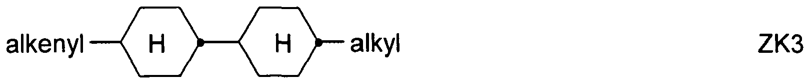 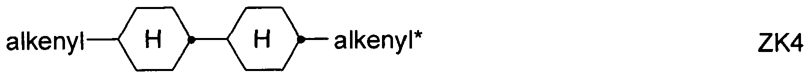 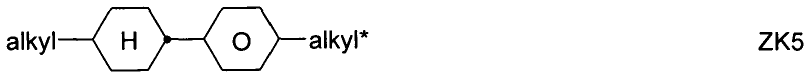 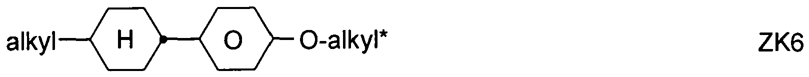 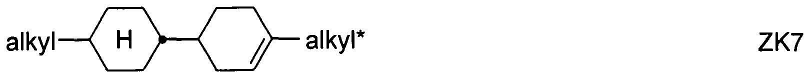 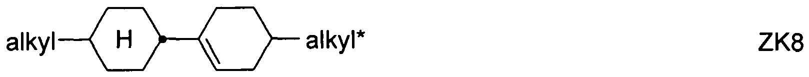 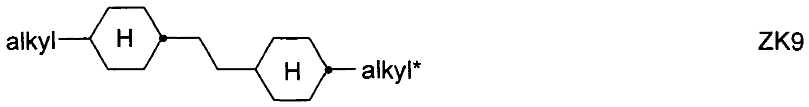 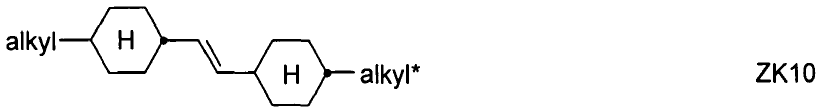 dans lesquelles alkyl et alkyl* chacun, indépendamment de l'autre, représentent un radical alkyle en chaîne droite ayant 1-6 atomes de C, et alkenyl représente un radical alkényle en chaîne droite ayant 2-6 atomes de C.

14. Utilisation selon une ou plusieurs des revendications 1 à 13, **caractérisée en ce que** le milieu LC comprend additionnellement un ou plusieurs composés de la formule suivante : 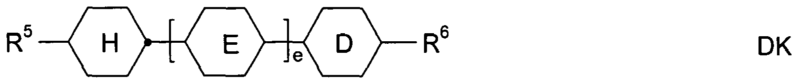 dans laquelle les radicaux individuels à chaque occurrence, de façon identique ou différente, ont les significations suivantes :
R⁵ et R⁶ chacun, indépendamment de l'autre, ont l'une des significations indiquées pour R¹ dans la revendication 8, 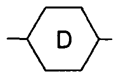
repésente 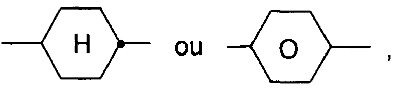 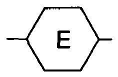 représente 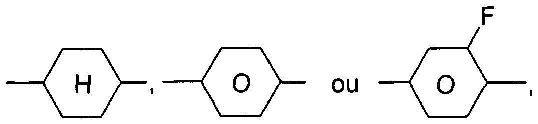 et
e représente 1 ou 2.

15. Utilisation selon une ou plusieurs des revendications 1 à 14, **caractérisée en ce que** le milieu LC comprend additionnellement un ou plusieurs composés de la formule suivante : 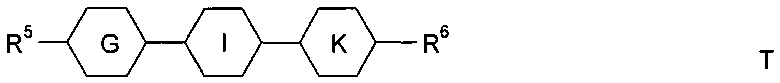 dans laquelle R⁵ et R⁶ chacun, indépendamment de l'autre, ont l'une des significations indiquées pour R¹ dans la revendication 8, et 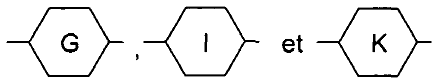 chacun, indépendamment de l'autre, représentent 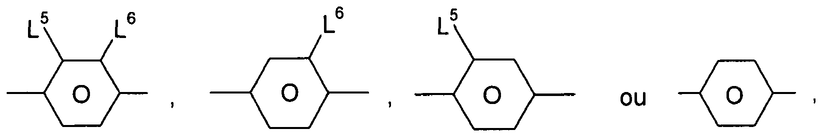 dans laquelle L⁵ représente F ou Cl, et L⁶ représente F, Cl, OCF₃, CF₃, CH₃, CH₂F ou CHF₂.

16. Utilisation selon la revendication 15, **caractérisée en ce que** les composés de la formule T sont choisis parmi les sous-formules suivantes : 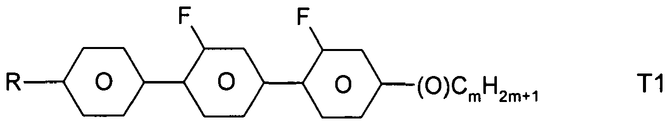 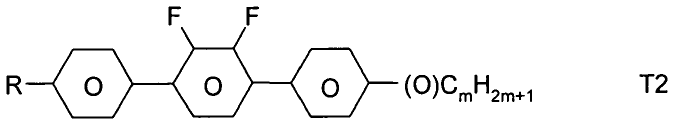 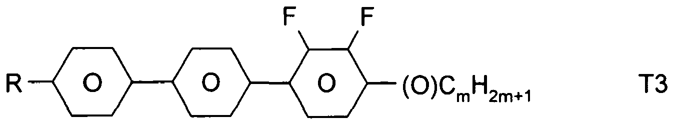 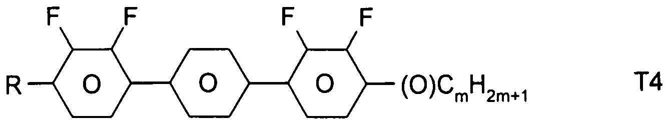 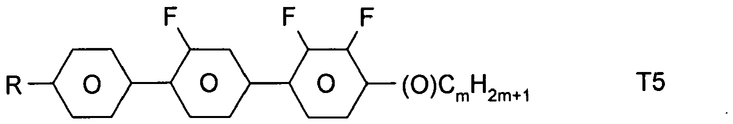 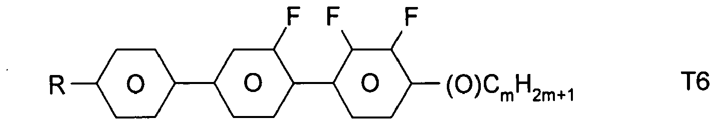 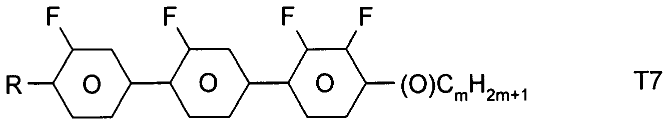 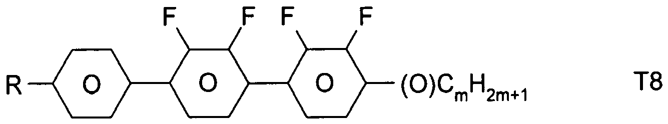 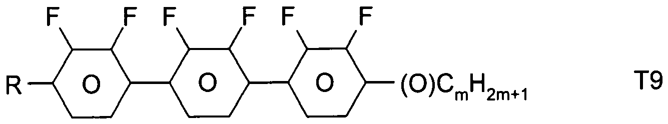 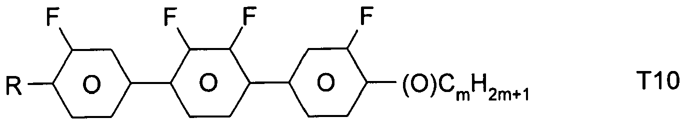 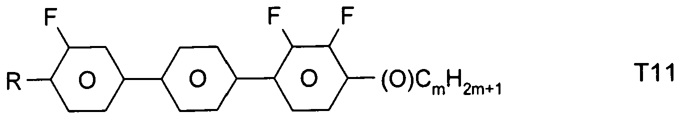 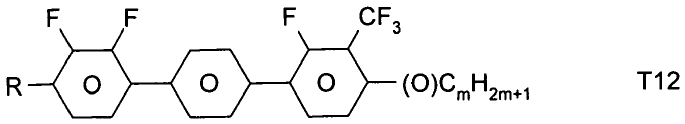 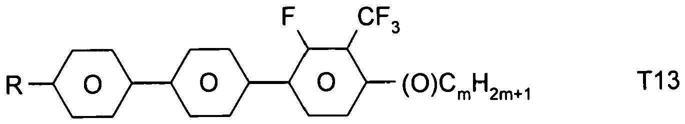 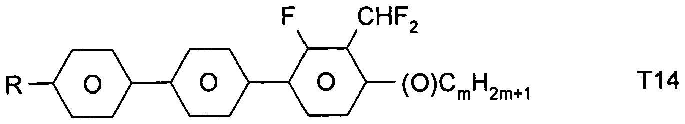 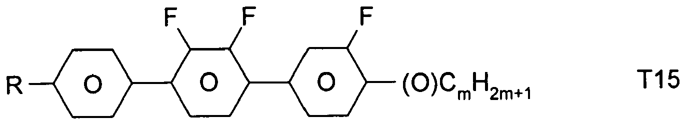 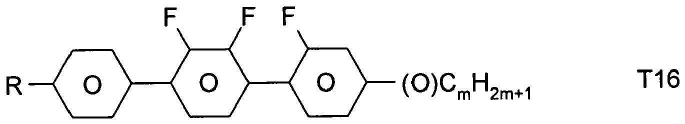 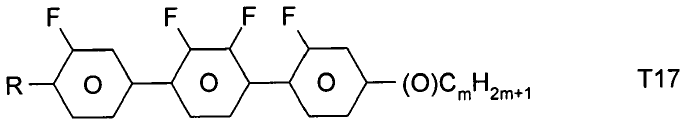 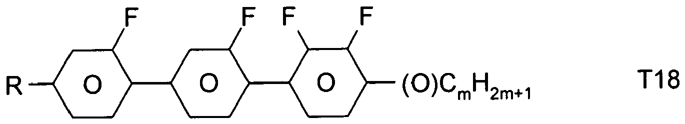 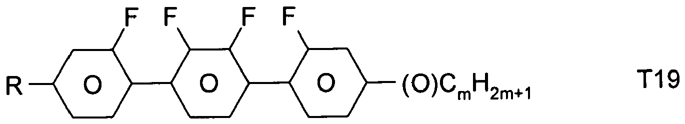 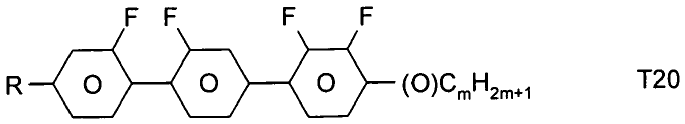 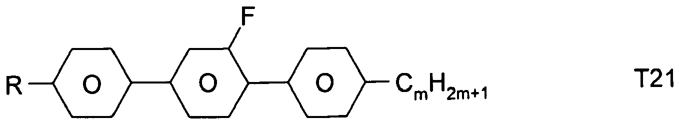 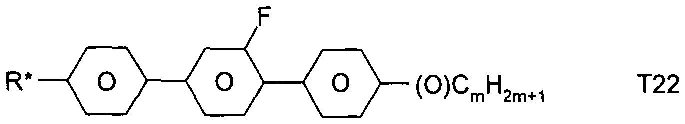 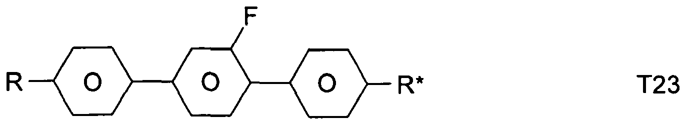 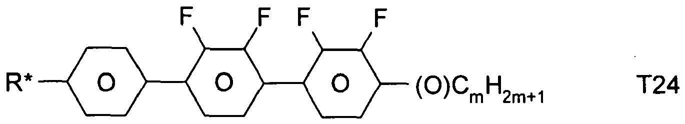 dans lesquelles R représente un radical alkyle ou alcoxy en chaîne droite ayant 1-7 atomes de C, R* représente un radical alkényle en chaîne droite ayant 2-7 atomes de C, et m représente un entier de 1 à 6.

17. Affichage LC comme défini selon une ou plusieurs des revendications 1 à 16.

18. Affichage LC selon la revendication 17, **caractérisé en ce qu'**il est un affichage PSA-VA, PSA-OCB, PS-IPS, PS-FFS ou PS-TN.

19. Milieu LC comprenant
- un composant polymérisable A) comprenant un ou plusieurs composés polymérisables, et
- un composant cristallin liquide B) comprenant un ou plusieurs composés de poids moléculaire faible,
dans lequel le composant A) comprend un ou plusieurs composés polymérisables comme définis selon une ou plusieurs des revendications 1 à 8, et dans lequel le composant B) comprend un ou plusieurs composés comme définis selon une ou plusieurs des revendications 10 à 16.

20. Utilisation, affichage LC ou milieu LC selon une ou plusieurs des revendications 1 à 19, caractérisé(e) en ce que le composant polymérisable (composant A) comprend exclusivement des composés polymérisables comme définis selon une ou plusieurs des revendications 1 à 8.

21. Utilisation, affichage LC ou milieu LC selon une ou plusieurs des revendications 1 à 20, caractérisé(e) en ce que la proportion de composés polymérisables dans le mélange dans sa totalité dans le milieu LC est 0,05 à 5%.

22. Utilisation, affichage LC ou milieu LC selon une ou plusieurs des revendications 1 à 21, caractérisé(e) en ce que le milieu LC ne comprend pas d'initiateur de polymérisation.

23. Utilisation, affichage LC ou milieu LC selon une ou plusieurs des revendications 1 à 22, caractérisé(e) en ce que le composant polymérisable (composant A) ou le milieu LC comprend un stabilisateur.

24. Utilisation, affichage LC ou milieu LC selon une ou plusieurs des revendications 1 à 23, caractérisé(e) en ce que le milieu LC comprend un ou plusieurs dopants chiraux.

25. Procédé pour la préparation d'un milieu LC selon une ou plusieurs des revendications 19 à 24, dans lequel un ou plusieurs composés cristallins liquides de poids moléculaire faible sont mélangés avec un ou plusieurs composés polymérisables comme définis selon une ou plusieurs des revendications 1 à 16, et optionnellement avec d'autres composés cristallins liquides et/ou additifs.

26. Composé polymérisable choisi parmi les formules suivantes : 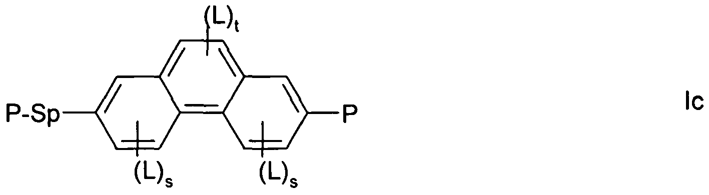 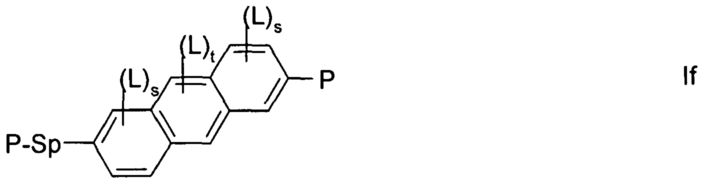 dans lesquelles P et Sp à chaque occurrence, de façon identique ou différente, ont les significations indiquées dans les revendications 7 et 8, L a l'une des significations indiquées dans les revendications 4 et 5, r est 0, 1, 2, 3 ou 4, s est 0, 1, 2 ou 3, et t est 0, 1 ou 2.

27. Composé polymérisable selon la revendication 26, **caractérisé en ce que** P représente vinyloxy, acrylate, méthacrylate, fluoroacrylate, chloroacrylate, oxétane ou époxy.

28. Composé polymérisable selon la revendication 26 ou 27, **caractérisé en ce que** Sp est choisi parmi la formule Sp'-X' de telle sorte que le radical P-Sp- corresponde à la formule P-Sp'-X'-, dans laquelle
X' représente -O-, -S-, -CO-, -COO-, -OCO-, -O-COO-, -CO-NR⁰-, -NR⁰-CO-, -NR⁰-CO-NR⁰- ou une liaison simple, et
Sp' représente -(CH₂)ₚ₁-, -(CH₂CH₂O)_{q1}-CH₂CH₂-, -CH₂CH₂-S-CH₂CH₂-, -CH₂CH₂-NH-CH₂CH₂- ou -(SiR⁰R⁰⁰-O)ₚ₁-, dans lequel p1 est un entier de 1 à 12, q1 est un entier de 1 à 3, et R⁰ et R⁰⁰ ont les significations indiquées dans la revendication 8.
